(19) **Europäisches Patentamt**
**European Patent Office**
**Office européen des brevets**

(11) **EP 4 580 148 A1**

(12) **EUROPEAN PATENT APPLICATION**

(43) Date of publication:
**02.07.2025 Bulletin 2025/27**

(21) Application number: **24223264.3**

(22) Date of filing: **24.12.2024**

(51) International Patent Classification (IPC):
*H04L 43/20* (2022.01)    *H04L 43/08* (2022.01)
*H04L 41/5009* (2022.01)

(52) Cooperative Patent Classification (CPC):
**H04L 43/20; H04L 43/08;** H04L 41/5009

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **26.12.2023 US 202363614724 P**

(71) Applicant: **Ofinno, LLC
Reston, VA 20190 (US)**

(72) Inventors:
• **Fard, Peyman Talebi
Reston, 20190 (US)**
• **Chun, Sung Duck
Reston, 20190 (US)**
• **Dinan, Esmael Hejazi
Reston, 20190 (US)**
• **Kim, Taehun
Reston, 20190 (US)**
• **Park, Kyungmin
Reston, 20190 (US)**
• **Normann, Henrik Andreas
Reston, 20190 (US)**
• **Xu, Jian
Reston, 20190 (US)**
• **Filin, Stanislav
Reston, 20190 (US)**

(74) Representative: **Westphal, Mussgnug & Partner,
Patentanwälte mbB
Werinherstraße 79
81541 München (DE)**

(54) **EXPOSURE OF ENERGY SAVING STATE**

(57) A network exposure function (NEF) receives, from an application function (AF), a first request for energy saving status of a network function (NF) associated with at least one of a network slice a QoS flow, and an application identifier. The NEF sends, to a NWDAF, a second request for the energy saving status of the NF, and receives, from the NWDAF, a response message comprising an identifier of the NF and a managed object instance (MOI) attribute of the energy saving status, wherein the MOI attribute comprises one of a notEnergySaving state and an energySaving state. The NEF sends, to the AF and based on the response message, a notification message comprising the MOI attribute and the identifier of the NF.

FIG. 19

**Description**

## CROSS-REFERENCE TO RELATED APPLICATIONS

This application claims the benefit of U.S. Provisional Application No. 63/614,724, filed December, 2023, which is hereby incorporated by reference in its entirety.

## BRIEF DESCRIPTION OF THE DRAWINGS

Examples of several of the various embodiments of the present disclosure are described herein with reference to the drawings.

FIG. 1A and FIG. 1B illustrate example communication networks including an access network and a core network.
FIG. 2A, FIG. 2B, FIG. 2C, and FIG. 2D illustrate various examples of a framework for a service-based architecture within a core network.
FIG. 3 illustrates an example communication network including core network functions.
FIG. 4A and FIG. 4B illustrate example of core network architecture with multiple user plane functions and untrusted access.
FIG. 5 illustrates an example of a core network architecture for a roaming scenario.
FIG. 6 illustrates an example of network slicing.
FIG. 7A, FIG. 7B, and FIG. 7C illustrate a user plane protocol stack, a control plane protocol stack, and services provided between protocol layers of the user plane protocol stack.
FIG. 8 illustrates an example of a quality of service model for data exchange.
FIG. 9A, FIG. 9B, FIG. 9C, and FIG. 9D illustrate example states and state transitions of a wireless device.
FIG. 10 illustrates an example of a registration procedure for a wireless device.
FIG. 11 illustrates an example of a service request procedure for a wireless device.
FIG. 12 illustrates an example of a protocol data unit session establishment procedure for a wireless device.
FIG. 13 illustrates examples of components of the elements in a communications network.
FIG. 14A, FIG. 14B, FIG. 14C, and FIG. 14D illustrate various examples of physical core network deployments, each having one or more network functions or portions thereof.
FIG. 15 is a diagram of an aspect of an example embodiment of the present disclosure.
FIG. 16 is a diagram of an aspect of an example embodiment of the present disclosure.
FIG. 17 is a diagram of an aspect of an example embodiment of the present disclosure.
FIG. 18 is a diagram of an aspect of an example embodiment of the present disclosure.
FIG. 19 is a diagram of an aspect of an example embodiment of the present disclosure.
FIG. 20 is a diagram of an aspect of an example embodiment of the present disclosure.
FIG. 21 is a diagram of an aspect of an example embodiment of the present disclosure.
FIG. 22 is a diagram of an aspect of an example embodiment of the present disclosure.
FIG. 23 is a diagram of an aspect of an example embodiment of the present disclosure.
FIG. 24 is a diagram of an aspect of an example embodiment of the present disclosure.
FIG. 25 is a diagram of an aspect of an example embodiment of the present disclosure.
FIG. 26 is a diagram of an aspect of an example embodiment of the present disclosure.
FIG. 27 is a diagram of an aspect of an example embodiment of the present disclosure.
FIG. 28 is a diagram of an aspect of an example embodiment of the present disclosure.

## DETAILED DESCRIPTION

In the present disclosure, various embodiments are presented as examples of how the disclosed techniques may be implemented and/or how the disclosed techniques may be practiced in environments and scenarios. It will be apparent to persons skilled in the relevant art that various changes in form and detail can be made therein without departing from the scope. In fact, after reading the description, it will be apparent to one skilled in the relevant art how to implement alternative embodiments. The present embodiments should not be limited by any of the described exemplary embodiments. The embodiments of the present disclosure will be described with reference to the accompanying drawings. Limitations, features, and/or elements from the disclosed example embodiments may be combined to create further embodiments within the scope of the disclosure. Any figures which highlight the functionality and advantages, are presented for example purposes only. The disclosed architecture is sufficiently flexible and configurable, such that it may be utilized in ways other than that shown. For example, the actions listed in any flowchart may be re-ordered or only optionally used in some embodiments.

Embodiments may be configured to operate as needed. The disclosed mechanism may be performed when certain criteria are met, for example, in a wireless device, a base station, a radio environment, a network, a combination of the above, and/or the like. Example criteria may be based, at least in part, on for example, wireless device or network node configurations, traffic load, initial system set up, packet sizes, traffic characteristics, a combination of the above, and/or the like. When the one or more criteria are met, various example embodiments may be applied. Therefore, it may be possible to implement example embodiments that selectively implement disclosed protocols.

A base station may communicate with a mix of wireless devices. Wireless devices and/or base stations may support multiple technologies, and/or multiple releases of the same technology. Wireless devices may have one or more specific capabilities. When this disclosure refers to a base station communicating with a plurality of wireless devices, this disclosure may refer to a subset of the total wireless devices in a coverage area. This disclosure may refer to, for example, a plurality of wireless devices of a given LTE or 5G release with a given capability and in a given sector of the base station. The plurality of wireless devices in this disclosure may refer to a selected plurality of wireless devices, and/or a subset of total wireless devices in a coverage area which perform according to disclosed methods, and/or the like. There may be a plurality of base stations or a plurality of wireless devices in a coverage area that may not comply with the disclosed methods, for example, those wireless devices or base stations may perform based on older releases of LTE or 5G technology.

In this disclosure, "a" and "an" and similar phrases refer to a single instance of a particular element, but should not be interpreted to exclude other instances of that element. For example, a bicycle with two wheels may be described as having "a wheel". Any term that ends with the suffix "(s)" is to be interpreted as "at least one" and/or "one or more." In this disclosure, the term "may" is to be interpreted as "may, for example." In other words, the term "may" is indicative that the phrase following the term "may" is an example of one of a multitude of suitable possibilities that may, or may not, be employed by one or more of the various embodiments. The terms "comprises" and "consists of", as used herein, enumerate one or more components of the element being described. The term "comprises" is interchangeable with "includes" and does not exclude unenumerated components from being included in the element being described. By contrast, "consists of" provides a complete enumeration of the one or more components of the element being described.

The phrases "based on", "in response to", "depending on", "employing", "using", and similar phrases indicate the presence and/or influence of a particular factor and/or condition on an event and/or action, but do not exclude unenumerated factors and/or conditions from also being present and/or influencing the event and/or action. For example, if action X is performed "based on" condition Y, this is to be interpreted as the action being performed "based at least on" condition Y. For example, if the performance of action X is performed when conditions Y and Z are both satisfied, then the performing of action X may be described as being "based on Y".

The term "configured" may relate to the capacity of a device whether the device is in an operational or non-operational state. Configured may refer to specific settings in a device that effect the operational characteristics of the device whether the device is in an operational or non-operational state. In other words, the hardware, software, firmware, registers, memory values, and/or the like may be "configured" within a device, whether the device is in an operational or nonoperational state, to provide the device with specific characteristics. Terms such as "a control message to cause in a device" may mean that a control message has parameters that may be used to configure specific characteristics or may be used to implement certain actions in the device, whether the device is in an operational or non-operational state.

In this disclosure, a parameter may comprise one or more information objects, and an information object may comprise one or more other objects. For example, if parameter J comprises parameter K, and parameter K comprises parameter L, and parameter L comprises parameter M, then J comprises L, and J comprises M. A parameter may be referred to as a field or information element. In an example embodiment, when one or more messages comprise a plurality of parameters, it implies that a parameter in the plurality of parameters is in at least one of the one or more messages, but does not have to be in each of the one or more messages.

This disclosure may refer to possible combinations of enumerated elements. For the sake of brevity and legibility, the present disclosure does not explicitly recite each and every permutation that may be obtained by choosing from a set of optional features. The present disclosure is to be interpreted as explicitly disclosing all such permutations. For example, the seven possible combinations of enumerated elements A, B, C consist of: (1) "A"; (2) "B"; (3) "C"; (4) "A and B"; (5) "A and C"; (6) "B and C"; and (7) "A, B, and C". For the sake of brevity and legibility, these seven possible combinations may be described using any of the following interchangeable formulations: "at least one of A, B, and C"; "at least one of A, B, or C"; "one or more of A, B, and C"; "one or more of A, B, or C"; "A, B, and/or C". It will be understood that impossible combinations are excluded. For example, "X and/or not-X" should be interpreted as "X or not-X". It will be further understood that these formulations may describe alternative phrasings of overlapping and/or synonymous concepts, for example, "identifier, identification, and/or ID number".

This disclosure may refer to sets and/or subsets. As an example, set X may be a set of elements comprising one or more elements. If every element of X is also an element of Y, then X may be referred to as a subset of Y. In this disclosure, only non-empty sets and subsets are considered. For example, if Y consists of the elements Y1, Y2, and Y3, then the possible subsets of Y are {Y1, Y2, Y3}, {Y1, Y2}, {Y1, Y3}, {Y2, Y3}, {Y1}, {Y2}, and {Y3}.

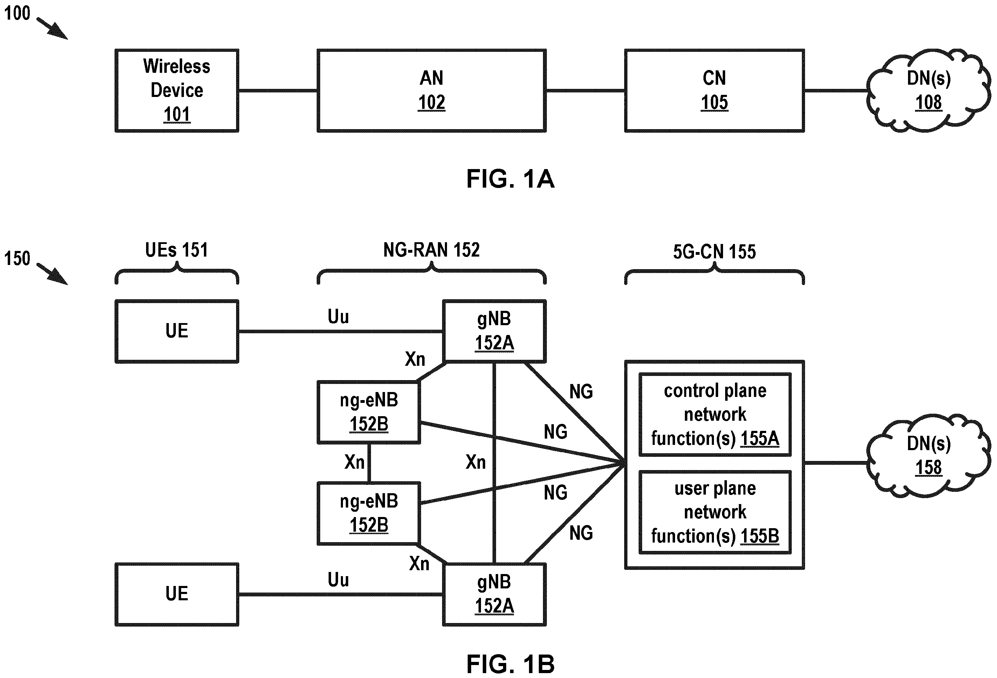

FIG. 1A illustrates an example of a communication network 100 in which embodiments of the present disclosure may be implemented. The communication network 100 may comprise, for example, a public land mobile network (PLMN) run by a network operator. As illustrated in FIG. 1A, the communication network 100 includes a wireless device 101, an access network (AN) 102, a core network (CN) 105, and one or more data network (DNs) 108.

The wireless device 101 may communicate with DNs 108 via AN 102 and ON 105. In the present disclosure, the term wireless device may refer to and encompass any mobile device or fixed (non-mobile) device for which wireless communication is needed or usable. For example, a wireless device may be a telephone, smart phone, tablet, computer, laptop, sensor, meter, wearable device, Internet of Things (IoT) device, vehicle road side unit (RSU), relay node, automobile, unmanned aerial vehicle, urban air mobility, and/or any combination thereof. The term wireless device encompasses other terminology, including user equipment (UE), user terminal (UT), access terminal (AT), mobile station, handset, wireless transmit and receive unit (WTRU), and/or wireless communication device.

The AN 102 may connect wireless device 101 to ON 105 in any suitable manner. The communication direction from the AN 102 to the wireless device 101 is known as the downlink and the communication direction from the wireless device 101 to AN 102 is known as the uplink. Downlink transmissions may be separated from uplink transmissions using frequency division duplexing (FDD), time-division duplexing (TDD), and/or some combination of the two duplexing techniques. The AN 102 may connect to wireless device 101 through radio communications over an air interface. An access network that at least partially operates over the air interface may be referred to as a radio access network (RAN). The ON 105 may set up one or more end-to-end connection between wireless device 101 and the one or more DNs 108. The ON 105 may authenticate wireless device 101 and provide charging functionality.

In the present disclosure, the term base station may refer to and encompass any element of AN 102 that facilitates communication between wireless device 101 and AN 102. Access networks and base stations have many different names and implementations. The base station may be a terrestrial base station fixed to the earth. The base station may be a mobile base station with a moving coverage area. The base station may be in space, for example, on board a satellite. For example, WiFi and other standards may use the term access point. As another example, the Third-Generation Partnership Project (3GPP) has produced specifications for three generations of mobile networks, each of which uses different terminology. Third Generation (3G) and/or Universal Mobile Telecommunications System (UMTS) standards may use the term Node B. 4G, Long Term Evolution (LTE), and/or Evolved Universal Terrestrial Radio Access (E-UTRA) standards may use the term Evolved Node B (eNB). 5G and/or New Radio (NR) standards may describe AN 102 as a next-generation radio access network (NG-RAN) and may refer to base stations as Next Generation eNB (ng-eNB) and/or Generation Node B (gNB). Future standards (for example, 6G, 7G, 8G) may use new terminology to refer to the elements which implement the methods described in the present disclosure (e.g., wireless devices, base stations, ANs, CNs, and/or components thereof). A base station may be implemented as a repeater or relay node used to extend the coverage area of a donor node. A repeater node may amplify and rebroadcast a radio signal received from a donor node. A relay node may perform the same/similar functions as a repeater node but may decode the radio signal received from the donor node to remove noise before amplifying and rebroadcasting the radio signal.

The AN 102 may include one or more base stations, each having one or more coverage areas. The geographical size and/or extent of a coverage area may be defined in terms of a range at which a receiver of AN 102 can successfully receive transmissions from a transmitter (e.g., wireless device 101) operating within the coverage area (and/or vice-versa). The coverage areas may be referred to as sectors or cells (although in some contexts, the term cell refers to the carrier frequency used in a particular coverage area, rather than the coverage area itself). Base stations with large coverage areas may be referred to as macrocell base stations. Other base stations cover smaller areas, for example, to provide coverage in areas with weak macrocell coverage, or to provide additional coverage in areas with high traffic (sometimes referred to as hotspots). Examples of small cell base stations include, in order of decreasing coverage area, microcell base stations, picocell base stations, and femtocell base stations or home base stations. Together, the coverage areas of the base stations may provide radio coverage to wireless device 101 over a wide geographic area to support wireless device mobility.

A base station may include one or more sets of antennas for communicating with the wireless device 101 over the air interface. Each set of antennas may be separately controlled by the base station. Each set of antennas may have a corresponding coverage area. As an example, a base station may include three sets of antennas to respectively control three coverage areas on three different sides of the base station. The entirety of the base station (and its corresponding antennas) may be deployed at a single location. Alternatively, a controller at a central location may control one or more sets of antennas at one or more distributed locations. The controller may be, for example, a baseband processing unit that is part of a centralized or cloud RAN architecture. The baseband processing unit may be either centralized in a pool of baseband processing units or virtualized. A set of antennas at a distributed location may be referred to as a remote radio head (RRH).

FIG. 1B illustrates another example communication network 150 in which embodiments of the present disclosure may be implemented. The communication network 150 may comprise, for example, a PLMN run by a network operator. As illustrated in FIG. 1B, communication network 150 includes UEs 151, a next generation radio access network (NG-RAN) 152, a 5G core network (5G-CN) 155, and one or more DNs 158. The NG-RAN 152 includes one or more base stations, illustrated as generation node Bs (gNBs) 152A and next generation evolved Node Bs (ng eNBs) 152B. The 5G-CN 155 includes one or more network functions (NFs), including control plane functions 155A and user plane functions 155B. The one or more DNs 158 may comprise public DNs (e.g., the Internet), private DNs, and/or intra-operator DNs. Relative to corresponding components illustrated in FIG. 1A, these components may represent specific implementations and/or terminology.

The base stations of the NG-RAN 152 may be connected to the UEs 151 via Uu interfaces. The base stations of the NG-RAN 152 may be connected to each other via Xn interfaces. The base stations of the NG-RAN 152 may be connected to 5G ON 155 via NG interfaces. The Uu interface may include an air interface. The NG and Xn interfaces may include an air interface, or may consist of direct physical connections and/or indirect connections over an underlying transport network (e.g., an internet protocol (IP) transport network).

Each of the Uu, Xn, and NG interfaces may be associated with a protocol stack. The protocol stacks may include a user plane (UP) and a control plane (CP). Generally, user plane data may include data pertaining to users of the UEs 151, for example, internet content downloaded via a web browser application, sensor data uploaded via a tracking application, or email data communicated to or from an email server. Control plane data, by contrast, may comprise signaling and messages that facilitate packaging and routing of user plane data so that it can be exchanged with the DN(s). The NG interface, for example, may be divided into an NG user plane interface (NG-U) and an NG control plane interface (NG-C). The NG-U interface may provide delivery of user plane data between the base stations and the one or more user plane network functions 155B. The NG-C interface may be used for control signaling between the base stations and the one or more control plane network functions 155A. The NG-C interface may provide, for example, NG interface management, UE context management, UE mobility management, transport of NAS messages, paging, PDU session management, and configuration transfer and/or warning message transmission. In some cases, the NG-C interface may support transmission of user data (for example, a small data transmission for an IoT device).

One or more of the base stations of the NG-RAN 152 may be split into a central unit (CU) and one or more distributed units (DUs). A CU may be coupled to one or more DUs via an F1 interface. The CU may handle one or more upper layers in the protocol stack and the DU may handle one or more lower layers in the protocol stack. For example, the CU may handle RRC, PDCP, and SOAP, and the DU may handle RLC, MAC, and PHY. The one or more DUs may be in geographically diverse locations relative to the CU and/or each other. Accordingly, the CU/DU split architecture may permit increased coverage and/or better coordination.

The gNBs 152A and ng-eNBs 152B may provide different user plane and control plane protocol termination towards the UEs 151. For example, the gNB 154A may provide new radio (NR) protocol terminations over a Uu interface associated with a first protocol stack. The ng-eNBs 152B may provide Evolved UMTS Terrestrial Radio Access (E-UTRA) protocol terminations over a Uu interface associated with a second protocol stack.

The 5G-CN 155 may authenticate UEs 151, set up end-to-end connections between UEs 151 and the one or more DNs 158, and provide charging functionality. The 5G-CN 155 may be based on a service-based architecture, in which the NFs making up the 5G-CN 155 offer services to each other and to other elements of the communication network 150 via interfaces. The 5G-CN 155 may include any number of other NFs and any number of instances of each NF.

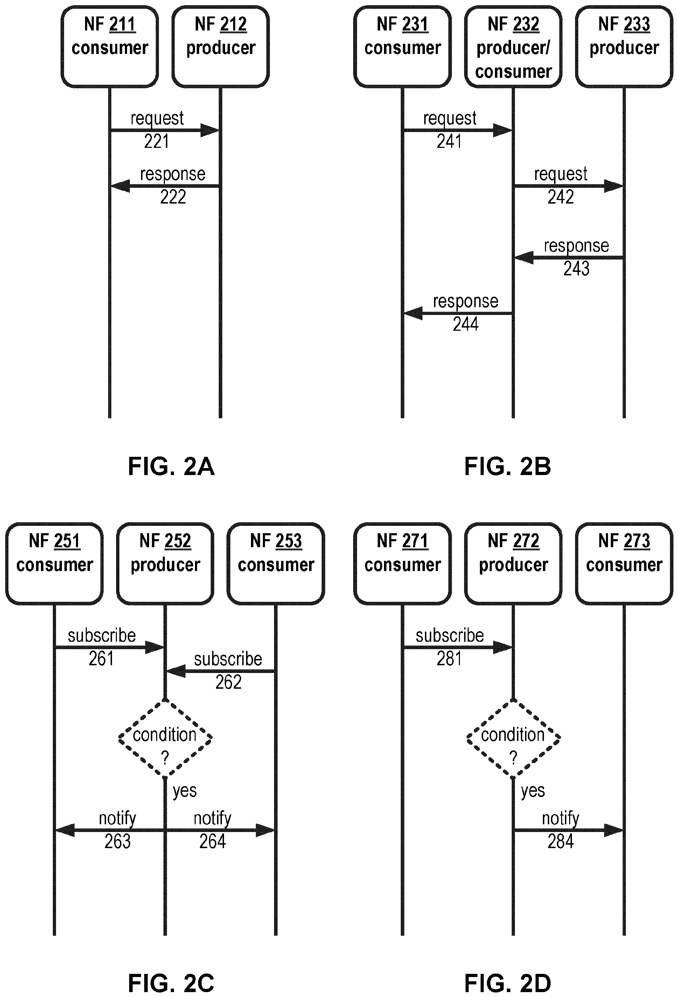

FIG. 2A, FIG. 2B, FIG. 2C, and FIG. 2D illustrate various examples of a framework for a service-based architecture within a core network. In a service-based architecture, a service may be sought by a service consumer and provided by a service producer. Prior to obtaining a particular service, an NF may determine where such a service can be obtained. To discover a service, the NF may communicate with a network repository function (NRF). As an example, an NF that provides one or more services may register with a network repository function (NRF). The NRF may store data relating to the one or more services that the NF is prepared to provide to other NFs in the service-based architecture. A consumer NF may query the NRF to discover a producer NF (for example, by obtaining from the NRF a list of NF instances that provide a particular service).

In the example of FIG. 2A, an NF 211 (a consumer NF in this example) may send a request 221 to an NF 212 (a producer NF). The request 221 may be a request for a particular service and may be sent based on a discovery that NF 212 is a producer of that service. The request 221 may comprise data relating to NF 211 and/or the requested service. The NF 212 may receive request 221, perform one or more actions associated with the requested service (e.g., retrieving data), and provide a response 221. The one or more actions performed by the NF 212 may be based on request data included in the request 221, data stored by NF 212, and/or data retrieved by NF 212. The response 222 may notify NF 211 that the one or more actions have been completed. The response 222 may comprise response data relating to NF 212, the one or more actions, and/or the requested service.

In the example of FIG. 2B, an NF 231 sends a request 241 to an NF 232. In this example, part of the service produced by NF 232 is to send a request 242 to an NF 233. The NF 233 may perform one or more actions and provide a response 243 to NF 232. Based on response 243, NF 232 may send a response 244 to NF 231. It will be understood from FIG. 2B that a single NF may perform the role of producer of services, consumer of services, or both. A particular NF service may include any number of nested NF services produced by one or more other NFs.

FIG. 2C illustrates examples of subscribe-notify interactions between a consumer NF and a producer NF. In FIG. 2C, an NF 251 sends a subscription 261 to an NF 252. An NF 253 sends a subscription 262 to the NF 252. Two NFs are shown in FIG. 2C for illustrative purposes (to demonstrate that the NF 252 may provide multiple subscription services to different NFs), but it will be understood that a subscribe-notify interaction only requires one subscriber. The NFs 251, 253 may be independent from one another. For example, the NFs 251, 253 may independently discover NF 252 and/or independently determine to subscribe to the service offered by NF 252. In response to receipt of a subscription, the NF 252 may provide a notification to the subscribing NF. For example, NF 252 may send a notification 263 to NF 251 based on subscription 261 and may send a notification 264 to NF 253 based on subscription 262.

As shown in the example illustration of FIG. 2C, the sending of the notifications 263, 264 may be based on a determination that a condition has occurred. For example, the notifications 263, 264 may be based on a determination that a particular event has occurred, a determination that a particular condition is outstanding, and/or a determination that a duration of time associated with the subscription has elapsed (for example, a period associated with a subscription for periodic notifications). As shown in the example illustration of FIG. 2C, NF 252 may send notifications 263, 264 to NFs 251, 253 simultaneously and/or in response to the same condition. However, it will be understood that the NF 252 may provide notifications at different times and/or in response to different notification conditions. In an example, the NF 251 may request a notification when a certain parameter, as measured by the NF 252, exceeds a first threshold, and the NF 252 may request a notification when the parameter exceeds a second threshold different from the first threshold. In an example, a parameter of interest and/or a corresponding threshold may be indicated in the subscriptions 261, 262.

FIG. 2D illustrates another example of a subscribe-notify interaction. In FIG. 2D, an NF 271 sends a subscription 281 to an NF 272. In response to receipt of subscription 281 and/or a determination that a notification condition has occurred, NF 272 may send a notification 284. The notification 284 may be sent to an NF 273. Unlike the example in FIG. 2C (in which a notification is sent to the subscribing NF), FIG. 2D demonstrates that a subscription and its corresponding notification may be associated with different NFs. For example, NF 271 may subscribe to the service provided by NF 272 on behalf of NF 273.

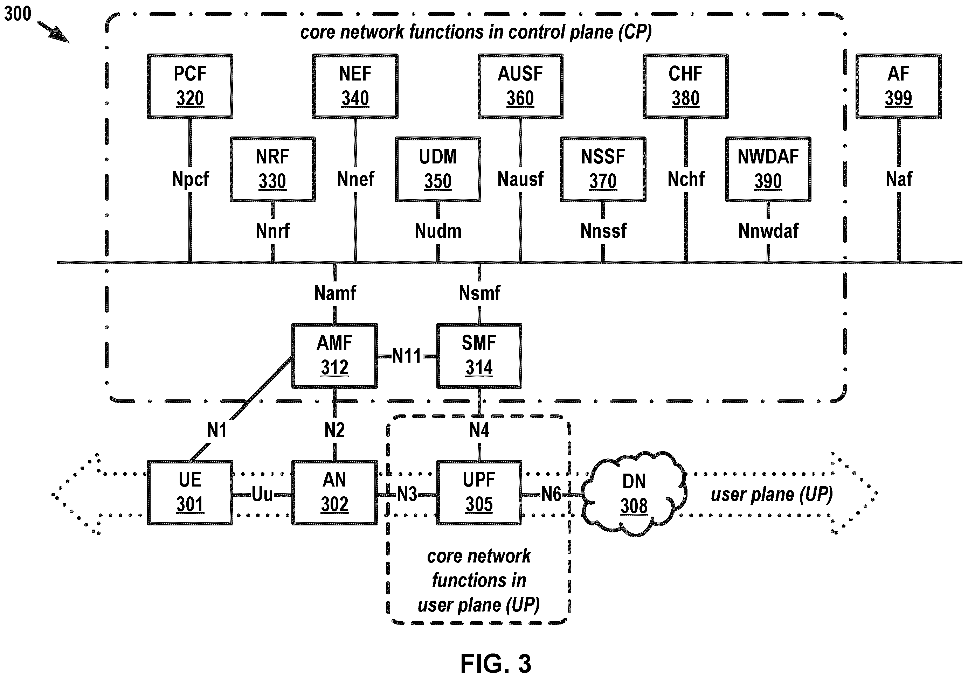

FIG. 3 illustrates another example communication network 300 in which embodiments of the present disclosure may be implemented. Communication network 300 includes a user equipment (UE) 301, an access network (AN) 302, and a data network (DN) 308. The remaining elements depicted in FIG. 3 may be included in and/or associated with a core network. Each element of the core network may be referred to as a network function (NF).

The NFs depicted in FIG. 3 include a user plane function (UPF) 305, an access and mobility management function (AMF) 312, a session management function (SMF) 314, a policy control function (PCF) 320, a network repository function (NRF) 330, a network exposure function (NEF) 340, a unified data management (UDM) 350, an authentication server function (AUSF) 360, a network slice selection function (NSSF) 370, a charging function (CHF) 380, a network data analytics function (NWDAF) 390, and an application function (AF) 399. The UPF 305 may be a user-plane core network function, whereas the NFs 312, 314, and 320-390 may be control-plane core network functions. Although not shown in the example of FIG. 3, the core network may include additional instances of any of the NFs depicted and/or one or more different NF types that provide different services. Other examples of NF type include a gateway mobile location center (GMLC), a location management function (LMF), an operations, administration, and maintenance function (OAM), a public warning system (PWS), a short message service function (SMSF), a unified data repository (UDR), and an unstructured data storage function (UDSF).

Each element depicted in FIG. 3 has an interface with at least one other element. The interface may be a logical connection rather than, for example, a direct physical connection. Any interface may be identified using a reference point representation and/or a service-based representation. In a reference point representation, the letter 'N' is followed by a numeral, indicating an interface between two specific elements. For example, as shown in FIG. 3, AN 302 and UPF 305 interface via 'N3', whereas UPF 305 and DN 308 interface via 'N6'. By contrast, in a service-based representation, the letter 'N' is followed by letters. The letters identify an NF that provides services to the core network. For example, PCF 320 may provide services via interface 'Npcf'. The PCF 320 may provide services to any NF in the core network via 'Npcf'. Accordingly, a service-based representation may correspond to a bundle of reference point representations. For example, the Npcf interface between PCF 320 and the core network generally may correspond to an N7 interface between PCF 320 and SMF 314, an N30 interface between PCF 320 and NEF 340, etc.

The UPF 305 may serve as a gateway for user plane traffic between AN 302 and DN 308. The UE 301 may connect to UPF 305 via a Uu interface and an N3 interface (also described as NG-U interface). The UPF 305 may connect to DN 308 via an N6 interface. The UPF 305 may connect to one or more other UPFs (not shown) via an N9 interface. The UE 301 may be configured to receive services through a protocol data unit (PDU) session, which is a logical connection between UE 301 and DN 308. The UPF 305 (or a plurality of UPFs if desired) may be selected by SMF 314 to handle a particular PDU session between UE 301 and DN 308. The SMF 314 may control the functions of UPF 305 with respect to the PDU session. The SMF 314 may connect to UPF 305 via an N4 interface. The UPF 305 may handle any number of PDU sessions associated with any number of UEs (via any number of ANs). For purposes of handling the one or more PDU sessions, UPF 305 may be controlled by any number of SMFs via any number of corresponding N4 interfaces.

The AMF 312 depicted in FIG. 3 may control UE access to the core network. The UE 301 may register with the network via AMF 312. It may be necessary for UE 301 to register prior to establishing a PDU session. The AMF 312 may manage a registration area of UE 301, enabling the network to track the physical location of UE 301 within the network. For a UE in connected mode, AMF 312 may manage UE mobility, for example, handovers from one AN or portion thereof to another. For a UE in idle mode, AMF 312 may perform registration updates and/or page the UE to transition the UE to connected mode.

The AMF 312 may receive, from UE 301, non-access stratum (NAS) messages transmitted in accordance with NAS protocol. NAS messages relate to communications between UE 301 and the core network. Although NAS messages may be relayed to AMF 312 via AN 302, they may be described as communications via the N1 interface. NAS messages may facilitate UE registration and mobility management, for example, by authenticating, identifying, configuring, and/or managing a connection of UE 301. NAS messages may support session management procedures for maintaining user plane connectivity and quality of service (QoS) of a session between UE 301 and DN 309. If the NAS message involves session management, AMF 312 may send the NAS message to SMF 314. NAS messages may be used to transport messages between UE 301 and other components of the core network (e.g., core network components other than AMF 312 and SMF 314). The AMF 312 may act on a particular NAS message itself, or alternatively, forward the NAS message to an appropriate core network function (e.g., SMF 314, etc.)

The SMF 314 depicted in FIG. 3 may establish, modify, and/or release a PDU session based on messaging received UE 301. The SMF 314 may allocate, manage, and/or assign an IP address to UE 301, for example, upon establishment of a PDU session. There may be multiple SMFs in the network, each of which may be associated with a respective group of wireless devices, base stations, and/or UPFs. A UE with multiple PDU sessions may be associated with a different SMF for each PDU session. As noted above, SMF 314 may select one or more UPFs to handle a PDU session and may control the handling of the PDU session by the selected UPF by providing rules for packet handling (PDR, FAR, QER, etc.). Rules relating to QoS and/or charging for a particular PDU session may be obtained from PCF 320 and provided to UPF 305.

The PCF 320 may provide, to other NFs, services relating to policy rules. The PCF 320 may use subscription data and information about network conditions to determine policy rules and then provide the policy rules to a particular NF which may be responsible for enforcement of those rules. Policy rules may relate to policy control for access and mobility, and may be enforced by the AMF. Policy rules may relate to session management, and may be enforced by the SMF 314. Policy rules may be, for example, network-specific, wireless device-specific, session-specific, or data flow-specific.

The NRF 330 may provide service discovery. The NRF 330 may belong to a particular PLMN. The NRF 330 may maintain NF profiles relating to other NFs in the communication network 300. The NF profile may include, for example, an address, PLMN, and/or type of the NF, a slice identifier, a list of the one or more services provided by the NF, and the authorization required to access the services.

The NEF 340 depicted in FIG. 3 may provide an interface to external domains, permitting external domains to selectively access the control plane of the communication network 300. The external domain may comprise, for example, third-party network functions, application functions, etc. The NEF 340 may act as a proxy between external elements and network functions such as AMF 312, SMF 314, PCF 320, UDM 350, etc. As an example, NEF 340 may determine a location or reachability status of UE 301 based on reports from AMF 312, and provide status information to an external element. As an example, an external element may provide, via NEF 340, information that facilitates the setting of parameters for establishment of a PDU session. The NEF 340 may determine which data and capabilities of the control plane are exposed to the external domain. The NEF 340 may provide secure exposure that authenticates and/or authorizes an external entity to which data or capabilities of the communication network 300 are exposed. The NEF 340 may selectively control the exposure such that the internal architecture of the core network is hidden from the external domain.

The UDM 350 may provide data storage for other NFs. The UDM 350 may permit a consolidated view of network information that may be used to ensure that the most relevant information can be made available to different NFs from a single resource. The UDM 350 may store and/or retrieve information from a unified data repository (UDR). For example, UDM 350 may obtain user subscription data relating to UE 301 from the UDR.

The AUSF 360 may support mutual authentication of UE 301 by the core network and authentication of the core network by UE 301. The AUSF 360 may perform key agreement procedures and provide keying material that can be used to improve security.

The NSSF 370 may select one or more network slices to be used by the UE 301. The NSSF 370 may select a slice based on slice selection information. For example, the NSSF 370 may receive Single Network Slice Selection Assistance Information (S-NSSAI) and map the S-NSSAI to a network slice instance identifier (NSI).

The CHF 380 may control billing-related tasks associated with UE 301. For example, UPF 305 may report traffic usage associated with UE 301 to SMF 314. The SMF 314 may collect usage data from UPF 305 and one or more other UPFs. The usage data may indicate how much data is exchanged, what DN the data is exchanged with, a network slice associated with the data, or any other information that may influence billing. The SMF 314 may share the collected usage data with the CHF. The CHF may use the collected usage data to perform billing-related tasks associated with UE 301. The CHF may, depending on the billing status of UE 301, instruct SMF 314 to limit or influence access of UE 301 and/or to provide billing-related notifications to UE 301.

The NWDAF 390 may collect and analyze data from other network functions and offer data analysis services to other network functions. As an example, NWDAF 390 may collect data relating to a load level for a particular network slice instance from UPF 305, AMF 312, and/or SMF 314. Based on the collected data, NWDAF 390 may provide load level data to the PCF 320 and/or NSSF 370, and/or notify the PC220 and/or NSSF 370 if load level for a slice reaches and/or exceeds a load level threshold.

The AF 399 may be outside the core network, but may interact with the core network to provide information relating to the QoS requirements or traffic routing preferences associated with a particular application. The AF 399 may access the core network based on the exposure constraints imposed by the NEF 340. However, an operator of the core network may consider the AF 399 to be a trusted domain that can access the network directly.

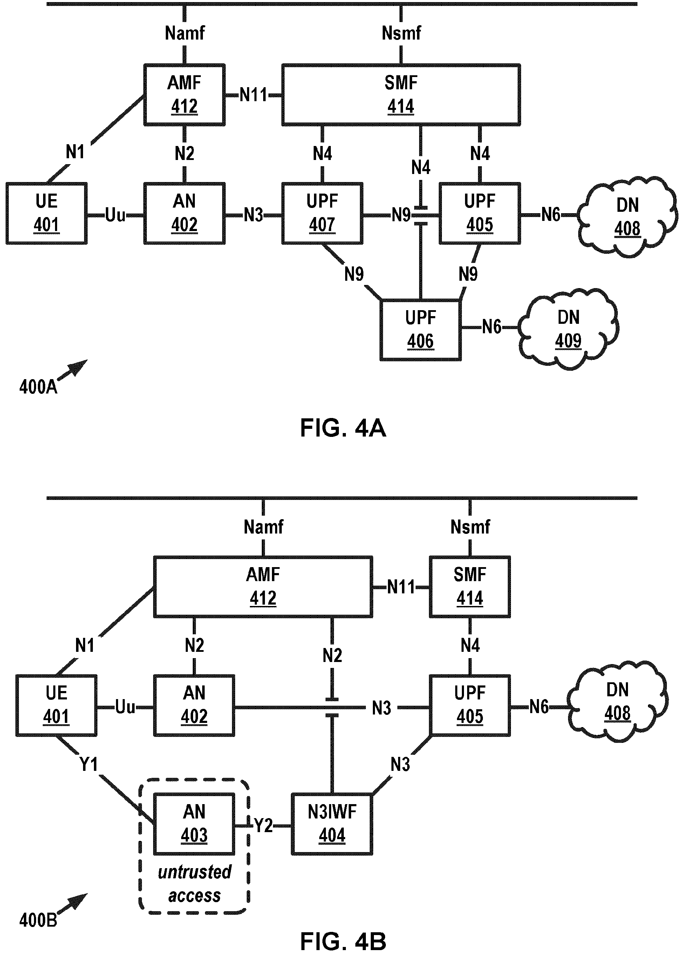

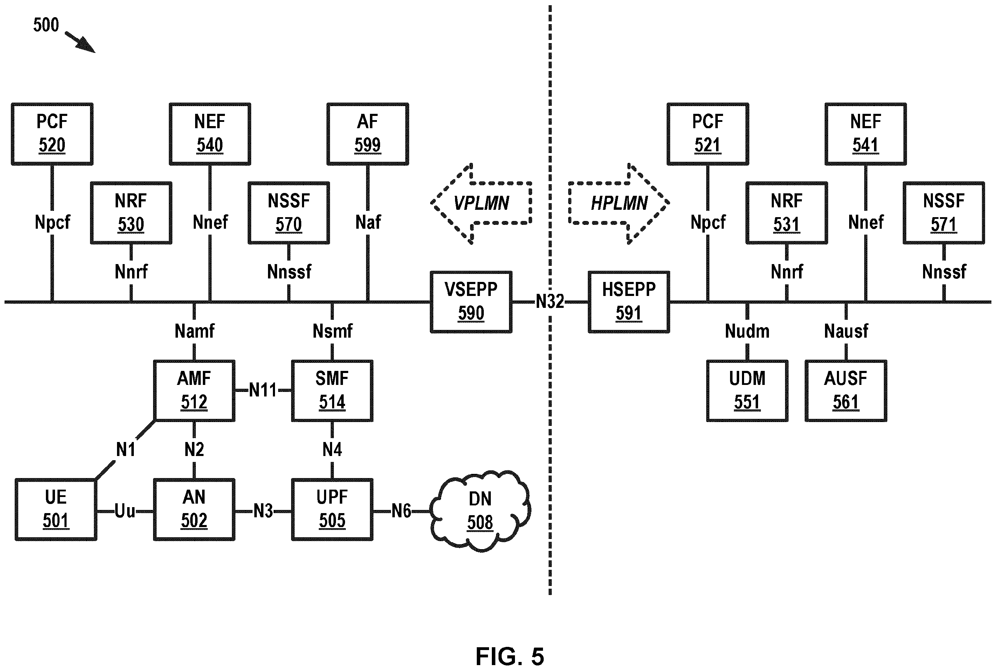

FIGS. 4A, 4B, and 5 illustrate other examples of core network architectures that are analogous in some respects to the core network architecture 300 depicted in FIG. 3. For conciseness, some of the core network elements depicted in FIG. 3 are omitted. Many of the elements depicted in FIGS. 4A, 4B, and 5 are analogous in some respects to elements depicted in FIG. 3. For conciseness, some of the details relating to their functions or operation are omitted.

FIG. 4A illustrates an example of a core network architecture 400A comprising an arrangement of multiple UPFs. Core network architecture 400A includes a UE 401, an AN 402, an AMF 412, and an SMF 414. Unlike previous examples of core network architectures described above, FIG. 4A depicts multiple UPFs, including a UPF 405, a UPF 406, and a UPF 407, and multiple DNs, including a DN 408 and a DN 409. Each of the multiple UPFs 405, 406, 407 may communicate with the SMF 414 via an N4 interface. The DNs 408, 409 communicate with the UPFs 405, 406, respectively, via N6 interfaces. As shown in FIG. 4A, the multiple UPFs 405, 406, 407 may communicate with one another via N9 interfaces.

The UPFs 405, 406, 407 may perform traffic detection, in which the UPFs identify and/or classify packets. Packet identification may be performed based on packet detection rules (PDR) provided by the SMF 414. A PDR may include packet detection information comprising one or more of: a source interface, a UE IP address, core network (CN) tunnel information (e.g., a ON address of an N3/N9 tunnel corresponding to a PDU session), a network instance identifier, a quality of service flow identifier (QFI), a filter set (for example, an IP packet filter set or an ethernet packet filter set), and/or an application identifier.

In addition to indicating how a particular packet is to be detected, a PDR may further indicate rules for handling the packet upon detection thereof. The rules may include, for example, forwarding action rules (FARs), multi-access rules (MARs), usage reporting rules (URRs), QoS enforcement rules (QERs), etc. For example, the PDR may comprise one or more FAR identifiers, MAR identifiers, URR identifiers, and/or QER identifiers. These identifiers may indicate the rules that are prescribed for the handling of a particular detected packet.

The UPF 405 may perform traffic forwarding in accordance with a FAR. For example, the FAR may indicate that a packet associated with a particular PDR is to be forwarded, duplicated, dropped, and/or buffered. The FAR may indicate a destination interface, for example, "access" for downlink or "core" for uplink. If a packet is to be buffered, the FAR may indicate a buffering action rule (BAR). As an example, UPF 405 may perform data buffering of a certain number of downlink packets if a PDU session is deactivated.

The UPF 405 may perform QoS enforcement in accordance with a QER. For example, the QER may indicate a guaranteed bitrate that is authorized and/or a maximum bitrate to be enforced for a packet associated with a particular PDR. The QER may indicate that a particular guaranteed and/or maximum bitrate may be for uplink packets and/or downlink packets. The UPF 405 may mark packets belonging to a particular QoS flow with a corresponding QFI. The marking may enable a recipient of the packet to determine a QoS of the packet.

The UPF 405 may provide usage reports to the SMF 414 in accordance with a URR. The URR may indicate one or more triggering conditions for generation and reporting of the usage report, for example, immediate reporting, periodic reporting, a threshold for incoming uplink traffic, or any other suitable triggering condition. The URR may indicate a method for measuring usage of network resources, for example, data volume, duration, and/or event.

As noted above, the DNs 408, 409 may comprise public DNs (e.g., the Internet), private DNs (e.g., private, internal corporate-owned DNs), and/or intra-operator DNs. Each DN may provide an operator service and/or a third-party service. The service provided by a DN may be the Internet, an IP multimedia subsystem (IMS), an augmented or virtual reality network, an edge computing or mobile edge computing (MEC) network, etc. Each DN may be identified using a data network name (DNN). The UE 401 may be configured to establish a first logical connection with DN 408 (a first PDU session), a second logical connection with DN 409 (a second PDU session), or both simultaneously (first and second PDU sessions).

Each PDU session may be associated with at least one UPF configured to operate as a PDU session anchor (PSA, or "anchor"). The anchor may be a UPF that provides an N6 interface with a DN.

In the example of FIG. 4A, UPF 405 may be the anchor for the first PDU session between UE 401 and DN 408, whereas the UPF 406 may be the anchor for the second PDU session between UE 401 and DN 409. The core network may use the anchor to provide service continuity of a particular PDU session (for example, IP address continuity) as UE 401 moves from one access network to another. For example, suppose that UE 401 establishes a PDU session using a data path to the DN 408 using an access network other than AN 402. The data path may include UPF 405 acting as anchor. Suppose further that the UE 401 later moves into the coverage area of the AN 402. In such a scenario, SMF 414 may select a new UPF (UPF 407) to bridge the gap between the newly-entered access network (AN 402) and the anchor UPF (UPF 405). The continuity of the PDU session may be preserved as any number of UPFs are added or removed from the data path. When a UPF is added to a data path, as shown in FIG. 4A, it may be described as an intermediate UPF and/or a cascaded UPF.

As noted above, UPF 406 may be the anchor for the second PDU session between UE 401 and DN 409. Although the anchor for the first and second PDU sessions are associated with different UPFs in FIG. 4A, it will be understood that this is merely an example. It will also be understood that multiple PDU sessions with a single DN may correspond to any number of anchors. When there are multiple UPFs, a UPF at the branching point (UPF 407 in FIG. 4A) may operate as an uplink classifier (UL-CL). The UL-CL may divert uplink user plane traffic to different UPFs.

The SMF 414 may allocate, manage, and/or assign an IP address to UE 401, for example, upon establishment of a PDU session. The SMF 414 may maintain an internal pool of IP addresses to be assigned. The SMF 414 may, if necessary, assign an IP address provided by a dynamic host configuration protocol (DHCP) server or an authentication, authorization, and accounting (AAA) server. IP address management may be performed in accordance with a session and service continuity (SSC) mode. In SSC mode 1, an IP address of UE 401 may be maintained (and the same anchor UPF may be used) as the wireless device moves within the network. In SSC mode 2, the IP address of UE 401 changes as UE 401 moves within the network (e.g., the old IP address and UPF may be abandoned and a new IP address and anchor UPF may be established). In SSC mode 3, it may be possible to maintain an old IP address (similar to SSC mode 1) temporarily while establishing a new IP address (similar to SSC mode 2), thus combining features of SSC modes 1 and 2. Applications that are sensitive to IP address changes may operate in accordance with SSC mode 1.

UPF selection may be controlled by SMF 414. For example, upon establishment and/or modification of a PDU session between UE 401 and DN 408, SMF 414 may select UPF 405 as the anchor for the PDU session and/or UPF 407 as an intermediate UPF. Criteria for UPF selection include path efficiency and/or speed between AN 402 and DN 408. The reliability, load status, location, slice support and/or other capabilities of candidate UPFs may also be considered.

FIG. 4B illustrates an example of a core network architecture 400B that accommodates untrusted access. Similar to FIG. 4A, UE 401 as depicted in FIG. 4B connects to DN 408 via AN 402 and UPF 405. The AN 402 and UPF 405 constitute trusted (e.g., 3GPP) access to the DN 408. By contrast, UE 401 may also access DN 408 using an untrusted access network, AN 403, and a non-3GPP interworking function (N3IWF) 404.

The AN 403 may be, for example, a wireless land area network (WLAN) operating in accordance with the IEEE 802.11 standard. The UE 401 may connect to AN 403, via an interface Y1, in whatever manner is prescribed for AN 403. The connection to AN 403 may or may not involve authentication. The UE 401 may obtain an IP address from AN 403. The UE 401 may determine to connect to core network 400B and select untrusted access for that purpose. The AN 403 may communicate with N3IWF 404 via a Y2 interface. After selecting untrusted access, the UE 401 may provide N3IWF 404 with sufficient information to select an AMF. The selected AMF may be, for example, the same AMF that is used by UE 401 for 3GPP access (AMF 412 in the present example). The N3IWF 404 may communicate with AMF 412 via an N2 interface. The UPF 405 may be selected and N3IWF 404 may communicate with UPF 405 via an N3 interface. The UPF 405 may be a PDU session anchor (PSA) and may remain the anchor for the PDU session even as UE 401 shifts between trusted access and untrusted access.

FIG. 5 illustrates an example of a core network architecture 500 in which a UE 501 is in a roaming scenario. In a roaming scenario, UE 501 is a subscriber of a first PLMN (a home PLMN, or HPLMN) but attaches to a second PLMN (a visited PLMN, or VPLMN). Core network architecture 500 includes UE 501, an AN 502, a UPF 505, and a DN 508. The AN 502 and UPF 505 may be associated with a VPLMN. The VPLMN may manage the AN 502 and UPF 505 using core network elements associated with the VPLMN, including an AMF 512, an SMF 514, a PCF 520, an NRF 530, an NEF 540, and an NSSF 570. An AF 599 may be adjacent the core network of the VPLMN.

The UE 501 may not be a subscriber of the VPLMN. The AMF 512 may authorize UE 501 to access the network based on, for example, roaming restrictions that apply to UE 501. In order to obtain network services provided by the VPLMN, it may be necessary for the core network of the VPLMN to interact with core network elements of a HPLMN of UE 501, in particular, a PCF 521, an NRF 531, an NEF 541, a UDM 551, and/or an AUSF 561. The VPLMN and HPLMN may communicate using an N32 interface connecting respective security edge protection proxies (SEPPs). In FIG. 5, the respective SEPPs are depicted as a VSEPP 590 and an HSEPP 591.

The VSEPP 590 and the HSEPP 591 communicate via an N32 interface for defined purposes while concealing information about each PLMN from the other. The SEPPs may apply roaming policies based on communications via the N32 interface. The PCF 520 and PCF 521 may communicate via the SEPPs to exchange policy-related signaling. The NRF 530 and NRF 531 may communicate via the SEPPs to enable service discovery of NFs in the respective PLMNs. The VPLMN and HPLMN may independently maintain NEF 540 and NEF 541. The NSSF 570 and NSSF 571 may communicate via the SEPPs to coordinate slice selection for UE 501. The HPLMN may handle all authentication and subscription related signaling. For example, when the UE 501 registers or requests service via the VPLMN, the VPLMN may authenticate UE 501 and/or obtain subscription data of UE 501 by accessing, via the SEPPs, the UDM 551 and AUSF 561 of the HPLMN.

The core network architecture 500 depicted in FIG. 5 may be referred to as a local breakout configuration, in which UE 501 accesses DN 508 using one or more UPFs of the VPLMN (i.e., UPF 505). However, other configurations are possible. For example, in a home-routed configuration (not shown in FIG. 5), UE 501 may access a DN using one or more UPFs of the HPLMN. In the home-routed configuration, an N9 interface may run parallel to the N32 interface, crossing the frontier between the VPLMN and the HPLMN to carry user plane data. One or more SMFs of the respective PLMNs may communicate via the N32 interface to coordinate session management for UE 501. The SMFs may control their respective UPFs on either side of the frontier.

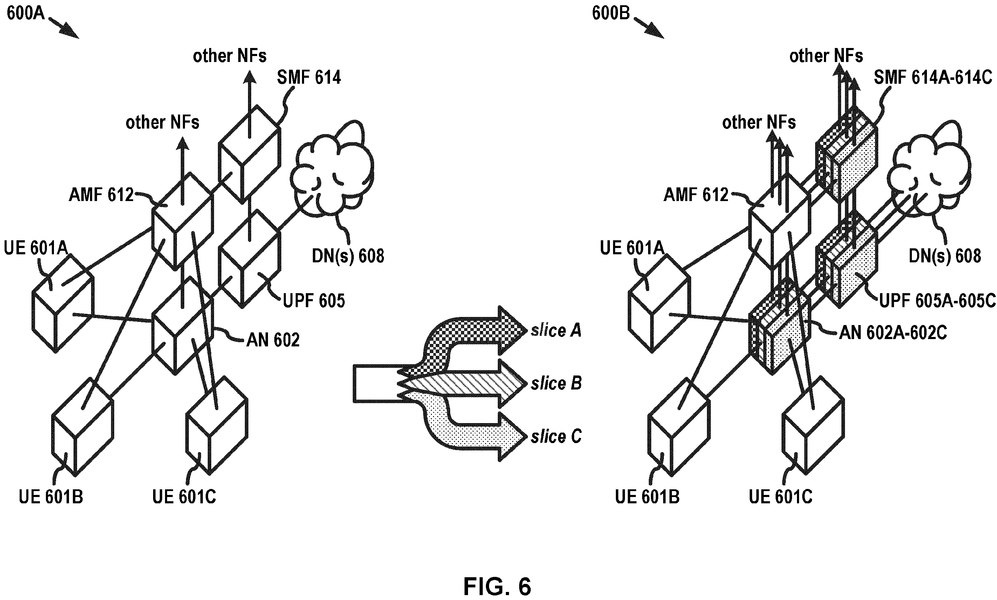

FIG. 6 illustrates an example of network slicing. Network slicing may refer to division of shared infrastructure (e.g., physical infrastructure) into distinct logical networks. These distinct logical networks may be independently controlled, isolated from one another, and/or associated with dedicated resources.

Network architecture 600A illustrates an un-sliced physical network corresponding to a single logical network. The network architecture 600A comprises a user plane wherein UEs 601A, 601B, 601C (collectively, UEs 601) have a physical and logical connection to a DN 608 via an AN 602 and a UPF 605. The network architecture 600A comprises a control plane wherein an AMF 612 and a SMF 614 control various aspects of the user plane.

The network architecture 600A may have a specific set of characteristics (e.g., relating to maximum bit rate, reliability, latency, bandwidth usage, power consumption, etc.). This set of characteristics may be affected by the nature of the network elements themselves (e.g., processing power, availability of free memory, proximity to other network elements, etc.) or the management thereof (e.g., optimized to maximize bit rate or reliability, reduce latency or power bandwidth usage, etc.). The characteristics of network architecture 600A may change over time, for example, by upgrading equipment or by modifying procedures to target a particular characteristic. However, at any given time, network architecture 600A will have a single set of characteristics that may or may not be optimized for a particular use case. For example, UEs 601A, 601B, 601C may have different requirements, but network architecture 600A can only be optimized for one of the three.

Network architecture 600B is an example of a sliced physical network divided into multiple logical networks. In FIG. 6, the physical network is divided into three logical networks, referred to as slice A, slice B, and slice C. For example, UE 601A may be served by AN 602A, UPF 605A, AMF 612, and SMF 614A. UE 601B may be served by AN 602B, UPF 605B, AMF 612, and SMF 614B. UE 601C may be served by AN 602C, UPF 605C, AMF 612, and SMF 614C. Although the respective UEs 601 communicate with different network elements from a logical perspective, these network elements may be deployed by a network operator using the same physical network elements.

Each network slice may be tailored to network services having different sets of characteristics. For example, slice A may correspond to enhanced mobile broadband (eMBB) service. Mobile broadband may refer to internet access by mobile users, commonly associated with smartphones. Slice B may correspond to ultra-reliable low-latency communication (URLLC), which focuses on reliability and speed. Relative to eMBB, URLLC may improve the feasibility of use cases such as autonomous driving and telesurgery. Slice C may correspond to massive machine type communication (mMTC), which focuses on low-power services delivered to a large number of users. For example, slice C may be optimized for a dense network of battery-powered sensors that provide small amounts of data at regular intervals. Many mMTC use cases would be prohibitively expensive if they operated using an eMBB or URLLC network.

If the service requirements for one of the UEs 601 changes, then the network slice serving that UE can be updated to provide better service. Moreover, the set of network characteristics corresponding to eMBB, URLLC, and mMTC may be varied, such that differentiated species of eMBB, URLLC, and mMTC are provided. Alternatively, network operators may provide entirely new services in response to, for example, customer demand.

In FIG. 6, each of the UEs 601 has its own network slice. However, it will be understood that a single slice may serve any number of UEs and a single UE may operate using any number of slices. Moreover, in the example network architecture 600B, the AN 602, UPF 605 and SMF 614 are separated into three separate slices, whereas the AMF 612 is unsliced. However, it will be understood that a network operator may deploy any architecture that selectively utilizes any mix of sliced and unsliced network elements, with different network elements divided into different numbers of slices. Although FIG. 6 only depicts three core network functions, it will be understood that other core network functions may be sliced as well. A PLMN that supports multiple network slices may maintain a separate network repository function (NFR) for each slice, enabling other NFs to discover network services associated with that slice.

Network slice selection may be controlled by an AMF, or alternatively, by a separate network slice selection function (NSSF). For example, a network operator may define and implement distinct network slice instances (NSIs). Each NSI may be associated with single network slice selection assistance information (S-NSSAI). The S-NSSAI may include a particular slice/service type (SST) indicator (indicating eMBB, URLLC, mMTC, etc.). As an example, a particular tracking area may be associated with one or more configured S-NSSAIs. UEs may identify one or more requested and/or subscribed S-NSSAIs (e.g., during registration). The network may indicate to the UE one or more allowed and/or rejected

S-NSSAIs.

The S-NSSAI may further include a slice differentiator (SD) to distinguish between different tenants of a particular slice and/or service type. For example, a tenant may be a customer (e.g., vehicle manufacture, service provider, etc.) of a network operator that obtains (for example, purchases) guaranteed network resources and/or specific policies for handling its subscribers. The network operator may configure different slices and/or slice types, and use the SD to determine which tenant is associated with a particular slice.

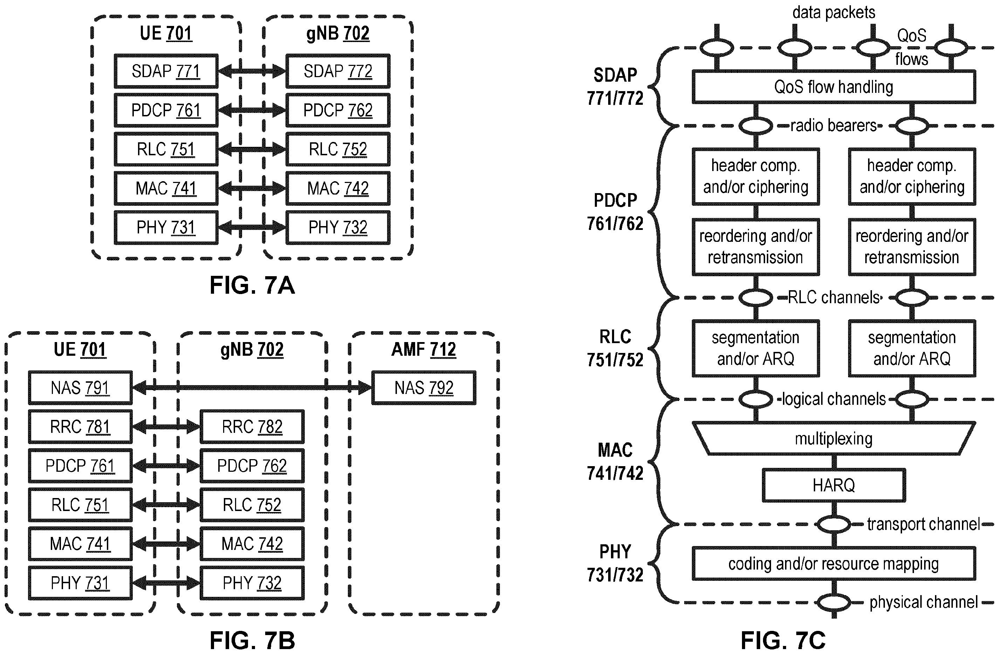

FIG. 7A, FIG. 7B, and FIG. 7C illustrate a user plane (UP) protocol stack, a control plane (CP) protocol stack, and services provided between protocol layers of the UP protocol stack.

The layers may be associated with an open system interconnection (OSI) model of computer networking functionality. In the OSI model, layer 1 may correspond to the bottom layer, with higher layers on top of the bottom layer. Layer 1 may correspond to a physical layer, which is concerned with the physical infrastructure used for transfer of signals (for example, cables, fiber optics, and/or radio frequency transceivers). In New Radio (NR), layer 1 may comprise a physical layer (PHY). Layer 2 may correspond to a data link layer. Layer 2 may be concerned with packaging of data (into, e.g., data frames) for transfer, between nodes of the network, using the physical infrastructure of layer 1. In NR, layer 2 may comprise a media access control layer (MAC), a radio link control layer (RLC), a packet data convergence layer (PDCP), and a service data application protocol layer (SDAP).

Layer 3 may correspond to a network layer. Layer 3 may be concerned with routing of the data which has been packaged in layer 2. Layer 3 may handle prioritization of data and traffic avoidance. In NR, layer 3 may comprise a radio resource control layer (RRC) and a non-access stratum layer (NAS). Layers 4 through 7 may correspond to a transport layer, a session layer, a presentation layer, and an application layer. The application layer interacts with an end user to provide data associated with an application. In an example, an end user implementing the application may generate data associated with the application and initiate sending of that information to a targeted data network (e.g., the Internet, an application server, etc.). Starting at the application layer, each layer in the OSI model may manipulate and/or repackage the information and deliver it to a lower layer. At the lowest layer, the manipulated and/or repackaged information may be exchanged via physical infrastructure (for example, electrically, optically, and/or electromagnetically). As it approaches the targeted data network, the information will be unpackaged and provided to higher and higher layers, until it once again reaches the application layer in a form that is usable by the targeted data network (e.g., the same form in which it was provided by the end user). To respond to the end user, the data network may perform this procedure in reverse.

FIG. 7A illustrates a user plane protocol stack. The user plane protocol stack may be a new radio (NR) protocol stack for a Uu interface between a UE 701 and a gNB 702. In layer 1 of the UP protocol stack, the UE 701 may implement PHY 731 and the gNB 702 may implement PHY 732. In layer 2 of the UP protocol stack, the UE 701 may implement MAC 741, RLC 751, PDCP 761, and SDAP 771. The gNB 702 may implement MAC 742, RLC 752, PDCP 762, and SOAP 772.

FIG. 7B illustrates a control plane protocol stack. The control plane protocol stack may be an NR protocol stack for the Uu interface between the UE 701 and the gNB 702 and/or an N1 interface between the UE 701 and an AMF 712. In layer 1 of the CP protocol stack, the UE 701 may implement PHY 731 and the gNB 702 may implement PHY 732. In layer 2 of the CP protocol stack, the UE 701 may implement MAC 741, RLC 751, PDCP 761, RRC 781, and NAS 791. The gNB 702 may implement MAC 742, RLC 752, PDCP 762, and RRC 782. The AMF 712 may implement NAS 792.

The NAS may be concerned with the non-access stratum, in particular, communication between the UE 701 and the core network (e.g., the AMF 712). Lower layers may be concerned with the access stratum, for example, communication between the UE 701 and the gNB 702. Messages sent between the UE 701 and the core network may be referred to as NAS messages. In an example, a NAS message may be relayed by the gNB 702, but the content of the NAS message (e.g., information elements of the NAS message) may not be visible to the gNB 702.

FIG. 7C illustrates an example of services provided between protocol layers of the NR user plane protocol stack illustrated in FIG. 7A. The UE 701 may receive services through a PDU session, which may be a logical connection between the UE 701 and a data network (DN). The UE 701 and the DN may exchange data packets associated with the PDU session. The PDU session may comprise one or more quality of service (QoS) flows. SDAP 771 and SDAP 772 may perform mapping and/or demapping between the one or more QoS flows of the PDU session and one or more radio bearers (e.g., data radio bearers). The mapping between the QoS flows and the data radio bearers may be determined in the SOAP 772 by the gNB 702, and the UE 701 may be notified of the mapping (e.g., based on control signaling and/or reflective mapping). For reflective mapping, the SOAP 772 of the gNB 220 may mark downlink packets with a QoS flow indicator (QFI) and deliver the downlink packets to the UE 701. The UE 701 may determine the mapping based on the QFI of the downlink packets.

PDCP 761 and PDCP 762 may perform header compression and/or decompression. Header compression may reduce the amount of data transmitted over the physical layer. The PDCP 761 and PDCP 762 may perform ciphering and/or deciphering. Ciphering may reduce unauthorized decoding of data transmitted over the physical layer (e.g., intercepted on an air interface), and protect data integrity (e.g., to ensure control messages originate from intended sources). The PDCP 761 and PDCP 762 may perform retransmissions of undelivered packets, in-sequence delivery and reordering of packets, duplication of packets, and/or identification and removal of duplicate packets. In a dual connectivity scenario, PDCP 761 and PDCP 762 may perform mapping between a split radio bearer and RLC channels.

RLC 751 and RLC 752 may perform segmentation, retransmission through Automatic Repeat Request (ARQ). The RLC 751 and RLC 752 may perform removal of duplicate data units received from MAC 741 and MAC 742, respectively. The RLCs 213 and 223 may provide RLC channels as a service to PDCPs 214 and 224, respectively.

MAC 741 and MAC 742 may perform multiplexing and/or demultiplexing of logical channels. MAC 741 and MAC 742 may map logical channels to transport channels. In an example, UE 701 may, in MAC 741, multiplex data units of one or more logical channels into a transport block. The UE 701 may transmit the transport block to the gNB 702 using PHY 731. The gNB 702 may receive the transport block using PHY 732 and demultiplex data units of the transport blocks back into logical channels. MAC 741 and MAC 742 may perform error correction through Hybrid Automatic Repeat Request (HARQ), logical channel prioritization, and/or padding.

PHY 731 and PHY 732 may perform mapping of transport channels to physical channels. PHY 731 and PHY 732 may perform digital and analog signal processing functions (e.g., coding/decoding and modulation/demodulation) for sending and receiving information (e.g., transmission via an air interface). PHY 731 and PHY 732 may perform multi-antenna mapping.

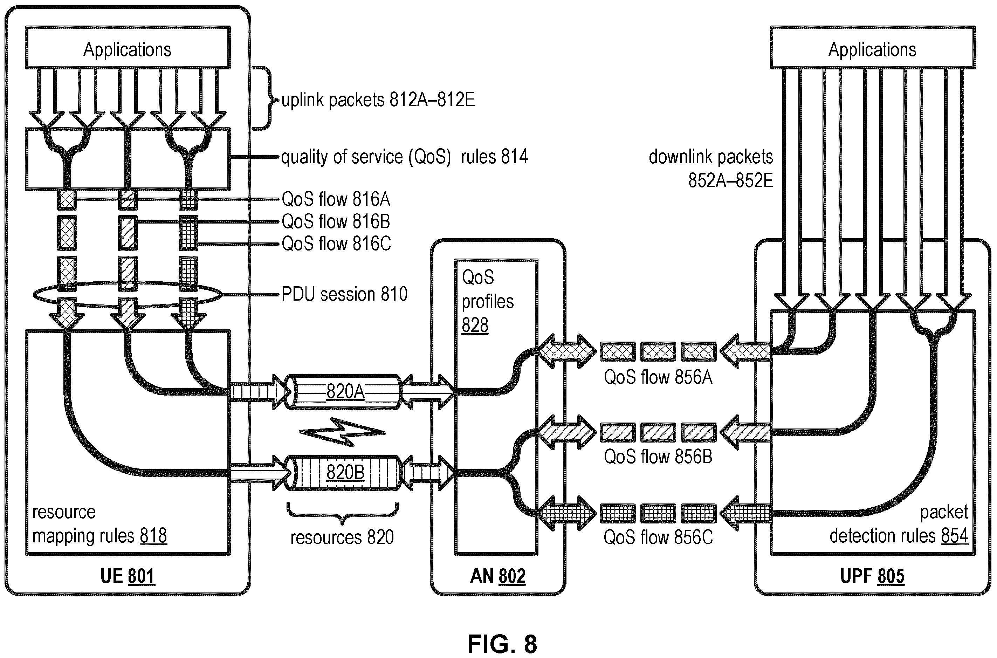

FIG. 8 illustrates an example of a quality of service (QoS) model for differentiated data exchange. In the QoS model of FIG. 8, there are a UE 801, a AN 802, and a UPF 805. The QoS model facilitates prioritization of certain packet or protocol data units (PDUs), also referred to as packets. For example, higher-priority packets may be exchanged faster and/or more reliably than lower-priority packets. The network may devote more resources to exchange of high-QoS packets.

In the example of FIG. 8, a PDU session 810 is established between UE 801 and UPF 805. The PDU session 810 may be a logical connection enabling the UE 801 to exchange data with a particular data network (for example, the Internet). The UE 801 may request establishment of the PDU session 810. At the time that the PDU session 810 is established, the UE 801 may, for example, identify the targeted data network based on its data network name (DNN). The PDU session 810 may be managed, for example, by a session management function (SMF, not shown). In order to facilitate exchange of data associated with the PDU session 810, between the UE 801 and the data network, the SMF may select the UPF 805 (and optionally, one or more other UPFs, not shown).

One or more applications associated with UE 801 may generate uplink packets 812A-812E associated with the PDU session 810. In order to work within the QoS model, UE 801 may apply QoS rules 814 to uplink packets 812A-812E. The QoS rules 814 may be associated with PDU session 810 and may be determined and/or provided to the UE 801 when PDU session 810 is established and/or modified. Based on QoS rules 814, UE 801 may classify uplink packets 812A-812E, map each of the uplink packets 812A-812E to a QoS flow, and/or mark uplink packets 812A-812E with a QoS flow indicator (QFI). As a packet travels through the network, and potentially mixes with other packets from other UEs having potentially different priorities, the QFI indicates how the packet should be handled in accordance with the QoS model. In the present illustration, uplink packets 812A, 812B are mapped to QoS flow 816A, uplink packet 812C is mapped to QoS flow 816B, and the remaining packets are mapped to QoS flow 816C.

The QoS flows may be the finest granularity of QoS differentiation in a PDU session. In the figure, three QoS flows 816A-816C are illustrated. However, it will be understood that there may be any number of QoS flows. Some QoS flows may be associated with a guaranteed bit rate (GBR QoS flows) and others may have bit rates that are not guaranteed (non-GBR QoS flows). QoS flows may also be subject to per-UE and per-session aggregate bit rates. One of the QoS flows may be a default QoS flow. The QoS flows may have different priorities. For example, QoS flow 816A may have a higher priority than QoS flow 816B, which may have a higher priority than QoS flow 816C. Different priorities may be reflected by different QoS flow characteristics. For example, QoS flows may be associated with flow bit rates. A particular QoS flow may be associated with a guaranteed flow bit rate (GFBR) and/or a maximum flow bit rate (MFBR). QoS flows may be associated with specific packet delay budgets (PDBs), packet error rates (PERs), and/or maximum packet loss rates. QoS flows may also be subject to per-UE and per-session aggregate bit rates.

In order to work within the QoS model, UE 801 may apply resource mapping rules 818 to the QoS flows 816A-816C. The air interface between UE 801 and AN 802 may be associated with resources 820. In the present illustration, QoS flow 816A is mapped to resource 820A, whereas QoS flows 816B, 816C are mapped to resource 820B. The resource mapping rules 818 may be provided by the AN 802. In order to meet QoS requirements, the resource mapping rules 818 may designate more resources for relatively high-priority QoS flows. With more resources, a high-priority QoS flow such as QoS flow 816A may be more likely to obtain the high flow bit rate, low packet delay budget, or other characteristic associated with QoS rules 814. The resources 820 may comprise, for example, radio bearers. The radio bearers (e.g., data radio bearers) may be established between the UE 801 and the AN 802. The radio bearers in 5G, between the UE 801 and the AN 802, may be distinct from bearers in LTE, for example, Evolved Packet System (EPS) bearers between a UE and a packet data network gateway (PGW), S1 bearers between an eNB and a serving gateway (SGW), and/or an S5/S8 bearer between an SGW and a PGW.

Once a packet associated with a particular QoS flow is received at AN 802 via resource 820A or resource 820B, AN 802 may separate packets into respective QoS flows 856A-856C based on QoS profiles 828. The QoS profiles 828 may be received from an SMF. Each QoS profile may correspond to a QFI, for example, the QFI marked on the uplink packets 812A-812E. Each QoS profile may include QoS parameters such as 5G QoS identifier (5QI) and an allocation and retention priority (ARP). The QoS profile for non-GBR QoS flows may further include additional QoS parameters such as a reflective QoS attribute (RQA).The QoS profile for GBR QoS flows may further include additional QoS parameters such as a guaranteed flow bit rate (GFBR), a maximum flow bit rate (MFBR), and/or a maximum packet loss rate. The 5QI may be a standardized 5QI which has one-to-one mapping to a standardized combination of 5G QoS characteristics per well-known services. The 5QI may be a dynamically assigned 5QI which the standardized 5QI values are not defined. The 5QI may represent 5G QoS characteristics. The 5QI may comprise a resource type, a default priority level, a packet delay budget (PDB), a packet error rate (PER), a maximum data burst volume, and/or an averaging window. The resource type may indicate a non-GBR QoS flow, a GBR QoS flow or a delay-critical GBR QoS flow. The averaging window may represent a duration over which the GFBR and/or MFBR is calculated. ARP may be a priority level comprising pre-emption capability and a pre-emption vulnerability. Based on the ARP, the AN 802 may apply admission control for the QoS flows in a case of resource limitations.

The AN 802 may select one or more N3 tunnels 850 for transmission of the QoS flows 856A-856C. After the packets are divided into QoS flows 856A-856C, the packet may be sent to UPF 805 (e.g., towards a DN) via the selected one or more N3 tunnels 850. The UPF 805 may verify that the QFIs of the uplink packets 812A-812E are aligned with the QoS rules 814 provided to the UE 801. The UPF 805 may measure and/or count packets and/or provide packet metrics to, for example, a PCF.

The figure also illustrates a process for downlink. In particular, one or more applications may generate downlink packets 852A-852E. The UPF 805 may receive downlink packets 852A-852E from one or more DNs and/or one or more other UPFs. As per the QoS model, UPF 805 may apply packet detection rules (PDRs) 854 to downlink packets 852A-852E. Based on PDRs 854, UPF 805 may map packets 852A-852E into QoS flows. In the present illustration, downlink packets 852A, 852B are mapped to QoS flow 856A, downlink packet 852C is mapped to QoS flow 856B, and the remaining packets are mapped to QoS flow 856C.

The QoS flows 856A-856C may be sent to AN 802. The AN 802 may apply resource mapping rules to the QoS flows 856A-856C. In the present illustration, QoS flow 856A is mapped to resource 820A, whereas QoS flows 856B, 856C are mapped to resource 820B. In order to meet QoS requirements, the resource mapping rules may designate more resources to high-priority QoS flows.

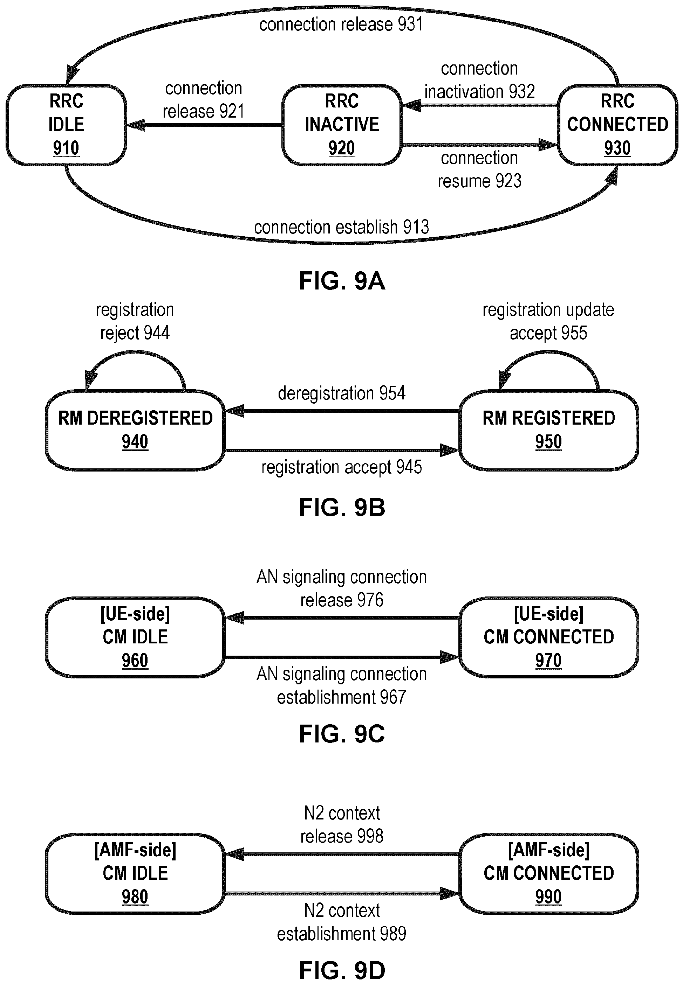

FIGS. 9A- 9D illustrate example states and state transitions of a wireless device (e.g., a UE). At any given time, the wireless device may have a radio resource control (RRC) state, a registration management (RM) state, and a connection management (CM) state.

FIG. 9A is an example diagram showing RRC state transitions of a wireless device (e.g., a UE). The UE may be in one of three RRC states: RRC idle 910, (e.g., RRC _IDLE), RRC inactive 920 (e.g., RRC _INACTIVE), or RRC connected 930 (e.g., RRC _CONNECTED). The UE may implement different RAN-related control-plane procedures depending on its RRC state. Other elements of the network, for example, a base station, may track the RRC state of one or more UEs and implement RAN-related control-plane procedures appropriate to the RRC state of each.

In RRC connected 930, it may be possible for the UE to exchange data with the network (for example, the base station). The parameters necessary for exchange of data may be established and known to both the UE and the network. The parameters may be referred to and/or included in an RRC context of the UE (sometimes referred to as a UE context). These parameters may include, for example: one or more AS contexts; one or more radio link configuration parameters; bearer configuration information (e.g., relating to a data radio bearer, signaling radio bearer, logical channel, QoS flow, and/or PDU session); security information; and/or PHY, MAC, RLC, PDCP, and/or SOAP layer configuration information. The base station with which the UE is connected may store the RRC context of the UE.

While in RRC connected 930, mobility of the UE may be managed by the access network, whereas the UE itself may manage mobility while in RRC idle 910 and/or RRC inactive 920. While in RRC connected 930, the UE may manage mobility by measuring signal levels (e.g., reference signal levels) from a serving cell and neighboring cells and reporting these measurements to the base station currently serving the UE. The network may initiate handover based on the reported measurements. The RRC state may transition from RRC connected 930 to RRC idle 910 through a connection release procedure 930 or to RRC inactive 920 through a connection inactivation procedure 932.

In RRC idle 910, an RRC context may not be established for the UE. In RRC idle 910, the UE may not have an RRC connection with a base station. While in RRC idle 910, the UE may be in a sleep state for a majority of the time (e.g., to conserve battery power). The UE may wake up periodically (e.g., once in every discontinuous reception cycle) to monitor for paging messages from the access network. Mobility of the UE may be managed by the UE through a procedure known as cell reselection. The RRC state may transition from RRC idle 910 to RRC connected 930 through a connection establishment procedure 913, which may involve a random access procedure, as discussed in greater detail below.

In RRC inactive 920, the RRC context previously established is maintained in the UE and the base station. This may allow for a fast transition to RRC connected 930 with reduced signaling overhead as compared to the transition from RRC idle 910 to RRC connected 930. The RRC state may transition to RRC connected 930 through a connection resume procedure 923. The RRC state may transition to RRC idle 910 though a connection release procedure 921 that may be the same as or similar to connection release procedure 931.

An RRC state may be associated with a mobility management mechanism. In RRC idle 910 and RRC inactive 920, mobility may be managed by the UE through cell reselection. The purpose of mobility management in RRC idle 910 and/or RRC inactive 920 is to allow the network to be able to notify the UE of an event via a paging message without having to broadcast the paging message over the entire mobile communications network. The mobility management mechanism used in RRC idle 910 and/or RRC inactive 920 may allow the network to track the UE on a cell-group level so that the paging message may be broadcast over the cells of the cell group that the UE currently resides within instead of the entire communication network. Tracking may be based on different granularities of grouping. For example, there may be three levels of cell-grouping granularity: individual cells; cells within a RAN area identified by a RAN area identifier (RAI); and cells within a group of RAN areas, referred to as a tracking area and identified by a tracking area identifier (TAI).

Tracking areas may be used to track the UE at the CN level. The CN may provide the UE with a list of TAIs associated with a UE registration area. If the UE moves, through cell reselection, to a cell associated with a TAI not included in the list of TAIs associated with the UE registration area, the UE may perform a registration update with the CN to allow the CN to update the UE's location and provide the UE with a new the UE registration area.

RAN areas may be used to track the UE at the RAN level. For a UE in RRC inactive 920 state, the UE may be assigned a RAN notification area. A RAN notification area may comprise one or more cell identities, a list of RAIs, and/or a list of TAIs. In an example, a base station may belong to one or more RAN notification areas. In an example, a cell may belong to one or more RAN notification areas. If the UE moves, through cell reselection, to a cell not included in the RAN notification area assigned to the UE, the UE may perform a notification area update with the RAN to update the UE's RAN notification area.

A base station storing an RRC context for a UE or a last serving base station of the UE may be referred to as an anchor base station. An anchor base station may maintain an RRC context for the UE at least during a period of time that the UE stays in a RAN notification area of the anchor base station and/or during a period of time that the UE stays in RRC inactive 920.

FIG. 9B is an example diagram showing registration management (RM) state transitions of a wireless device (e.g., a UE). The states are RM deregistered 940, (e.g., RM-DEREGISTERED) and RM registered 950 (e.g., RM-REGISTERED).

In RM deregistered 940, the UE is not registered with the network, and the UE is not reachable by the network. In order to be reachable by the network, the UE must perform an initial registration. As an example, the UE may register with an AMF of the network. If registration is rejected (registration reject 944), then the UE remains in RM deregistered 940. If registration is accepted (registration accept 945), then the UE transitions to RM registered 950. While the UE is RM registered 950, the network may store, keep, and/or maintain a UE context for the UE. The UE context may be referred to as wireless device context. The UE context corresponding to network registration (maintained by the core network) may be different from the RRC context corresponding to RRC state (maintained by an access network, .e.g., a base station). The UE context may comprise a UE identifier and a record of various information relating to the UE, for example, UE capability information, policy information for access and mobility management of the UE, lists of allowed or established slices or PDU sessions, and/or a registration area of the UE (i.e., a list of tracking areas covering the geographical area where the wireless device is likely to be found).

While the UE is RM registered 950, the network may store the UE context of the UE, and if necessary, use the UE context to reach the UE. Moreover, some services may not be provided by the network unless the UE is registered. The UE may update its UE context while remaining in RM registered 950 (registration update accept 955). For example, if the UE leaves one tracking area and enters another tracking area, the UE may provide a tracking area identifier to the network. The network may deregister the UE, or the UE may deregister itself (deregistration 954). For example, the network may automatically deregister the wireless device if the wireless device is inactive for a certain amount of time. Upon deregistration, the UE may transition to RM deregistered 940.

FIG. 9C is an example diagram showing connection management (CM) state transitions of a wireless device (e.g., a UE), shown from a perspective of the wireless device. The UE may be in CM idle 960 (e.g., CM-IDLE) or CM connected 970 (e.g., CM-CONNECTED).

In CM idle 960, the UE does not have a non access stratum (NAS) signaling connection with the network. As a result, the UE cannot communicate with core network functions. The UE may transition to CM connected 970 by establishing an AN signaling connection (AN signaling connection establishment 967). This transition may be initiated by sending an initial NAS message. The initial NAS message may be a registration request (e.g., if the UE is RM deregistered 940) or a service request (e.g., if the UE is RM registered 950). If the UE is RM registered 950, then the UE may initiate the AN signaling connection establishment by sending a service request, or the network may send a page, thereby triggering the UE to send the service request.

In CM connected 970, the UE can communicate with core network functions using NAS signaling. As an example, the UE may exchange NAS signaling with an AMF for registration management purposes, service request procedures, and/or authentication procedures. As another example, the UE may exchange NAS signaling, with an SMF, to establish and/or modify a PDU session. The network may disconnect the UE, or the UE may disconnect itself (AN signaling connection release 976). For example, if the UE transitions to RM deregistered 940, then the UE may also transition to CM idle 960. When the UE transitions to CM idle 960, the network may deactivate a user plane connection of a PDU session of the UE.

FIG. 9D is an example diagram showing CM state transitions of the wireless device (e.g., a UE), shown from a network perspective (e.g., an AMF). The CM state of the UE, as tracked by the AMF, may be in CM idle 980 (e.g., CM-IDLE) or CM connected 990 (e.g., CM-CONNECTED). When the UE transitions from CM idle 980 to CM connected 990, the AMF many establish an N2 context of the UE (N2 context establishment 989). When the UE transitions from CM connected 990 to CM idle 980, the AMF may release the N2 context of the UE (N2 context release 998).

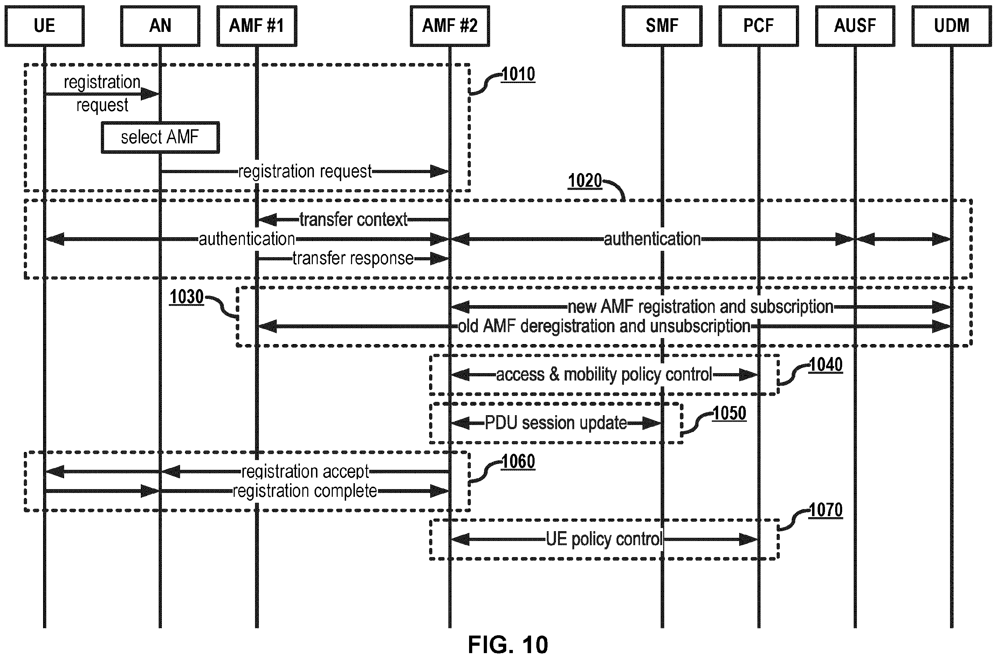

FIGS. 10- 12 illustrate example procedures for registering, service request, and PDU session establishment of a UE.

FIG. 10 illustrates an example of a registration procedure for a wireless device (e.g., a UE). Based on the registration procedure, the UE may transition from, for example, RM deregistered 940 to RM registered 950.

Registration may be initiated by a UE for the purposes of obtaining authorization to receive services, enabling mobility tracking, enabling reachability, or other purposes. The UE may perform an initial registration as a first step toward connection to the network (for example, if the UE is powered on, airplane mode is turned off, etc.). Registration may also be performed periodically to keep the network informed of the UE's presence (for example, while in CM-IDLE state), or in response to a change in UE capability or registration area. Deregistration (not shown in FIG. 10) may be performed to stop network access.

At 1010, the UE transmits a registration request to an AN. As an example, the UE may have moved from a coverage area of a previous AMF (illustrated as AMF#1) into a coverage area of a new AMF (illustrated as AMF#2). The registration request may be a NAS message. The registration request may include a UE identifier. The AN may select an AMF for registration of the UE. For example, the AN may select a default AMF. For example, the AN may select an AMF that is already mapped to the UE (e.g., a previous AMF). The NAS registration request may include a network slice identifier and the AN may select an AMF based on the requested slice. After the AMF is selected, the AN may send the registration request to the selected AMF.

At 1020, the AMF that receives the registration request (AMF#2) performs a context transfer. The context may be a UE context, for example, an RRC context for the UE. As an example, AMF#2 may send AMF#1 a message requesting a context of the UE. The message may include the UE identifier. The message may be a Namf_ Communication_ UEContextTransfer message. AMF#1 may send to AMF#2 a message that includes the requested UE context. This message may be a Namf_ Communication_ UEContextTransfer message. After the UE context is received, the AMF#2 may coordinate authentication of the UE. After authentication is complete, AMF#2 may send to AMF#1 a message indicating that the UE context transfer is complete. This message may be a Namf_ Communication_ UEContextTransfer Response message.

Authentication may require participation of the UE, an AUSF, a UDM and/or a UDR (not shown). For example, the AMF may request that the AUSF authenticate the UE. For example, the AUSF may execute authentication of the UE. For example, the AUSF may get authentication data from UDM. For example, the AUSF may send a subscription permanent identifier (SUPI) to the AMF based on the authentication being successful. For example, the AUSF may provide an intermediate key to the AMF. The intermediate key may be used to derive an access-specific security key for the UE, enabling the AMF to perform security context management (SCM). The AUSF may obtain subscription data from the UDM. The subscription data may be based on information obtained from the UDM (and/or the UDR). The subscription data may include subscription identifiers, security credentials, access and mobility related subscription data and/or session related data.

At 1030, the new AMF, AMF#2, registers and/or subscribes with the UDM. AMF#2 may perform registration using a UE context management service of the UDM (Nudm_ UECM). AMF#2 may obtain subscription information of the UE using a subscriber data management service of the UDM (Nudm_ SDM). AMF#2 may further request that the UDM notify AMF#2 if the subscription information of the UE changes. As the new AMF registers and subscribes, the old AMF, AMF#1, may deregister and unsubscribe. After deregistration, AMF#1 is free of responsibility for mobility management of the UE.

At 1040, AMF#2 retrieves access and mobility (AM) policies from the PCF. As an example, the AMF#2 may provide subscription data of the UE to the PCF. The PCF may determine access and mobility policies for the UE based on the subscription data, network operator data, current network conditions, and/or other suitable information. For example, the owner of a first UE may purchase a higher level of service than the owner of a second UE. The PCF may provide the rules associated with the different levels of service. Based on the subscription data of the respective UEs, the network may apply different policies which facilitate different levels of service.

For example, access and mobility policies may relate to service area restrictions, RAT/ frequency selection priority (RFSP, where RAT stands for radio access technology), authorization and prioritization of access type (e.g., LTE versus NR), and/or selection of non-3GPP access (e.g., Access Network Discovery and Selection Policy (ANDSP)). The service area restrictions may comprise a list of tracking areas where the UE is allowed to be served (or forbidden from being served). The access and mobility policies may include a UE route selection policy (URSP)) that influences routing to an established PDU session or a new PDU session. As noted above, different policies may be obtained and/or enforced based on subscription data of the UE, location of the UE (i.e., location of the AN and/or AMF), or other suitable factors.

At 1050, AMF#2 may update a context of a PDU session. For example, if the UE has an existing PDU session, the AMF#2 may coordinate with an SMF to activate a user plane connection associated with the existing PDU session. The SMF may update and/or release a session management context of the PDU session (Nsmf_PDUSession_UpdateSMContext, Nsmf_ PDUSession_ ReleaseSMContext).

At 1060, AMF#2 sends a registration accept message to the AN, which forwards the registration accept message to the UE. The registration accept message may include a new UE identifier and/or a new configured slice identifier. The UE may transmit a registration complete message to the AN, which forwards the registration complete message to the AMF#2. The registration complete message may acknowledge receipt of the new UE identifier and/or new configured slice identifier.

At 1070, AMF#2 may obtain UE policy control information from the PCF. The PCF may provide an access network discovery and selection policy (ANDSP) to facilitate non-3GPP access. The PCF may provide a UE route selection policy (URSP) to facilitate mapping of particular data traffic to particular PDU session connectivity parameters. As an example, the URSP may indicate that data traffic associated with a particular application should be mapped to a particular SSC mode, network slice, PDU session type, or preferred access type (3GPP or non-3GPP).

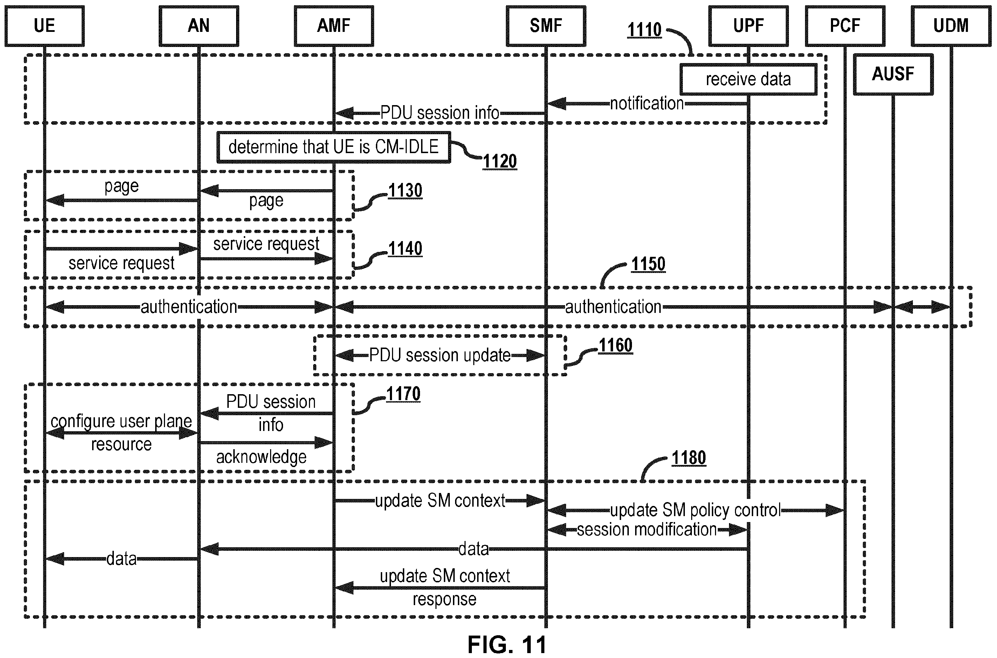

FIG. 11 illustrates an example of a service request procedure for a wireless device (e.g., a UE). The service request procedure depicted in FIG. 11 is a network-triggered service request procedure for a UE in a CM-IDLE state. However, other service request procedures (e.g., a UE-triggered service request procedure) may also be understood by reference to FIG. 11, as will be discussed in greater detail below.

At 1110, a UPF receives data. The data may be downlink data for transmission to a UE. The data may be associated with an existing PDU session between the UE and a DN. The data may be received, for example, from a DN and/or another UPF. The UPF may buffer the received data. In response to the receiving of the data, the UPF may notify an SMF of the received data. The identity of the SMF to be notified may be determined based on the received data. The notification may be, for example, an N4 session report. The notification may indicate that the UPF has received data associated with the UE and/or a particular PDU session associated with the UE. In response to receiving the notification, the SMF may send PDU session information to an AMF. The PDU session information may be sent in an N1N2 message transfer for forwarding to an AN. The PDU session information may include, for example, UPF tunnel endpoint information and/or QoS information.

At 1120, the AMF determines that the UE is in a CM-IDLE state. The determining at 1120 may be in response to the receiving of the PDU session information. Based on the determination that the UE is CM-IDLE, the service request procedure may proceed to 1130 and 1140, as depicted in FIG. 11. However, if the UE is not CM-IDLE (e.g., the UE is CM-CONNECTED), then 1130 and 1140 may be skipped, and the service request procedure may proceed directly to 1150.

At 1130, the AMF pages the UE. The paging at 1130 may be performed based on the UE being CM-IDLE. To perform the paging, the AMF may send a page to the AN. The page may be referred to as a paging or a paging message. The page may be an N2 request message. The AN may be one of a plurality of ANs in a RAN notification area of the UE. The AN may send a page to the UE. The UE may be in a coverage area of the AN and may receive the page.

At 1140, the UE may request service. The UE may transmit a service request to the AMF via the AN. As depicted in FIG. 11, the UE may request service at 1140 in response to receiving the paging at 1130. However, as noted above, this is for the specific case of a network-triggered service request procedure. In some scenarios (for example, if uplink data becomes available at the UE), then the UE may commence a UE-triggered service request procedure. The UE-triggered service request procedure may commence starting at 1140.

At 1150, the network may authenticate the UE. Authentication may require participation of the UE, an AUSF, and/or a UDM, for example, similar to authentication described elsewhere in the present disclosure. In some cases (for example, if the UE has recently been authenticated), the authentication at 1150 may be skipped.

At 1160, the AMF and SMF may perform a PDU session update. As part of the PDU session update, the SMF may provide the AMF with one or more UPF tunnel endpoint identifiers. In some cases (not shown in FIG. 11), it may be necessary for the SMF to coordinate with one or more other SMFs and/or one or more other UPFs to set up a user plane.

At 1170, the AMF may send PDU session information to the AN. The PDU session information may be included in an N2 request message. Based on the PDU session information, the AN may configure a user plane resource for the UE. To configure the user plane resource, the AN may, for example, perform an RRC reconfiguration of the UE. The AN may acknowledge to the AMF that the PDU session information has been received. The AN may notify the AMF that the user plane resource has been configured, and/or provide information relating to the user plane resource configuration.

In the case of a UE-triggered service request procedure, the UE may receive, at 1170, a NAS service accept message from the AMF via the AN. After the user plane resource is configured, the UE may transmit uplink data (for example, the uplink data that caused the UE to trigger the service request procedure).

At 1180, the AMF may update a session management (SM) context of the PDU session. For example, the AMF may notify the SMF (and/or one or more other associated SMFs) that the user plane resource has been configured, and/or provide information relating to the user plane resource configuration. The AMF may provide the SMF (and/or one or more other associated SMFs) with one or more AN tunnel endpoint identifiers of the AN. After the SM context update is complete, the SMF may send an update SM context response message to the AMF.

Based on the update of the session management context, the SMF may update a PCF for purposes of policy control. For example, if a location of the UE has changed, the SMF may notify the PCF of the UE's a new location.

Based on the update of the session management context, the SMF and UPF may perform a session modification. The session modification may be performed using N4 session modification messages. After the session modification is complete, the UPF may transmit downlink data (for example, the downlink data that caused the UPF to trigger the network-triggered service request procedure) to the UE. The transmitting of the downlink data may be based on the one or more AN tunnel endpoint identifiers of the AN.

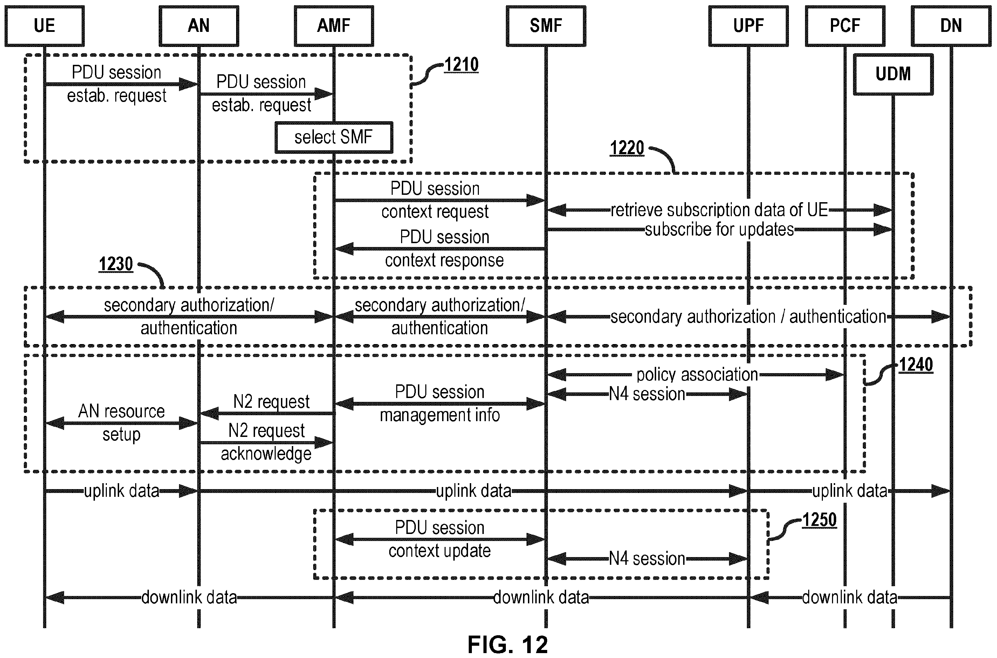

FIG. 12 illustrates an example of a protocol data unit (PDU) session establishment procedure for a wireless device (e.g., a UE). The UE may determine to transmit the PDU session establishment request to create a new PDU session, to hand over an existing PDU session to a 3GPP network, or for any other suitable reason.

At 1210, the UE initiates PDU session establishment. The UE may transmit a PDU session establishment request to an AMF via an AN. The PDU session establishment request may be a NAS message. The PDU session establishment request may indicate: a PDU session ID; a requested PDU session type (new or existing); a requested DN (DNN); a requested network slice (S-NSSAI); a requested SSC mode; and/or any other suitable information. The PDU session ID may be generated by the UE. The PDU session type may be, for example, an Internet Protocol (IP)-based type (e.g., IPv4, IPv6, or dual stack IPv4/IPv6), an Ethernet type, or an unstructured type.

The AMF may select an SMF based on the PDU session establishment request. In some scenarios, the requested PDU session may already be associated with a particular SMF. For example, the AMF may store a UE context of the UE, and the UE context may indicate that the PDU session ID of the requested PDU session is already associated with the particular SMF. In some scenarios, the AMF may select the SMF based on a determination that the SMF is prepared to handle the requested PDU session. For example, the requested PDU session may be associated with a particular DNN and/or S-NSSAI, and the SMF may be selected based on a determination that the SMF can manage a PDU session associated with the particular DNN and/or S-NSSAI.

At 1220, the network manages a context of the PDU session. After selecting the SMF at 1210, the AMF sends a PDU session context request to the SMF. The PDU session context request may include the PDU session establishment request received from the UE at 1210. The PDU session context request may be a Nsmf_PDUSession_CreateSMContext Request and/or a Nsmf_PDUSession_UpdateSMContext Request. The PDU session context request may indicate identifiers of the UE; the requested DN; and/or the requested network slice. Based on the PDU session context request, the SMF may retrieve subscription data from a UDM. The subscription data may be session management subscription data of the UE. The SMF may subscribe for updates to the subscription data, so that the PCF will send new information if the subscription data of the UE changes. After the subscription data of the UE is obtained, the SMF may transmit a PDU session context response to the AMG. The PDU session context response may be a Nsmf_PDUSession_CreateSMContext Response and/or a Nsmf_PDUSession_UpdateSMContext Response. The PDU session context response may include a session management context ID.

At 1230, secondary authorization/authentication may be performed, if necessary. The secondary authorization/authentication may involve the UE, the AMF, the SMF, and the DN. The SMF may access the DN via a Data Network Authentication, Authorization and Accounting (DN AAA) server.

At 1240, the network sets up a data path for uplink data associated with the PDU session. The SMF may select a PCF and establish a session management policy association. Based on the association, the PCF may provide an initial set of policy control and charging rules (PCC rules) for the PDU session. When targeting a particular PDU session, the PCF may indicate, to the SMF, a method for allocating an IP address to the PDU Session, a default charging method for the PDU session, an address of the corresponding charging entity, triggers for requesting new policies, etc. The PCF may also target a service data flow (SDF) comprising one or more PDU sessions. When targeting an SDF, the PCF may indicate, to the SMF, policies for applying QoS requirements, monitoring traffic (e.g., for charging purposes), and/or steering traffic (e.g., by using one or more particular N6 interfaces).

The SMF may determine and/or allocate an IP address for the PDU session. The SMF may select one or more UPFs (a single UPF in the example of FIG. 12) to handle the PDU session. The SMF may send an N4 session message to the selected UPF. The N4 session message may be an N4 Session Establishment Request and/or an N4 Session Modification Request. The N4 session message may include packet detection, enforcement, and reporting rules associated with the PDU session. In response, the UPF may acknowledge by sending an N4 session establishment response and/or an N4 session modification response.

The SMF may send PDU session management information to the AMF. The PDU session management information may be a session service request (e.g., Namf_Communication_N1N2MessageTransfer) message. The PDU session management information may include the PDU session ID. The PDU session management information may be a NAS message. The PDU session management information may include N1 session management information and/or N2 session management information. The N1 session management information may include a PDU session establishment accept message. The PDU session establishment accept message may include tunneling endpoint information of the UPF and quality of service (QoS) information associated with the PDU session.

The AMF may send an N2 request to the AN. The N2 request may include the PDU session establishment accept message. Based on the N2 request, the AN may determine AN resources for the UE. The AN resources may be used by the UE to establish the PDU session, via the AN, with the DN. The AN may determine resources to be used for the PDU session and indicate the determined resources to the UE. The AN may send the PDU session establishment accept message to the UE. For example, the AN may perform an RRC reconfiguration of the UE. After the AN resources are set up, the AN may send an N2 request acknowledge to the AMF. The N2 request acknowledge may include N2 session management information, for example, the PDU session ID and tunneling endpoint information of the AN.

After the data path for uplink data is set up at 1240, the UE may optionally send uplink data associated with the PDU session. As shown in FIG. 12, the uplink data may be sent to a DN associated with the PDU session via the AN and the UPF.

At 1250, the network may update the PDU session context. The AMF may transmit a PDU session context update request to the SMF. The PDU session context update request may be a Nsmf_PDUSession_UpdateSMContext Request. The PDU session context update request may include the N2 session management information received from the AN. The SMF may acknowledge the PDU session context update. The acknowledgement may be a Nsmf_PDUSession_UpdateSMContext Response. The acknowledgement may include a subscription requesting that the SMF be notified of any UE mobility event. Based on the PDU session context update request, the SMF may send an N4 session message to the UPF. The N4 session message may be an N4 Session Modification Request. The N4 session message may include tunneling endpoint information of the AN. The N4 session message may include forwarding rules associated with the PDU session. In response, the UPF may acknowledge by sending an N4 session modification response.

After the UPF receives the tunneling endpoint information of the AN, the UPF may relay downlink data associated with the PDU session. As shown in FIG. 12, the downlink data may be received from a DN associated with the PDU session via the AN and the UPF.

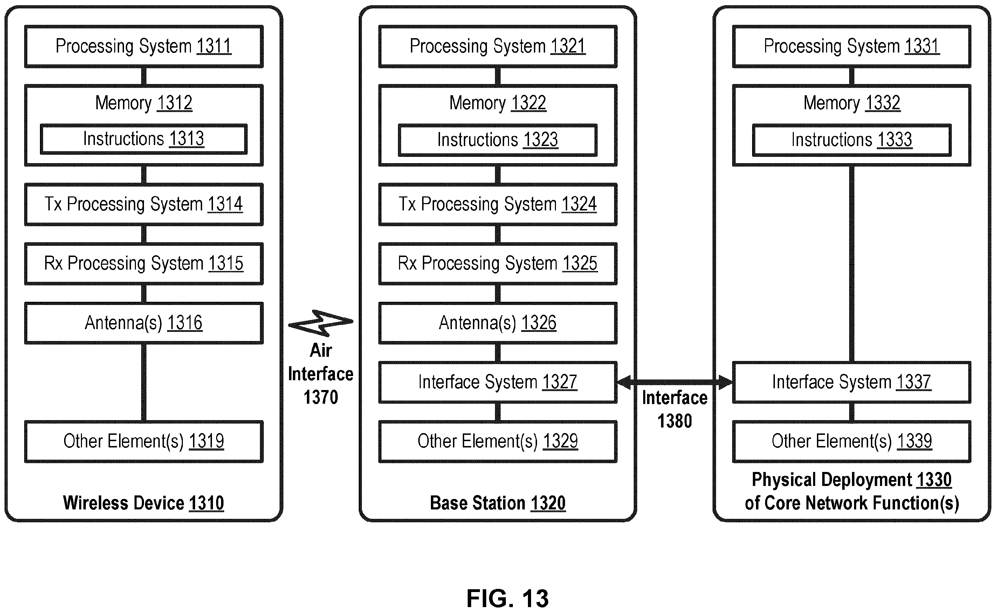

FIG. 13 illustrates examples of components of the elements in a communications network. FIG. 13 includes a wireless device 1310, a base station 1320, and a physical deployment of one or more network functions 1330 (henceforth "deployment 1330"). Any wireless device described in the present disclosure may have similar components and may be implemented in a similar manner as the wireless device 1310. Any other base station described in the present disclosure (or any portion thereof, depending on the architecture of the base station) may have similar components and may be implemented in a similar manner as the base station 1320. Any physical core network deployment in the present disclosure (or any portion thereof, depending on the architecture of the base station) may have similar components and may be implemented in a similar manner as the deployment 1330.

The wireless device 1310 may communicate with base station 1320 over an air interface 1370. The communication direction from wireless device 1310 to base station 1320 over air interface 1370 is known as uplink, and the communication direction from base station 1320 to wireless device 1310 over air interface 1370 is known as downlink. Downlink transmissions may be separated from uplink transmissions using FDD, TDD, and/or some combination of duplexing techniques. FIG. 13 shows a single wireless device 1310 and a single base station 1320, but it will be understood that wireless device 1310 may communicate with any number of base stations or other access network components over air interface 1370, and that base station 1320 may communicate with any number of wireless devices over air interface 1370.

The wireless device 1310 may comprise a processing system 1311 and a memory 1312. The memory 1312 may comprise one or more computer-readable media, for example, one or more non-transitory computer readable media. The memory 1312 may include instructions 1313. The processing system 1311 may process and/or execute instructions 1313. Processing and/or execution of instructions 1313 may cause wireless device 1310 and/or processing system 1311 to perform one or more functions or activities. The memory 1312 may include data (not shown). One of the functions or activities performed by processing system 1311 may be to store data in memory 1312 and/or retrieve previously-stored data from memory 1312. In an example, downlink data received from base station 1320 may be stored in memory 1312, and uplink data for transmission to base station 1320 may be retrieved from memory 1312. As illustrated in FIG. 13, the wireless device 1310 may communicate with base station 1320 using a transmission processing system 1314 and/or a reception processing system 1315. Alternatively, transmission processing system 1314 and reception processing system 1315 may be implemented as a single processing system, or both may be omitted and all processing in the wireless device 1310 may be performed by the processing system 1311. Although not shown in FIG. 13, transmission processing system 1314 and/or reception processing system 1315 may be coupled to a dedicated memory that is analogous to but separate from memory 1312, and comprises instructions that may be processed and/or executed to carry out one or more of their respective functionalities. The wireless device 1310 may comprise one or more antennas 1316 to access air interface 1370.

The wireless device 1310 may comprise one or more other elements 1319. The one or more other elements 1319 may comprise software and/or hardware that provide features and/or functionalities, for example, a speaker, a microphone, a keypad, a display, a touchpad, a satellite transceiver, a universal serial bus (USB) port, a hands-free headset, a frequency modulated (FM) radio unit, a media player, an Internet browser, an electronic control unit (e.g., for a motor vehicle), and/or one or more sensors (e.g., an accelerometer, a gyroscope, a temperature sensor, a radar sensor, a lidar sensor, an ultrasonic sensor, a light sensor, a camera, a global positioning sensor (GPS) and/or the like). The wireless device 1310 may receive user input data from and/or provide user output data to the one or more one or more other elements 1319. The one or more other elements 1319 may comprise a power source. The wireless device 1310 may receive power from the power source and may be configured to distribute the power to the other components in wireless device 1310. The power source may comprise one or more sources of power, for example, a battery, a solar cell, a fuel cell, or any combination thereof.

The wireless device 1310 may transmit uplink data to and/or receive downlink data from base station 1320 via air interface 1370. To perform the transmission and/or reception, one or more of the processing system 1311, transmission processing system 1314, and/or reception system 1315 may implement open systems interconnection (OSI) functionality. As an example, transmission processing system 1314 and/or reception system 1315 may perform layer 1 OSI functionality, and processing system 1311 may perform higher layer functionality. The wireless device 1310 may transmit and/or receive data over air interface 1370 using one or more antennas 1316. For scenarios where the one or more antennas 1316 include multiple antennas, the multiple antennas may be used to perform one or more multi-antenna techniques, such as spatial multiplexing (e.g., single-user multiple-input multiple output (MIMO) or multi-user MIMO), transmit/receive diversity, and/or beamforming.

The base station 1320 may comprise a processing system 1321 and a memory 1322. The memory 1322 may comprise one or more computer-readable media, for example, one or more non-transitory computer readable media. The memory 1322 may include instructions 1323. The processing system 1321 may process and/or execute instructions 1323. Processing and/or execution of instructions 1323 may cause base station 1320 and/or processing system 1321 to perform one or more functions or activities. The memory 1322 may include data (not shown). One of the functions or activities performed by processing system 1321 may be to store data in memory 1322 and/or retrieve previously-stored data from memory 1322. The base station 1320 may communicate with wireless device 1310 using a transmission processing system 1324 and a reception processing system 1325. Although not shown in FIG. 13, transmission processing system 1324 and/or reception processing system 1325 may be coupled to a dedicated memory that is analogous to but separate from memory 1322, and comprises instructions that may be processed and/or executed to carry out one or more of their respective functionalities. The wireless device 1320 may comprise one or more antennas 1326 to access air interface 1370.

The base station 1320 may transmit downlink data to and/or receive uplink data from wireless device 1310 via air interface 1370. To perform the transmission and/or reception, one or more of the processing system 1321, transmission processing system 1324, and/or reception system 1325 may implement OSI functionality. As an example, transmission processing system 1324 and/or reception system 1325 may perform layer 1 OSI functionality, and processing system 1321 may perform higher layer functionality. The base station 1320 may transmit and/or receive data over air interface 1370 using one or more antennas 1326. For scenarios where the one or more antennas 1326 include multiple antennas, the multiple antennas may be used to perform one or more multi-antenna techniques, such as spatial multiplexing (e.g., single-user multiple-input multiple output (MIMO) or multi-user MIMO), transmit/receive diversity, and/or beamforming.

The base station 1320 may comprise an interface system 1327. The interface system 1327 may communicate with one or more base stations and/or one or more elements of the core network via an interface 1380. The interface 1380 may be wired and/or wireless and interface system 1327 may include one or more components suitable for communicating via interface 1380. In FIG. 13, interface 1380 connects base station 1320 to a single deployment 1330, but it will be understood that wireless device 1310 may communicate with any number of base stations and/or ON deployments over interface 1380, and that deployment 1330 may communicate with any number of base stations and/or other CN deployments over interface 1380. The base station 1320 may comprise one or more other elements 1329 analogous to one or more of the one or more other elements 1319.

The deployment 1330 may comprise any number of portions of any number of instances of one or more network functions (NFs). The deployment 1330 may comprise a processing system 1331 and a memory 1332. The memory 1332 may comprise one or more computer-readable media, for example, one or more non-transitory computer readable media. The memory 1332 may include instructions 1333. The processing system 1331 may process and/or execute instructions 1333. Processing and/or execution of instructions 1333 may cause the deployment 1330 and/or processing system 1331 to perform one or more functions or activities. The memory 1332 may include data (not shown). One of the functions or activities performed by processing system 1331 may be to store data in memory 1332 and/or retrieve previously-stored data from memory 1332. The deployment 1330 may access the interface 1380 using an interface system 1337. The deployment 1330 may comprise one or more other elements 1339 analogous to one or more of the one or more other elements 1319.

One or more of the systems 1311, 1314, 1315, 1321, 1324, 1325, and/or 1331 may comprise one or more controllers and/or one or more processors. The one or more controllers and/or one or more processors may comprise, for example, a general-purpose processor, a digital signal processor (DSP), a microcontroller, an application specific integrated circuit (ASIC), a field programmable gate array (FPGA) and/or other programmable logic device, discrete gate and/or transistor logic, discrete hardware components, an on-board unit, or any combination thereof. One or more of the systems 1311, 1314, 1315, 1321, 1324, 1325, and/or 1331 may perform signal coding/processing, data processing, power control, input/output processing, and/or any other functionality that may enable wireless device 1310, base station 1320, and/or deployment 1330 to operate in a mobile communications system.

Many of the elements described in the disclosed embodiments may be implemented as modules. A module is defined here as an element that performs a defined function and has a defined interface to other elements. The modules described in this disclosure may be implemented in hardware, software in combination with hardware, firmware, wetware (e.g. hardware with a biological element) or a combination thereof, which may be behaviorally equivalent. For example, modules may be implemented as a software routine written in a computer language configured to be executed by a hardware machine (such as C, C++, Fortran, Java, Basic, Matlab and/or the like) or a modeling/simulation program such as Simulink, Stateflow, GNU Octave, or LabVIEWMathScript. It may be possible to implement modules using physical hardware that incorporates discrete or programmable analog, digital and/or quantum hardware. Examples of programmable hardware comprise computers, microcontrollers, microprocessors, DSPs, ASICs, FPGAs, and complex programmable logic devices (CPLDs). Computers, microcontrollers and microprocessors may be programmed using languages such as assembly, C, C++ and/or the like. FPGAs, ASICs and CPLDs are often programmed using hardware description languages (HDL) such as VHSIC hardware description language (VHDL) or Verilog that configure connections between internal hardware modules with lesser functionality on a programmable device. The mentioned technologies are often used in combination to achieve the result of a functional module.

The wireless device 1310, base station 1320, and/or deployment 1330 may implement timers and/or counters. A timer/counter may start at an initial value. As used herein, starting may comprise restarting. Once started, the timer/counter may run. Running of the timer/counter may be associated with an occurrence. When the occurrence occurs, the value of the timer/counter may change (for example, increment or decrement). The occurrence may be, for example, an exogenous event (for example, a reception of a signal, a measurement of a condition, etc.), an endogenous event (for example, a transmission of a signal, a calculation, a comparison, a performance of an action or a decision to so perform, etc.), or any combination thereof. In the case of a timer, the occurrence may be the passage of a particular amount of time. However, it will be understood that a timer may be described and/or implemented as a counter that counts the passage of a particular unit of time. A timer/counter may run in a direction of a final value until it reaches the final value. The reaching of the final value may be referred to as expiration of the timer/counter. The final value may be referred to as a threshold. A timer/counter may be paused, wherein the present value of the timer/counter is held, maintained, and/or carried over, even upon the occurrence of one or more occurrences that would otherwise cause the value of the timer/counter to change. The timer/counter may be un-paused or continued, wherein the value that was held, maintained, and/or carried over begins changing again when the one or more occurrence occur. A timer/counter may be set and/or reset. As used herein, setting may comprise resetting. When the timer/counter sets and/or resets, the value of the timer/counter may be set to the initial value. A timer/counter may be started and/or restarted. As used herein, starting may comprise restarting. In some embodiments, when the timer/counter restarts, the value of the timer/counter may be set to the initial value and the timer/counter may begin to run.

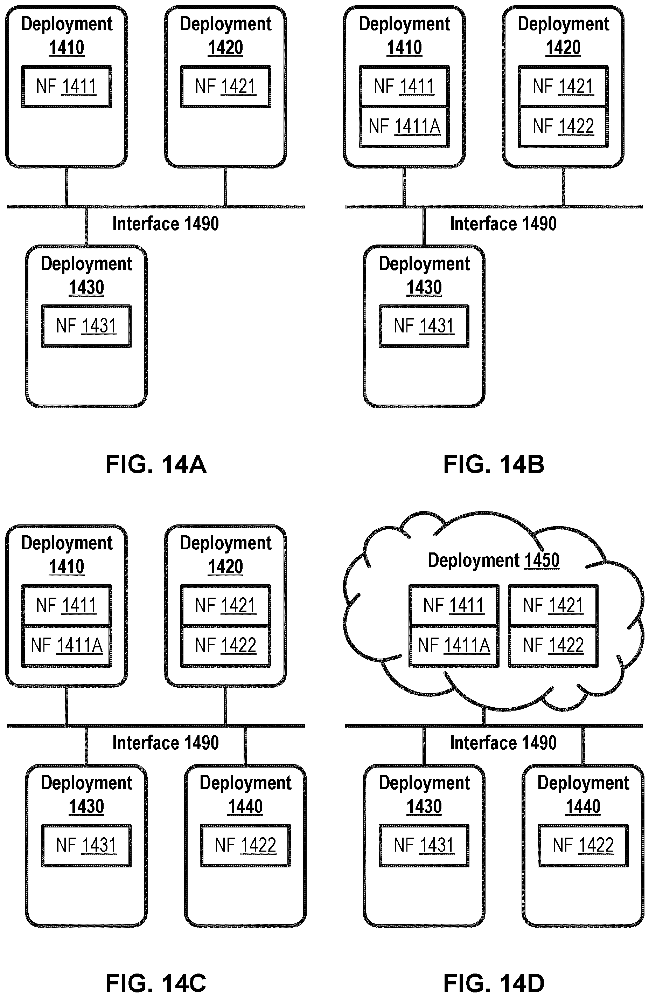

FIGS. 14A, 14B, 14C, and 14D illustrate various example arrangements of physical core network deployments, each having one or more network functions or portions thereof. The core network deployments comprise a deployment 1410, a deployment 1420, a deployment 1430, a deployment 1440, and/or a deployment 1450. Each deployment may be analogous to, for example, the deployment 1330 depicted in FIG. 13. In particular, each deployment may comprise a processing system for performing one or more functions or activities, memory for storing data and/or instructions, and an interface system for communicating with other network elements (for example, other core network deployments). Each deployment may comprise one or more network functions (NFs). The term NF may refer to a particular set of functionalities and/or one or more physical elements configured to perform those functionalities (e.g., a processing system and memory comprising instructions that, when executed by the processing system, cause the processing system to perform the functionalities). For example, in the present disclosure, when a network function is described as performing X, Y, and Z, it will be understood that this refers to the one or more physical elements configured to perform X, Y, and Z, no matter how or where the one or more physical elements are deployed. The term NF may refer to a network node, network element, and/or network device.

As will be discussed in greater detail below, there are many different types of NF and each type of NF may be associated with a different set of functionalities. A plurality of different NFs may be flexibly deployed at different locations (for example, in different physical core network deployments) or in a same location (for example, co-located in a same deployment). A single NF may be flexibly deployed at different locations (implemented using different physical core network deployments) or in a same location. Moreover, physical core network deployments may also implement one or more base stations, application functions (AFs), data networks (DNs), or any portions thereof. NFs may be implemented in many ways, including as network elements on dedicated or shared hardware, as software instances running on dedicated or shared hardware, or as virtualized functions instantiated on a platform (e.g., a cloud-based platform).

FIG. 14A illustrates an example arrangement of core network deployments in which each deployment comprises one network function. A deployment 1410 comprises an NF 1411, a deployment 1420 comprises an NF 1421, and a deployment 1430 comprises an NF 1431. The deployments 1410, 1420, 1430 communicate via an interface 1490. The deployments 1410, 1420, 1430 may have different physical locations with different signal propagation delays relative to other network elements. The diversity of physical locations of deployments 1410, 1420, 1430 may enable provision of services to a wide area with improved speed, coverage, security, and/or efficiency.

FIG. 14B illustrates an example arrangement wherein a single deployment comprises more than one NF. Unlike FIG. 14A, where each NF is deployed in a separate deployment, FIG. 14B illustrates multiple NFs in deployments 1410, 1420. In an example, deployments 1410, 1420 may implement a software-defined network (SDN) and/or a network function virtualization (NFV).

For example, deployment 1410 comprises an additional network function, NF 1411A. The NFs 1411, 1411A may consist of multiple instances of the same NF type, co-located at a same physical location within the same deployment 1410. The NFs 1411, 1411A may be implemented independently from one another (e.g., isolated and/or independently controlled). For example, the NFs 1411, 1411A may be associated with different network slices. A processing system and memory associated with the deployment 1410 may perform all of the functionalities associated with the NF 1411 in addition to all of the functionalities associated with the NF 1411A. In an example, NFs 1411, 1411A may be associated with different PLMNs, but deployment 1410, which implements NFs 1411, 1411A, may be owned and/or operated by a single entity.

Elsewhere in FIG. 14B, deployment 1420 comprises NF 1421 and an additional network function, NF 1422. The NFs 1421, 1422 may be different NF types. Similar to NFs 1411, 1411A, the NFs 1421, 1422 may be co-located within the same deployment 1420, but separately implemented. As an example, a first PLMN may own and/or operate deployment 1420 having NFs 1421, 1422. As another example, the first PLMN may implement NF 1421 and a second PLMN may obtain from the first PLMN (e.g., rent, lease, procure, etc.) at least a portion of the capabilities of deployment 1420 (e.g., processing power, data storage, etc.) in order to implement NF 1422. As yet another example, the deployment may be owned and/or operated by one or more third parties, and the first PLMN and/or second PLMN may procure respective portions of the capabilities of the deployment 1420. When multiple NFs are provided at a single deployment, networks may operate with greater speed, coverage, security, and/or efficiency.

FIG. 14C illustrates an example arrangement of core network deployments in which a single instance of an NF is implemented using a plurality of different deployments. In particular, a single instance of NF 1422 is implemented at deployments 1420, 1440. As an example, the functionality provided by NF 1422 may be implemented as a bundle or sequence of subservices. Each subservice may be implemented independently, for example, at a different deployment. Each subservices may be implemented in a different physical location. By distributing implementation of subservices of a single NF across different physical locations, the mobile communications network may operate with greater speed, coverage, security, and/or efficiency.

FIG. 14D illustrates an example arrangement of core network deployments in which one or more network functions are implemented using a data processing service. In FIG. 14D, NFs 1411, 1411A, 1421, 1422 are included in a deployment 1450 that is implemented as a data processing service. The deployment 1450 may comprise, for example, a cloud network and/or data center. The deployment 1450 may be owned and/or operated by a PLMN or by a non-PLMN third party. The NFs 1411, 1411A, 1421, 1422 that are implemented using the deployment 1450 may belong to the same PLMN or to different PLMNs. The PLMN(s) may obtain (e.g., rent, lease, procure, etc.) at least a portion of the capabilities of the deployment 1450 (e.g., processing power, data storage, etc.). By providing one or more NFs using a data processing service, the mobile communications network may operate with greater speed, coverage, security, and/or efficiency.

As shown in the figures, different network elements (e.g., NFs) may be located in different physical deployments, or co-located in a single physical deployment. It will be understood that in the present disclosure, the sending and receiving of messages among different network elements is not limited to inter-deployment transmission or intra-deployment transmission, unless explicitly indicated.

In an example, a deployment may be a 'black box' that is preconfigured with one or more NFs and preconfigured to communicate, in a prescribed manner, with other 'black box' deployments (e.g., via the interface 1490). Additionally or alternatively, a deployment may be configured to operate in accordance with open-source instructions (e.g., software) designed to implement NFs and communicate with other deployments in a transparent manner. The deployment may operate in accordance with open RAN (O-RAN) standards.

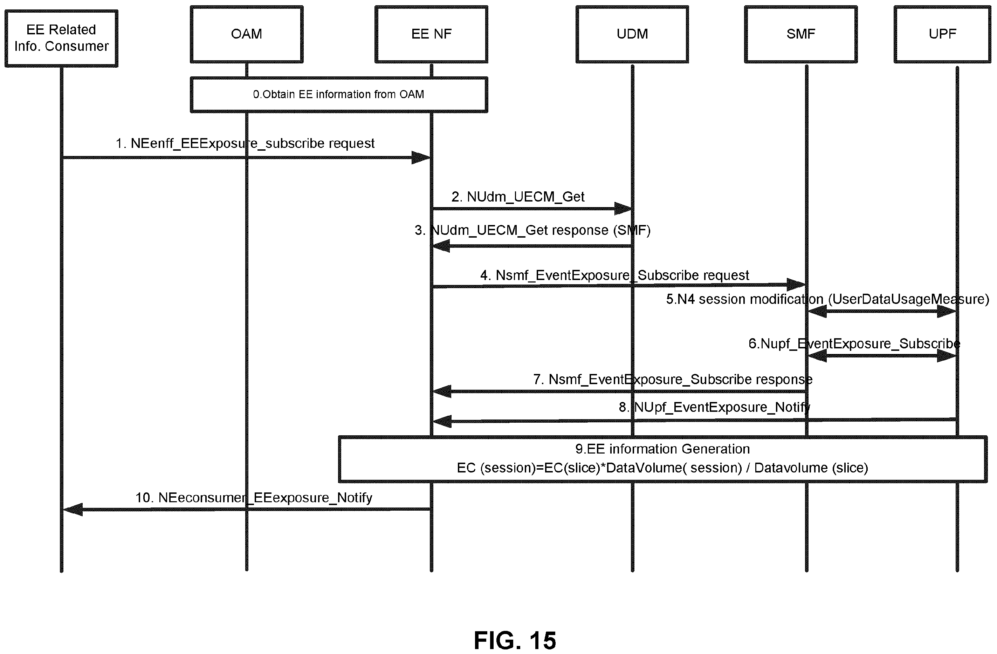

In an example embodiment as depicted in FIG. 15, OAM, network energy consumption may be mainly measured at the end-to-end network slice level, core network level, access network level or network function level, for core network part, a new interface between independent Energy Efficiency (EE) NF and CAM may be introduced to obtain energy related information at these granularities. EE NF may also obtain the data amount of one single PDU session through UPF event exposure service, then the calculation of PDU Session level granularity can be achieved suggesting the EE NF has already obtained network slice granularity or network function granularity energy related information (e.g. data volume transmitted through one single UPF related to one single network slice, energy consumption of one single network slice).

In an example, Energy Efficiency Network Function may obtain network slice granularity and network function granularity energy consumption from OAM. The energy exposure service consumer e.g., third parties request the 5GS to expose energy related information. The request may be provided through NEF. S-NSSAI, DNN, UE ID, etc. may be provided together with the exposure request. The request may also indicate what granularity of energy related information the consumer want. In an example, the EE NF may request the UDM to get the information of serving SMF for the UE/DNN/S-NSSAI through UDM_UECM_get service. The UDM may respond serving SMF information e.g., SMF Set ID or SMF IP address to EE NF. The EE NF may send a request to SMF to obtain the data volume of the existed PDU session related to the UE/S-NSSAI/DNN. Through UPF Exposure service, EE NF may obtain the data volume of the PDU session. Energy consumption or energy efficiency calculation may be performed.

The EE NF has obtained the E2E network slice EE and EC information from the CAM system. It will also have the total data volume (DV) of the E2E network slice e.g., sum of UL and DL data volumes at N3 interface(s) of the network slice.

The energy consumption for one single PDU session may be determined as follows:

$$EC_{PDU} = \frac{DV_{PDU}}{DV_{ns}} \cdot EC_{ns}$$

The energy efficiency for one single PDU session may be determined as follows:

$$EE_{PDU} = \frac{DV_{PDU}}{DV_{ns}} \cdot EE_{ns}$$

In an example embodiment, two energy saving states may be identified for cells, NEs and NFs. In an example, a cell or a network element (NE) or network function (NF) may be in one of these two states with respect to energy saving: notEnergySaving state and energySaving state.

In an example embodiment, the state of notEnergySaving state may indicate that the NF, NE, PDU session, S-NSSAI, QoS flow, UE, and/or the like are not subject to energy saving control or monitoring. In an example, the state of energySaving may indicate that the NF, NE, PDU session, S-NSSAI, QoS flow, UE, and/or the like are subject to energy saving control or monitoring. In an example embodiment, the state of energySaving state may trigger the network to configure a NE, NF, S-NSSAI, PDU session, QoS flow, UE to report energy consumption related events.

In an example, based on the above energy saving states, a full energy saving solution may comprise two elementary procedures:

- Energy saving activation (change from notEnergySaving state to energySaving state)
- Energy saving deactivation (change from energySaving state to notEnergySaving state)

In an example, when a NF, a NE or a cell is in energy saving state it may need candidate NEs, NFs, or cells to pick up the load. However, a NE, NF, or a cell in energySaving state may not cause an outage or coverage holes or create undue load on the surrounding cells. All traffic on that NE or cell is expected to be drained to other overlaid/umbrella candidate NEs or cells before the NE or cell moves to energySaving state.

A NE, NF, or a cell in energySaving state is not considered as a NE, NF, or a cell outage or a fault condition. No alarms should be raised for any condition that is a consequence of a subject cell or network element or network function moving into energySaving state.

In an example embodiment, energy saving states may comprise more than two energy saving states. In an example, a cell or a network element or network function may be on one of these states with respect to energy saving: notEnergySaving state, partial energy saving state, and energySaving state.

In an example, based on the above energy saving states, a full energy saving solution may comprise two elementary procedures:

- Energy saving activation (change from notEnergySaving state to partial energySaving state or energySaving state)
- Energy saving deactivation (change from partial energySaving state or energySaving state to notEnergySaving state)

In an example, when a NF, a NE or a cell is in energy saving state it may need candidate NEs, NFs, or cells to pick up the load. However, a NE, NF, or a cell in energySaving state may not cause coverage holes or create undue load on the surrounding cells. All traffic on that cell is expected to be drained to other overlaid/umbrella candidate cells before the cell moves to energySaving state.

A NE, NF, or a cell in energySaving state is not considered as a NE, NF, or a cell outage or a fault condition. No alarms should be raised for any condition that is a consequence of a subject cell or network element or network function moving into energySaving state.

The power and energy metering is mandatory as per Power, Energy and Environmental (PEE) principles described in ETSI ES 202 336-12 V1.2.1. In an example, the requirements for Power, Energy and Environmental (PEE) measurement may be applicable when a NF is deployed as a physical entity, virtual entity on a shared physical resource, and/or the like. In an example, a management service producer responsible for PEE measurement control may have the capability allowing its authorized consumer to request starting the collection of PEE measurement data of NE(s) or NF(s). In an example, the management service producer responsible for PEE measurement control may have the capability allowing its authorized consumer to indicate the reporting method, granularity period, reporting period, etc. for PEE measurement data of NE(s) or NF(s). The management service producer responsible for PEE measurement control may have the capability to generate the PEE measurement data of NE(s) or NF(s) according to the request of the consumer. The management service producer responsible for PEE measurement control may have the capability allowing its authorized consumer to request stopping the collection of PEE measurement data of NE(s) or NF(s). The management service producer responsible for PEE measurement control may have the capability allowing its authorized consumer to query the information about the ongoing collection of PEE measurement data of NE(s) or NF(s). The management service producer (e.g., the EMF, EE NF, NWDAF, EBF, and/or the like) responsible for PEE measurement control may have the capability of collecting the PEE measurement data of PNF(s) in the network (e.f., the NE(s) NF(s), gNB, and/or the like) according to the request of the consumer.

In an example embodiment, power and energy consumption measurement may comprise the following. The power is in Watt and the energy is the cumulated active energy metering in Wh or kWh at the input of the NF or Network Equipment. Considering the record period $T_r$, the physical expression of instant power $P(t)$, power consumption $E(T_r)$ and mean power $P(T_r)$ over $T_r$ are as follows: $P(t) = u(t). i(t)$ and $E(t) = p(t).T_a$, Where $u(t)$ and $i(t)$ are values of voltage and current acquired over the $T_a$ period by analog-digital conversion.

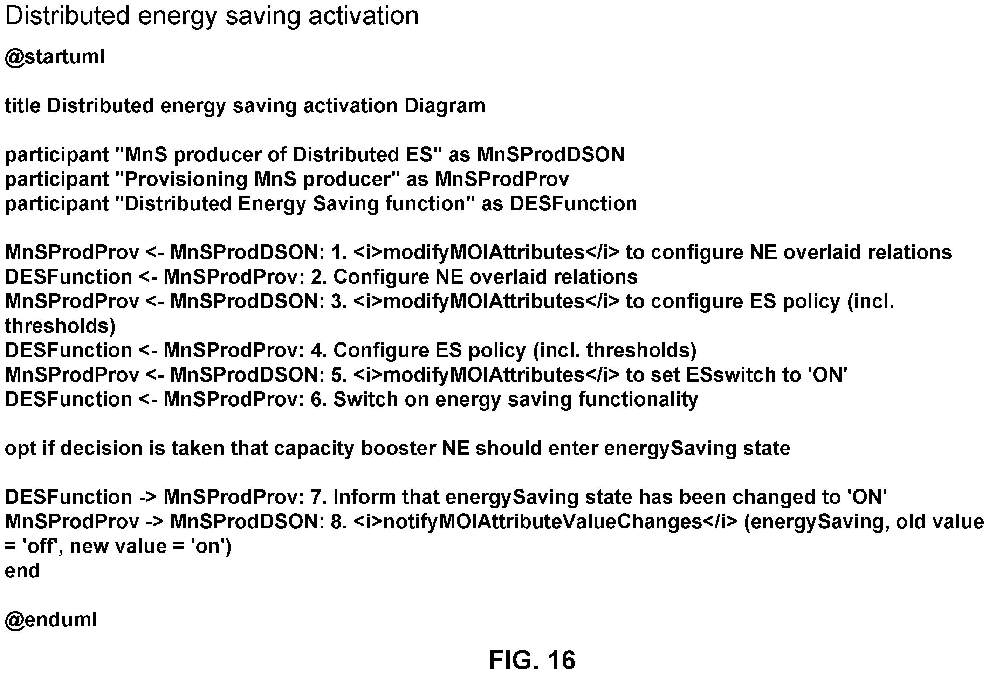

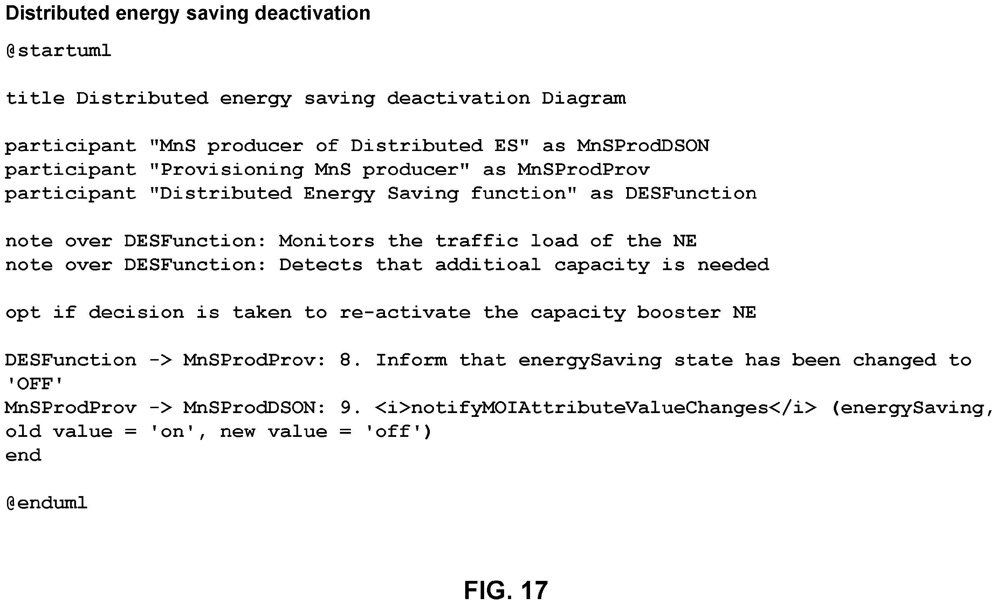

In an example as depicted in FIG. 16 and FIG.17, NE(s) may be managed via management services that perform provisioning via managed object instance (MOI). Generic provisioning managed service may enable notifications and modifications related to managed objects of NE(s).

Operations and notifications related to MOI may comprise the following.

In an example, createMOI operation may be performed /invoked by MnS consumer to request the MnS producer to create a Managed Object instance in the MIB maintained by MnS producer. This operation may create one Managed Object instance. The MnS consumer may supply the values of all attributes that are supported, e.g., a) attributes whose Support Qualifier is M and b) attributes whose Support Qualifier is O. The special cases are:

1) If the attribute has a default value specified. In such case, if the MnS consumer supplies a value, the supplied value is used; otherwise, the default value is used.

2) If the attribute is specified as capable of carrying a null value or carrying no information. In such case, if the Generic Provisioning MnS consumer supplies a (non-null) value, the supplied value is used; otherwise, the null value is used.

3) If the attribute does not have a default value specified and is specified as incapable of carrying null value and incapable of carrying no information, if there is a MnS producer defined default value, then that value will be used.

In an example, the input parameters may comprise the following:

| Parameter Name | S | Information Type / Legal Values | Comment |
|---|---|---|---|
| managedObjectClass | M | class | This parameter specifies the class of the new managed object instance. |
| managedObjectInstance | M | DN | This parameter specifies the instance of the managed object that is to be created and registered. This is a full DN according to TS 32.300 [5]. |

(continued)

| Parameter Name | S | Information Type / Legal Values | Comment |
|---|---|---|---|
| attributeListln | M | LIST OF SEQUENCE< attribute name, attribute value> | This parameter may have a null value. When this parameter is supplied, it contains a list of name/value pairs specifying attribute identifiers and their values to be assigned to the new managed object. These values override the values for the corresponding attributes derived from the default value set specified in the definition of the managed object's class. |

In an example, the output parameters may comprise the following:

| Parameter name | S | Matching Information / Legal Values | Comment |
|---|---|---|---|
| attributeListOut | M | LIST OF SEQUENCE< attribute name, attribute value> | This list of name/value pairs contains the attributes of the new managed object and the actual value assigned to each. |
| status | M | ENUM (OperationSucceeded, Operation Failed) | |

In case of success, the ManagedEntity instance has been created with the supplied DN. In case of failure, indication of the failure is provided in the Output parameters.

In an example, getMOIAttributes operation may be invoked by MnS consumer to request the retrieval of management information (Managed Object attribute names and values) from the MIB maintained by MnS producer. One or several Managed Objects may be retrieved - based on the containment hierarchy.

In an example, an entity may choose to split this operation in several operations (e.g. operations to get "handlers" or "iterators" to Managed Objects fulfilling the scope/filter criteria and other operations to retrieve attribute names/values from these "handlers").

In an example, the input parameters may comprise the following:

| Name | S | Information Type | Comment |
|---|---|---|---|
| baseObjectinstance | M | DN | This parameter specifies the base object instance. If the "scope" parameter is absent, then either only the base object or the complete subtree below and including the base object shall be selected. The default behaviour is protocol specific. |
| scope | M | n/a | This parameter specifies the scope. It is a structured parameter and consists of the sub-parameters "scopeType" and "scopeLevel". The scope describes which object instances are selected with respect to a base object instance. The base object instance needs to be specified using a dedicated attribute. |
| > scopeType | M | ENUM { BASE_ONLY, BASE_ALL } | If the optional "scopeLevel" parameter is not supported or absent, allowed values of "scopeType" are "BASE_ONLY" and "BASE_ALL". The value "BASE_ONLY" indicates only the base object is selected. The value "BASE_ALL" indicates the base object and all of its subordinate objects (incl. the leaf objects) are selected. This parameter is redundant and can be omitted when confirming only the protocol specific default behaviour. |

(continued)

| Name | S | Information Type | Comment |
|------|---|------------------|---------|
| | | ENUM { BASE_NTH_LEVEL, BASE_SUBTREE } | If the "scopeLevel" parameter is supported and present, allowed values of "scopeType" are "BASE_NTH_LEVEL" and "BASE_SUBTREE". The value "BASE_NTH_LEVEL" indicates all objects on the level, which is specified by the "scopeLevel" parameter, below the base object are selected. The base object is at "scopeLevel" zero. The value "BASE_SUBTREE" indicates the base object and all of its subordinate objects down to and including the objects on the level, which is specified by the "scopeLevel" parameter, are selected. The base object is at "scopeLevel" zero. |
| > scopeLevel | O | Integer | See definition of "scopeType" parameter. |
| filter | O | See Comment. | This parameter defines filter criteria to be applied to the objects selected by the "baseObjectinstance", "scope" and "scopeLevel" parameters. The actual syntax and capabilities of the filter is SS specific. However, each SS should support a filter consisting of one or several assertions that may be grouped using the logical operators AND, OR and NOT. Each assertion is a logical expression of attribute existence, attribute value comparison ("equal to X, less than Y" etc.) and MO Class. |
| attributeListIn | O | LIST OF attribute name. | This parameter identifies the attributes to be returned by this operation. If the parmeter is absent or empty all attributes shall be returned. |

In an example, the output parameters may comprise the following:

| Name | S | Matching Information | Comment |
|------|---|----------------------|---------|
| managedObjectClass | M | ManagedEntity class | For each returned MO: The class of the MO. |
| managedObjectInstance | M | ManagedEntity DN | For each returned MO: The name of the MO. This is a full DN according to TS 32.300 [5]. |
| attributeListOut | M | LIST OF SEQUENCE< attribute name, attribute value > | For each returned MO: A list of name/value pairs for MO. |
| status | M | ENUM (OperationSucceeded, OperationFailed) | An operation may fail because of a specified or unspecified reason. |

In case of success, all of the ManagedEntity instances selected for retrieval are returned. In case of failure, a specified or unspecified reason may be provided in the Output parameters.

In an example, modifyMOiAttributes operation may be invoked by MnS consumer to request the modification of one or more Managed Object instances from MnS producer. Attributes of one or several Managed Objects may be modified.

In an example, the input parameters may comprise the following:

| Parameter Name | S | Information Type/Legal Values | Comment |
|---|---|---|---|
| baseObjectinstance | M | DN | The MO instance that is to be used as the starting point for the selection of managed objects to which the filter (when supplied) is to be applied. This is a full DN according to TS 32.300 [5]. |
| scopeType | M | See corresponding parameter in getMOIAttributes. | See corresponding parameter in getMOIAttributes. |
| scopeLevel | O | See corresponding parameter in getMOIAttributes. | See corresponding parameter in getMOIAttributes. |
| filter | O | See comment. | See corresponding parameter in getMOIAttributes. |
| modification List | M | LIST OF SEQUENCE <attribute identifier, [attribute values], ENUM( replace, add values, remove values, set to default)> See Comment for when attribute values are require and when they are optional. | This parameter contains a set of attribute modification specifications, each of which contains: 1). attribute identifier: the identifier of the attribute whose value(s) is (are) to be modified. 2). attribute value: the value(s) to be used in the modification of the attribute. The use of this parameter is defined by the modify operator. This parameter is optional when the set to default modify operator is specified and if supplied, shall be ignored. 3). modify operator: the way in which the attribute values(s) (if supplied) is(are) to be applied to the attribute. The possible operators are: a) replace: the attribute value(s) specified shall be used to replace the current values(s) of the attribute; b) add values: the attribute values(s) specified shall be added to the current value(s) of the attribute. This operator shall only be applied to a set-valued attribute and shall perform a set union (in the mathematical sense) between the current values(s) of the attribute and the attribute value(s) specified. Value(s) specified in the attribute value parameter which is(are) already in the current values of the attribute shall not cause an error to be returned. c) remove values: the attribute value(s) specified shall be removed from the current values(s) of the attribute. This operator shall only be applied to a set-valued attribute and shall perform a set difference (in the mathematical sense) between the current value(s) of the attribute and the attribute values(s) specified. Value(s) specified in the attribute value parameter which is(are) not in the current value(s) of the attribute shall not cause an error to be returned; d) set to default: when this operator is applied to a single-valued attribute, the value of the attribute shall be set to its default value. When this operator is applied to a set-valued attribute, the value(s) of the attribute shall be set to their default value(s) and only as many values as defined by the default shall be assigned. If there is no default value defined, an error shall be returned. |

(continued)

| Parameter Name | S | Information Type/Legal Values | Comment |
|---|---|---|---|
| | | | Note: Set is used here in the mathematical sense so that a set-valued attribute is an unordered set of unique values. The modify operator is optional, and if it is not specified, the replace operator shall be assumed. The modificationList parameter contains a single set of attribute modification specifications and this same set is applied to each MO instance to be modified. |

In an example, the output parameters may comprise the following:

| Parameter name | S | Matching Information / Legal Values | Comment |
|---|---|---|---|
| modificationListOut | M | LIST OF SEQUENCE< ManagedEntity DN, ManagedEntity class, LIST OF SEQUENCE< attribute name, attribute value >> | This parameter will provide for each managed object instance the full DN of the managed object instance, the managedObjectClass, and a list of name/value pairs with the values of all the attributes of the modified managed object instance after modification. The form of this information is SS dependant and may be provided in one or many data structures. |
| status | M | ENUM (OperationSucceeded, Operation Failed, OperationPartiallySucceeded) | An operation may fail because of a specified or unspecified reason and no attributes have been updated. The operation is only successful if all specified attributes of all selected objects are actually modified. Otherwise, the operation is partially successful. |

In lieu of a synchronization parameter, best effort synchronization will apply; that is, all managed objects selected for this operation will perform the operation if possible regardless of whether some managed objects fail to perform it.

In case of success, all of the ManagedEntity instances selected for modification are modified. In case of failure, a specified or unspecified reason may be provided in the Output parameters.

In an example, deleteMOI operation may be invoked by MnS consumer to request the deletion of one or more Managed Object instances in the MIB maintained by the MnS producer.

In an example, the input parameters may comprise the following:

| Parameter Name | S | Information Type / Legal Values | Comment |
|---|---|---|---|
| baseObjectinstance | M | ON | The MO instance that is to be used as the starting point for the selection of managed objects to which the filter (when supplied) is to be applied. This is a full DN according to TS 32.300 [5]. |
| scopeType | O | See corresponding parameter in getMOI Attributes. | See corresponding parameter in getMOIAttributes. |
| scopeLevel | O | See corresponding parameter in getMOI Attributes. | See corresponding parameter in getMOIAttributes. |
| filter | O | See comment. | See corresponding parameter in getMOIAttributes. |

In an example, the output parameters may comprise the following:

| Parameter name | S | Matching Information / Legal Values | Comment |
|---|---|---|---|
| deletion List | M | LIST OF SEQUENCE< ManagedEntity DN, ManagedEntity class name> | If the base object alone is specified, then this parameter is optional; otherwise it contains a list of managedObjectInstance/-managedObjectClass pairs identifying the managed objects deleted. |
| status | M | ENUM (OperationSucceeded, OperationFailed, Operation-PartiallySucceeded) | An operation may fail because of a specified or unspecified reason. The operation is partially successful if some, but not all, objects selected to be deleted are actually deleted. |

In lieu of a synchronization parameter, best effort synchronization will apply; that is, all managed objects selected for this operation will perform the operation if possible regardless of whether some managed objects fail to perform it.

To meet service demands, e.g. in terms of latency, the Network Operator (NOP) decided to deploy some UPFs at the edge of its core network, i.e. closer to low latency demanding service users than if they were deployed in its central core network. During off-peak periods and depending on service users' profile, observed behaviour and habits, the NOP may decide that some of these edge UPFs are no longer justified. For example, at night, in some locations where no user paying for low latency services is connected, the remaining traffic (not demanding low latency) can be redirected from the edge UPFs to central core UPFs. The NOP may then decide to:

- redirect the remaining traffic to and from these edge UPFs to existing central core UPFs, and
- decommission these edge UPFs, or scale them in/down, or any other action enabling to achieve energy saving, depending on e.g. whether these UPFs are virtualized or not. The decommissioning of edge UPFs can be done e.g. by administratively putting them out of service so that they can't carry any more traffic, either with immediate effect or only when no more users are using these UPFs. The NOP may decide at any time to come back to the initial situation.

Existing technologies may not support exposure of energy saving state of NFs. In order to meet service demands, e.g., in terms of latency, the Network Operator (NOP) may decide to deploy some UPFs at the edge of its core network, e.g., closer to low latency demanding service users than if they were deployed in its central core network. However, deployment of additional UPFs may cause additional signaling overhead and during off-peak periods, and depending on service users' profile, the NOP may decide that some of these edge UPFs are no longer justified. The provider or the AF may determine whether or not deployment of NFs in energy saving state can be justified. For example, at night, in some locations where no user paying for low latency services is connected, the remaining traffic (not demanding low latency) can be redirected from the edge UPFs to central core UPFs. The NOP may then decide to: 1- redirect the remaining traffic to and from these edge UPFs to existing central core UPFs, and/or 2- decommission these edge UPFs, or scale them in/down, or any other action enabling to achieve energy saving, depending on e.g., whether these UPFs are virtualized or not. To do so, exposure of energy saving state of the network elements may be employed. Existing technologies may not support exposure of energy saving state of NFs and therefore, the AF may not be able to make an optimized decision, and this may cause inefficient consumption of energy in the network.

Example embodiments in the present disclosure propose enhancements to the signaling among network elements to enable an operator to fetch information of network energy consumption and energy saving state. Example embodiments further enable configuration of the network to activate energy saving state for a NE, S-NSSAI, PDU session, QoS flow, and/or the like. To enable configuration of the network to activate energy saving state example embodiments comprise enhancement of signaling among the network nodes to invoke operations for modifying the MOI state of network resources. For example, a network node may receive an operation command that may further comprise a condition or threshold and when the condition is met, the MOI attribute may change and may result in activation of the energy saving state. The energy saving state may comprise one of an OFF state or an ON state. Doing so enables optimal decisions on scaling and allocation of network resources based on energy saving states and hence reduce overall energy consumption.

In an example, the network exposure function may facilitate exposure of events or status of the network. Event Exposure using NEF may be employed for Monitoring Events. The Monitoring Events feature may be employed for monitoring of specific events in 3GPP system and making such monitoring events information reported via the NEF. In an embodiment, the monitoring events feature allow NFs in 5GS for configuring the specific events, the event detection and the event reporting to the requested party. To support monitoring features in roaming scenarios, a roaming agreement may need to be made between the HPLMN and the VPLMN. If the AMF/SMF in the VPLMN determine that normalisation of an event report may be required, the AMF/SMF normalises the event report before sending it to the NEF. The set of capabilities required for monitoring may be accessible via NEF to NFs in 5GS. Monitoring Events via the UDM, the AMF, the SMF, the NSACF and the GMLC enables NEF to configure a given Monitor Event at UDM, AMF, SMF, NSACF or GMLC and reporting of the event via UDM and/or AMF, SMF, NSACF or GMLC. Depending on the specific monitoring event or information, it is the AMF, GMLC, NSACF or the UDM that is aware of the monitoring event or information and makes it reported via the NEF.

The following table enumerates the monitoring events and their detection criteria:

**List of events for monitoring capability**

| Event | Detection criteria | Which NF detects the event |
|---|---|---|
| Change in energy saving state (MOI attribute) | Change of an MOI attribute value. | NWDAF, EMF, EE NF, EBF |
| Change in energy consumption level exceeding a threshold | Energy consumption associated with a NE, NF, S-NSSAI, PDU session, QoS flow, traffic of application (application ID) | NWDAF, EMF, EE NF, EBF |
| Loss of Connectivity | Network detects that the UE is no longer reachable for either signalling or user plane communication The AF may provide a Maximum Detection Time, which indicates the maximum period of time without any communication with the UE after which the AF is to be informed that the UE is considered to be unreachable. If Unavailability Period Duration has been provided by the UE, the AMF uses the remaining value of it to determine the foreseen Loss of Connectivity time. | AMF |
| UE reachability | Detected when the UE transitions to CM-CONNECTED state or when the UE will become reachable for paging, e.g. Periodic Registration Update timer. It indicates when the UE becomes reachable for sending downlink data to the UE. The AF may provide the following parameters: 1) Maximum Latency; 2) Maximum Response Time; 3) Suggested number of downlink packets. This event requires the Reachability Filter set to UE reachable for DL traffic". When requesting UE reachability monitoring, the AF may in addition request Idle Status Indication to be included in the UE reachability event reporting. | AMF, UDM |
| Location Reporting | This event is detected based on the Event Reporting Information Parameters that were received in the Monitoring Request (one-time reporting, maximum number of reports, maximum duration of reporting, periodicity, etc. It reports either the Current Location or the Last Known Location of a UE. When AMF is the detecting NF: One-time and Continuous Location Reporting are supported. For Continuous Location Reporting the serving node(s) sends a notification every time it becomes aware of a location change, with the granularity depending on the accepted accuracy of location. For One-time Reporting with immediate reporting flag set, AMF reports the Last Known Location immediately. When AMF is the detecting NF: If the immediate reporting flag is not set, the AMF reports the UE Current Location (In case the AMF does not have the UE current location in the granularity as requested by the location report, the AMF retrieves the information via NG-RAN Location reporting procedure. When GMLC is the detecting NF: Immediate and Deferred Location Reporting is supported. For Deferred Location Reporting the event types UE availability, Area, Periodic Location and Motion are supported. | AMF, GMLC |

(continued)

| Event | Detection criteria | Which NF detects the event |
|---|---|---|
| Change of SUPI-PEI association | This event is detected when the association between PEI and subscription (SUPI) changes (USIM change). | UDM |
| Roaming status | This event is detected based on the UE's current roaming status (the serving PLMN and/or whether the UE is in its HPLMN) and notification is sent when that status changes.<br>If the UE is registered via both 3GPP and N3GPP Access Type, then both instances of Roaming status are included. | UDM |
| Communication failure | This event is detected when RAN or NAS level failure is detected based on connection release and it identifies RAN/NAS release code. | AMF |
| Availability after Downlink Data Notification failure | This event is detected when the UE becomes reachable again after downlink data delivery failure. When requesting Availability after Downlink Data Notification failure monitoring, the AF may in addition request Idle Status Indication to be included in the UE reachability event reporting. | AMF |
| PDU Session Status | This event is detected when PDU session is established or released. | SMF |
| Number of UEs present in a geographical area | This event is detected based on the Event Reporting Information Parameters that were received in the Monitoring Request (Level of aggregation, Sampling ratio, It indicates the number of UEs that are in the geographical area described by the AF. The AF may ask for the UEs that the system knows by its normal operation to be within the area (Last Known Location) or the AF may request the system to also actively look for the UEs within the area (Current Location). | AMF |
| CN Type change | The event is detected when the UE moves between EPC and 5GC. It indicates the current CN type for a UE or a group of UEs when detecting that the UE switches between being served by a MME and an AMF or when accepting the event subscription. | UDM |
| Downlink data delivery status | It indicates the downlink data delivery status in the core network.<br>Events are reported at the first occurrence of packets being buffered, transmitted or discarded, including:<br>- Downlink data in extended buffering, including:<br>- First data packet buffered event<br>- Estimated buffering time,<br>- First downlink data transmitted event<br>- First downlink data discarded event | SMF |
| UE reachability for SMS delivery | For SMS over NAS, this event is detected when an SMSF is registered for a UE and the UE is reachable as determined by the AMF and the UDM.<br>For SMS over IP, the event is detected when the UE is reachable as determined by the AMF and the UDM regardless of an SMSF being registered.<br>This enables the UE to receive an SMS. | UDM |
| UE memory available for SMS | This event is detected when the UDM receives UE memory available for SMS indication from the SMSF as part of Alert procedure | UDM |
| Number of registered UEs or established PDU Sessions | It indicates the current number of registered UEs or established PDU Sessions for a network slice that is subject to NSAC.<br><br>For One-time Reporting with Immediate Reporting Flag set, NSACF reports the number of registered UEs or established PDU Sessions immediately. | NSACF |

(continued)

| Event | Detection criteria | Which NF detects the event |
|---|---|---|
| Area Of Interest | It indicates change of the UE presence in the Area Of Interest. | AMF, GMLC |
| Group Member List Change | It indicates the changes on the members of the group.<br>This event apply to a group of UEs (identified by an External Group ID), such as 5G VN group or other groups. | UDM |
| Session inactivity time | This event is detected by the SMF when the PDU Session has no data transfer for a period specified by the Inactivity Timer. via the User plane status information event. | SMF |
| Traffic volume | This event measures the traffic volume (UL and DL) aggregated for the PDU Session | UPF |
| UL/DL data rate | This event measures the data rate (UL and DL) aggregated for the PDU Session | UPF |
| Application Detection | Detection of application start or stop. | PCF |

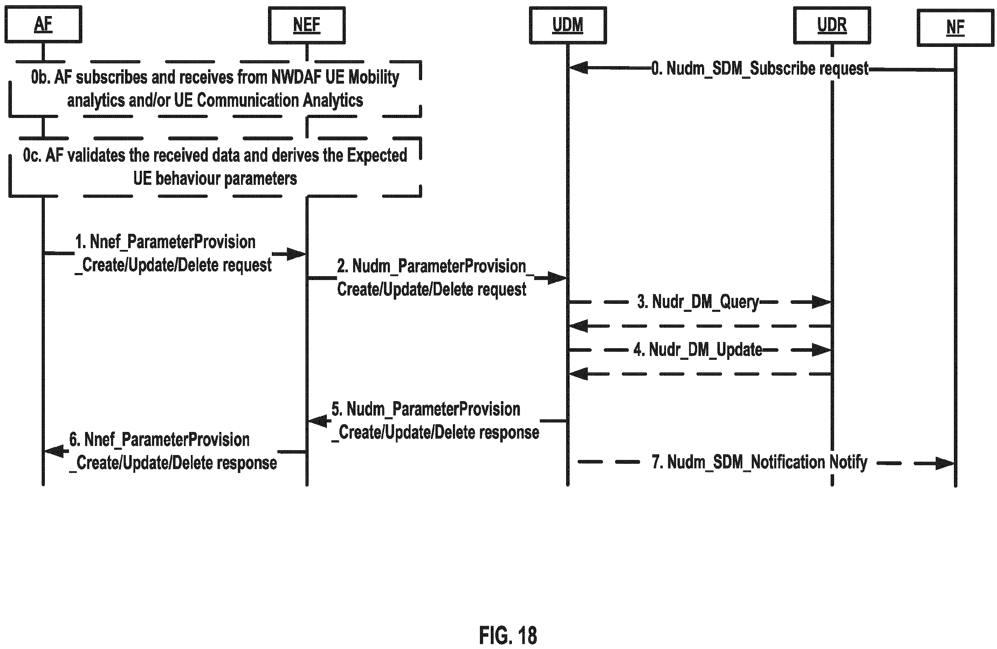

In an example as depicted in FIG. 18, the AF may provide one or more parameter(s) to be created or updated, or deleted in a Nnef_ParameterProvision_Create or Nnef_ParameterProvision_Update or Nnef_ParameterProvision_Delete Request to the NEF. The parameters(s) may include corresponding confidence and/or accuracy levels. In an example, the AF may provide target UE identifier (e.g. GPSI or External Group ID), a NF, a NE, a S-NSSAI, an application ID, and/or the like. The Transaction Reference ID may identify the transaction request between NEF and AF. For the case of Nnef_ParameterProvision_Create, the NEF may assign a Transaction Reference ID to the Nnef_ParameterProvision_Create request. In an example, the NEF may check whether the requestor is allowed to perform the requested service operation by checking requestor's identifier (e.g., AF Identifier).

IN an example, if the AF is authorised by the NEF to provision the parameters, the NEF may request to create, update and store, or delete the provisioned parameters as part of the subscriber data via Nudm_ParameterProvision_Create, Nudm_ParameterProvision_Update or Nudm ParameterProvision_Delete Request message, the message includes the provisioned data and NEF reference ID and optionally MTC Provider Information. If the AF is not authorised to provision the parameters, then the NEF may indicate the reason to failure in Nnef_ParameterProvision_Create/Update/Delete Response message.

In an example, if the NEF did not receive DNN and/or S-NSSAI from the AF and such information is configured as needed within 5GC, the NEF determines the DNN and/or S-NSSAI from the AF Identifier. If the AF provides the DNN and S-NSSAI specific Group Parameters, the AF may indicate the External Group ID, targeted DNN and S-NSSAI in the request. If the AF provides the service area in the form of geographical information, the NEF maps the geographical information to the list of TAs.

In an example, the UDM may read from UDR, by means of Nudr_DM_Query, corresponding subscription information in order to validate required data updates and authorize these changes for this subscriber or Group for the corresponding AF. Based on local configuration, UDM may determine if there is any requirement in terms of threshold conditions that need to be met by the provisioned parameter before storing the parameter in UDR. If there are no such requirement(s) or the requirement(s) are satisfied, UDM may proceed seamlessly. If not satisfied, the procedure may fail a related cause value may be provided, e.g., "confidence level not sufficient".

In an example, if the AF is authorised by the UDM to provision the parameters for this subscriber, the UDM may resolve the GPSI to SUPI and requests to create, update or delete the provisioned parameters as part of the subscriber data via Nudr_DM_Create/Update/Delete Request message, the message includes the provisioned data.

In an example, the UDM may respond to the request with Nudm_ParameterProvision_Create/Update/Delete Response. If the procedure failed, the cause value may indicate the reason. The NEF may respond the request with Nnef_ParameterProvision Create|Update|Delete Response. If the procedure failed, the cause value indicates the reason.

In an example, if the subscribed NF is AMF, the UDM may perform Nudm_SDM_Notification (SUPI or Internal Group Identifier, AMF-Associated Expected UE Behaviour parameters, Subscribed Periodic Registration Timer, subscribed Active Time, 5G VN group data or DNN and S-NSSAI specific Group Parameters, etc.) service operation. If the AMF receives confidence and/or accuracy levels along the Expected UE behaviour parameter(s), the AMF may use the associated confidence level and/or accuracy level when handling the expected UE behaviour parameter(s). The AMF uses the received parameters to derive the appropriate UE configuration of the NAS parameters and to derive Core Network assisted RAN parameters. The AMF may determine a Registration area based on parameters Stationary indication or Expected UE Moving Trajectory. If the AMF obtains service area for a group the AMF configures the DNN for the group as LADN DNN and applies the LADN per DNN and S-NSSAI taking into account the service area for the group. If the subscribed NF is SMF, the UDM performs Nudm_SDM_Notification (SUPI or Internal Group Identifier, SMF-Associated Expected UE Behaviour parameter set, DNN/S-NSSAI, Suggested Number of Downlink Packets, 5G VN group data, etc.) service operation. The SMF stores the received parameters and associates them with a PDU Session based on the DNN and S-NSSAI included in the message from UDM. If the SMF receives confidence and/or accuracy levels along the Expected UE behaviour parameter(s), the SMF may use the associated confidence level and/or accuracy level when handling the expected UE behaviour parameter(s). The SMF may use the parameters as follows:

In an example, the SMF may configure the UPF accordingly. The SMF may use the Scheduled Communication Type parameter or Suggested Number of Downlink Packets parameter to configure the UPF with how many downlink packets to buffer. The SMF may use Communication duration time parameter and/or Expected Inactivity Time parameter and/or Battery Indication parameter combined with their confidence and/or accuracy levels to set the inactivity timer for a PDU Session. The SMF then waits for a UP inactivity report to be received from UPF. Based on the received UP inactivity report, the SMF may determine to deactivate the corresponding UP connection associated to the PDU Session of a single UE or determine a collective pattern of deactivating UP connections for multiple UEs (e.g. for a group of UEs receiving application AI/ML traffic during FL operation) and perform CN-initiated selective deactivation of UP connection of an existing PDU Session. In an example, the SMF may derive SMF derived ON assisted RAN information for the PDU Session. The SMF provides the SMF derived ON assisted RAN information to the AMF as described in PDU Session establishment procedure or PDU Session modification procedure.

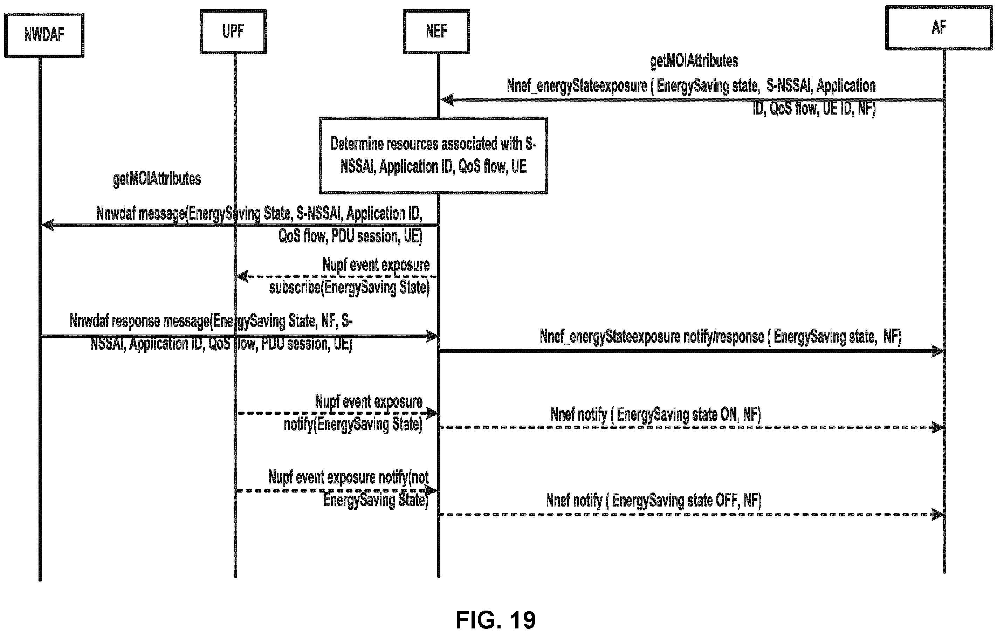

In an example embodiment as depicted in FIG. 19, the AF may send to the NEF a message to request exposure of energy saving state or energy consumption state for a NE, NF, S-NSSAI, application ID, QoS flow, UE ID, and/or the like. In an example, the message may be Nnef_energyStateExposure message. In an example, the NEF may determine resources associated with the request. In an example, the request or the NnefEnergyStateExposure message may comprise a command such as getMOIAttributes. In an example, the NE/NF may comprise at least one a UPF, SMF, AMF, base station, a control plane node, a user plane node, and/or the like.

In an example embodiment, the NEF may send an exposure request message to the NE or the NF. The exposure request may comprise a getMOIAttributes operation command, the resource type, location information, area of interest, and/or the like. In an example, the resource type may be PDU session, NF/NE, S-NSSAI, QoS flow, and/or the like. For example, if the exposure request from the AF to NEF was for a UPF, the exposure request may comprise getMOIAttributes, UPF. The NEF may send an Nupf exposure message that may comprise the getMOIAttributes operation command. In an example, the NEF may receive a response message from the NE. In an example, the response message may comprise requested information based on getMOIAttributes. In an example, the response may be sent or triggered in response to an even such as a change in energy saving state or a change in MOIAttribute. For example the response message may be an event exposure notify message (for the case of a UPF it may be Nupf event exposure notify message) that may comprise at least one of information of energy saving state (e.g., being notEnergySaving state / Energy Saving OFF state, or energySaving state / Energy Saving ON state), information of the NE/NF (e.g., NE ID, NF ID, NE/NF IP address, NE/NF FQDN, and/or the like), S-NSSAI, PDU session, UE, and/or the like that the state is applicable to. In an example, the NEF may send to the AF an Nnef notify message, Nnef response message, and/or the like that may comprise information of energy saving state (e.g., being notEnergySaving state or energySaving state), information of the NE/NF, S-NSSAI, PDU session, UE, and/or the like. In an example, the NE/NF may comprise at least one the UPF, SMF, AMF, base station, the control plane node, the user plane node, and/or the like.

In an example, the NEF may send a message to an NWDAF via an Nnwdaf message. The Nnwdaf message may comprise at least one of getMOIAttributes operation, S-NSSAI, NF/NE, application ID, QoS flow, PDU session ID, UE ID, and/or the like.

In an example, the NEF may send a message to an EE NF entity via an Neenf message. The Neenf message may comprise at least one of getMOIAttributes operation, S-NSSAI, NF/NE, application ID, QoS flow, PDU session ID, UE ID, and/or the like.

In an example, the NEF may send a message to an EMF entity via an Nemf message. The Nemf message may comprise at least one of getMOIAttributes operation, S-NSSAI, NF/NE, application ID, QoS flow, PDU session ID, UE ID, and/or the like.

In an example, the NEF may receive a response message. The response message may comprise at least one of information of energy saving state (e.g., being notEnergySaving state or energySaving state), information of the NE/NF (e.g., NE ID, NF ID, NE/NF IP address, NE/NF FQDN, and/or the like), S-NSSAI, PDU session, UE, and/or the like that the state is applicable to. In an example, the NEF may send to the AF an Nnef notify message, Nnef response message, and/or the like that may comprise information of energy saving state (e.g., being notEnergySaving state or energySaving state), information of the NE/NF, S-NSSAI, PDU session, UE, and/or the like.

In an example embodiment, reading the MOIAttributes may comprise invoking an operation command via a service based interface of the NE/NF. For example, to get state information of the UPF, the NEF may send a message to an energy management network entity (e.g., the EMF, NWDAF, EE NF, and/or the like) with operation upf.getMOIAttribute. In an example, in order to get the status of network slice resources, the operation may be s-nssai.getMOIAttribute. In an example, the response may comprise results indicating the status of all NE/NF(s) service the S-NSSAI.

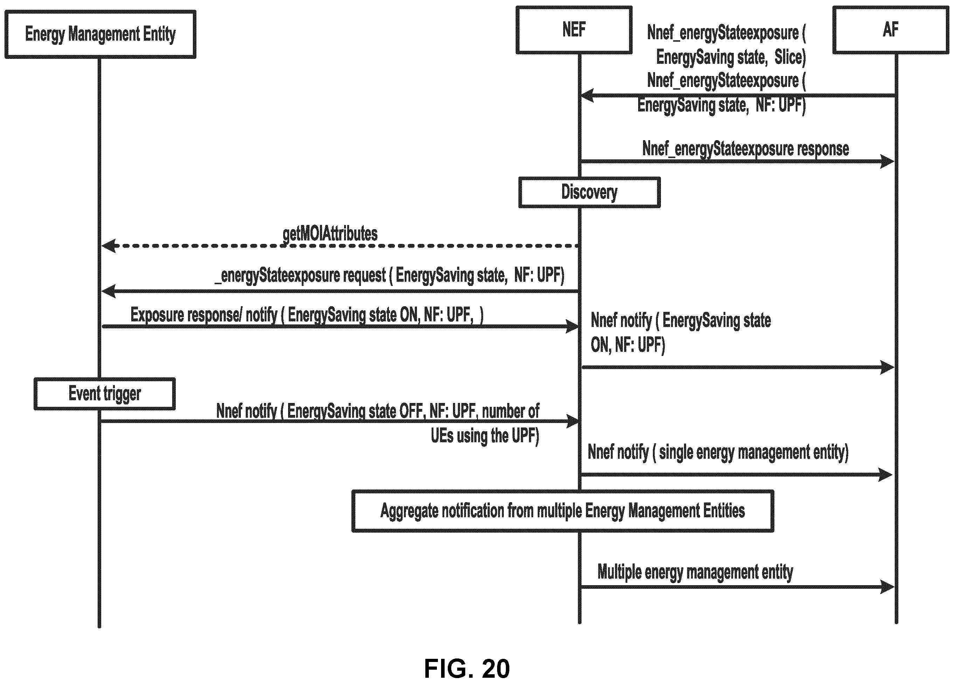

In an example embodiment, FIG. 20 depicts the case of an AF subscribing to receive the energy saving status or energy consumption status of PDU sessions, S-NSSAIs, NE/NF(s), UEs, and/or the like. The procedure handles the case when there is a single network management entity EME (e.g., NWDAF, EMF, EBF, EE NF, and/or the like) in the PLMN responsible for the S-NSSAI (single Service Area) or when there are multiple EMEs responsible for the S-NSSAI in the PLMN (multiple Service Areas).

In an example, to subscribe or unsubscribe for the energy saving (ES) status or energy consumption (EC) status of PDU Sessions per network slice notification with the NEF, the AF sends Nnef_energySavingExposure or Nnef_EventExposure Subscribe/Unsubscribe Request (Event ID, Event Filter, Event Reporting information, S-NSSAI) message to the NEF. The Event ID parameter defines the subscribed event ID, e.g., EC reaches a threshold, the threshold value, ES state changes to notEnergySaving stet or energySaving state, and/or the like. The Event Filter parameter may define the S-NSSAI, QoS flow, NEINF, application ID, and/or the like. The Event Reporting information parameter defines the mode of reporting, which includes threshold reporting with a threshold value (or energy consumption threshold value) or periodic reporting with included periodicity time interval. The S-NSSAI is the slice for which the subscription is requested. The AF may request one-time reporting or immediate reporting of EC or ES. When immediate reporting but not for one-time reporting is requested, the subscription is maintained after returning the report to the AF. When one-time reporting is requested, the subscription is terminated right after returning the report to the AF.

In an example, notifications related to the threshold based subscriptions behave as follows:

- A single notification is sent when the EC of established PDU Sessions or EC of S-NSSAIs reach the threshold. A single notification is sent every time there is a change from being below the threshold to reach the threshold.
- A single notification is sent once when the EC of established PDU Sessions or EC of S-NSSAIs go below the threshold after reaching it. A single notification is sent every time there is a change from reaching the threshold to coming down below the threshold.

In an example, the NEF may confirm with Nnef_energySavingExposure response or Nnef_EventExposure Subscribe|Unsubscribe Response message to the AF. This message may include the event reporting, if available in the NEF and immediate reporting or one-time reporting was requested by the AF. In the case of Untrusted AF, the NEF includes the AF-Service-Identifier corresponding to the S-NSSAI in the returned notification.

In an example, the NEF may query the NRF to find the EME responsible for the requested S-NSSAI. If needed, the NEF translates at least one of the QoS flow, NEINF, application ID, the AF-Service-Identifier to the corresponding S-NSSAI prior to performing the query. If the NEF has not already subscribed to the event from the EME for the requested S-NSSAI, the NEF may initiate the request Nnsacf_SliceEventExposure Subscribe|Unsubscribe Request (Event ID, Event Filter, Event Reporting information, immediate reporting, S-NSSAI) to all the EMEs supporting the requested S-NSSAI. The NEF stores the AF requested Event Reporting Information. If multiple EME are selected for the requested S-NSSAI, the NEF may set the Event Reporting Information to periodic in its request to the EMEs. If single EME is selected, the NEF sets the Event Reporting Information identical to the received request from the AF. The NEF also sets the Event ID and Event Filter identical to the received request from the AF

In an example, the EMEs may confirms with an eventExposure response or notify message to the NEF. This message may include the event reporting if available at EME and immediate reporting or one-time reporting was requested by the NEF. In an example, when the reporting condition for a subscribed event is fulfilled, the EME may trigger a notification towards the NEF. The EME may send a notification e.g., the Notify (Event ID, Event Reporting information) message to the NEF. If the subscription is for event based notification (e.g. based on the monitored event reaching a threshold value), the Event Reporting information parameter contains confirmation for the event fulfilment. If the subscription is for periodic notification or for immediate reporting, the Event Reporting information parameter provides information for the current the EC of established PDU Sessions or EC of S-NSSAIs (e.g. represented in units of energy or power).

When a single EME is returned from the discovery procedure, the NEF sends the Notify (Event ID, Event Reporting information) message since the reporting condition is fulfilled. In the case of Untrusted AF, the NEF includes the AF-Service-Identifier corresponding to the S-NSSAI in the returned notification.

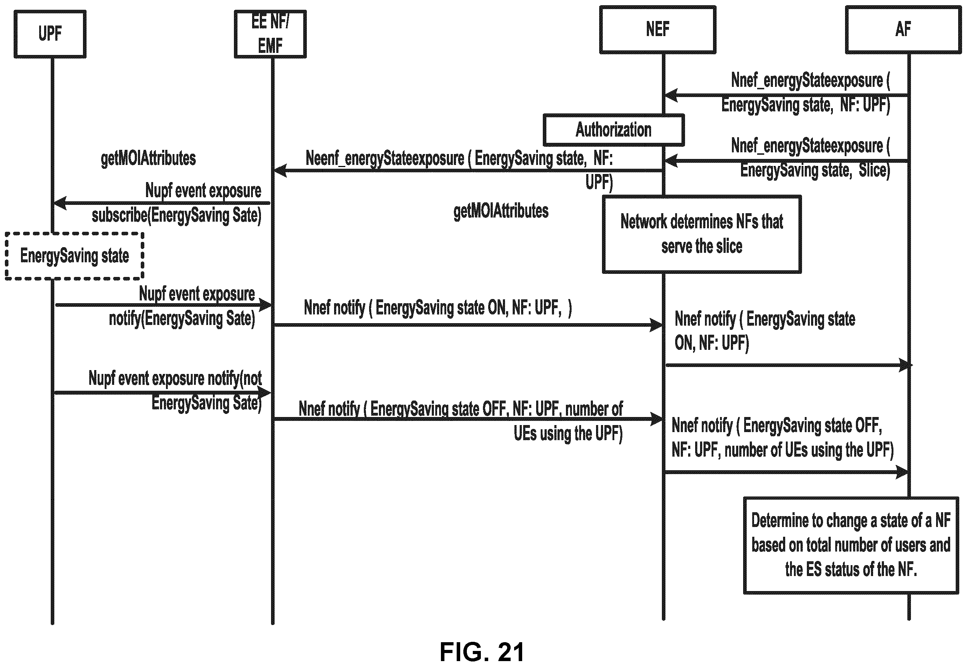

In an example embodiment as depicted in FIG. 21, the AF may send to the NEF a message to request exposure of energy saving state or energy consumption state for a NE, NF, S-NSSAI, application ID, QoS flow, UE ID, and/or the like. In an example, the message may be Nnef_energyStateExposure message. In an example, the NEF may determine resources associated with the request. In an example, the request or the NnefEnergyStateExposure message may comprise a command such as getMOIAttributes. In an example, the NEF may perform authorization of the request.

In an example, the NEF may send a message to an EMF, EE NF, NWDAF, and/or the like via an Nemf, Neenf, Nnwdaf message, and/or the like that may comprise at least one of getMOIAttributes operation, S-NSSAI, NF/NE, application ID, QoS flow, PDU session ID, UE ID, and/or the like.

In an example, the NEF may send a message to an EE NF entity via an Neenf message. The Neenf message may comprise at least one of getMOIAttributes operation, S-NSSAI, NF/NE, application ID, QoS flow, PDU session ID, UE ID, and/or the like.

In an example, the NEF may send a message to an EMF entity via an Nemf message. The Nemf message may comprise at least one of getMOIAttributes operation, S-NSSAI, NF/NE, application ID, QoS flow, PDU session ID, UE ID, and/or the like.

In an example embodiment, the EE NF or the EMF may send an exposure request message to the NE or the NF. The exposure request may comprise a getMOIAttributes operation command, the resource type, and/or the like. In an example, the resource type may be PDU session, NF/NE, S-NSSAI, QoS flow, and/or the like. For example, if the exposure request from the AF to NEF was for a UPF, the exposure request may comprise getMOIAttributes, UPF. The EE NF, NWDAF, or the EMF may send an Nupf exposure message that may comprise the getMOIAttributes operation command. In an example, the EE NF, NWDAF, or the EMF may receive a response message from the NE. In an example, the response message may comprise requested information based on getMOIAttributes. In an example, the response may be sent or triggered in response to an even such as a change in energy saving state or a change in MOIAttribute. For example the response message may be an event exposure notify message (for the case of a UPF it may be Nupf event exposure notify message) that may comprise at least one of information of energy saving state (e.g., being notEnergySaving state or energySaving state), information of the NE/NF (e.g., NE ID, NF ID, NE/NF IP address, NE/NF FQDN, and/or the like), S-NSSAI, PDU session, UE, and/or the like that the state is applicable to. In an example, the EE NF, NWDAF, or the EMF may send to the NEF (and the NEF sends to the AF) an Nnef notify message, Nnef response message, and/or the like that may comprise information of energy saving state (e.g., being notEnergySaving state or energySaving state), information of the NE/NF, S-NSSAI, PDU session, UE, and/or the like.

In an example, the NEF may receive a response message. The response message may comprise at least one of information of energy saving state (e.g., being notEnergySaving state or energySaving state), information of the NE/NF (e.g., NE ID, NF ID, NE/NF IP address, NE/NF FQDN, and/or the like), S-NSSAI, PDU session, UE, and/or the like that the state is applicable to. In an example, the NEF may send to the AF an Nnef notify message, Nnef response message, and/or the like that may comprise information of energy saving state (e.g., being notEnergySaving state or energySaving state), information of the NE/NF, S-NSSAI, PDU session, UE, and/or the like. In an example, the NE/NF may comprise at least one the UPF, SMF, AMF, base station, the control plane node, the user plane node, and/or the like.

In an example embodiment, reading the MOIAttributes may comprise invoking an operation command via a service based interface of the NE/NF. For example, to get state information of the UPF, the NEF may send a message to an energy management network entity (e.g., the EMF, NWDAF, EE NF, and/or the like) with operation upf.getMOIAttribute. In an example, in order to get the status of network slice resources, the operation may be s-nssai.getMOIAttribute. In an example, the response may comprise results indicating the status of all NE/NF(s) service the S-NSSAI.

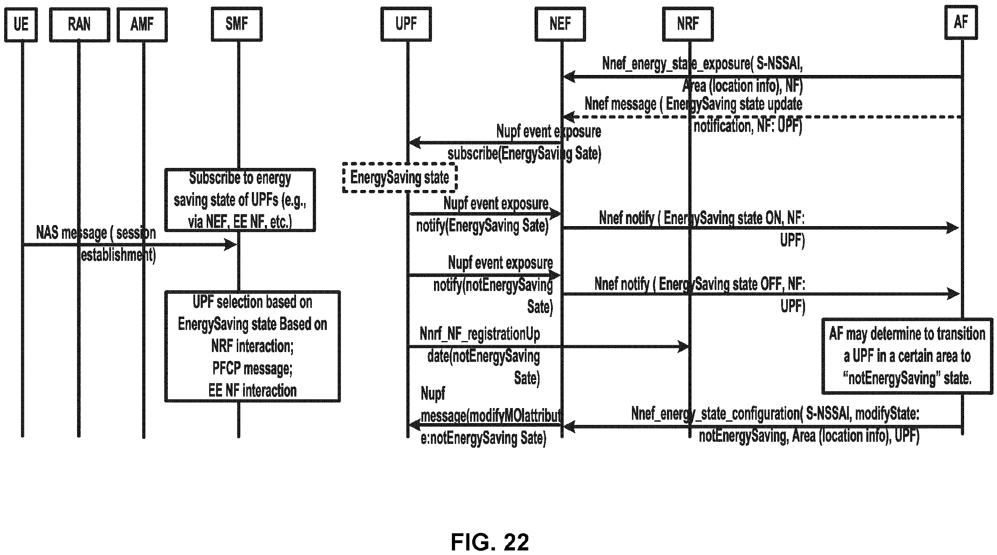

In an example embodiment as depicted in FIG. 22, the NEF may enable exposure of EC or ES at granularity of S-NSSAI, NE, NF, PDU session, QoS flow, application ID, and/or the like. In an example embodiment, the AF may determine to change the energy saving state of a NF/NE. The decision may be based on the location area and number of UEs, traffic load, and/or the like. For example, the number of UEs using the resources at the edge may not justify the energy consumption and the traffic load may be offloaded to other nodes. The AF may send an operation command to change the state, the operation command may be modifyMOIAttribute.

In an example, the AF may send to the NEF a message to request exposure of energy saving state or energy consumption state. In an example, the message may comprise location information, area information (e.g., all NEINF(s) or resources of a UE or all UE in a certain location or area), a NE, NF, S-NSSAI, application ID, QoS flow, UE ID, and/or the like. In an example, the message may be Nnef_energyStateExposure message. In an example, the NEF may determine resources associated with the request. In an example, the request or the NnefEnergyStateExposure message may comprise a command such as getMOIAttributes.

In an example, the NEF may determine resources based on the area, location information, and/or the like. In an example embodiment, the NEF may send an exposure request message to the NE or the NF. The exposure request may comprise a getMOIAttributes operation command, the resource type, and/or the like. In an example, the resource type may be a PDU session, NF/NE, S-NSSAI, QoS flow, and/or the like. For example, if the exposure request from the AF to NEF was for a UPF, the exposure request may comprise getMOIAttributes, UPF. The NEF may send an Nupf exposure message that may comprise the getMOIAttributes operation command. In an example, the NEF may receive a response message from the NE. In an example, the response message may comprise requested information based on getMOIAttributes. In an example, the response may be sent or triggered in response to an even such as a change in energy saving state or a change in MOIAttribute. For example the response message may be an event exposure notify message (for the case of a UPF it may be Nupf event exposure notify message) that may comprise at least one of information of energy saving state (e.g., being notEnergySaving state or energySaving state), information of the NE/NF (e.g., NE ID, NF ID, NE/NF IP address, NE/NF FQDN, and/or the like), S-NSSAI, PDU session, UE, and/or the like that the state is applicable to. In an example, the NEF may send to the AF an Nnef notify message, Nnef response message, and/or the like that may comprise information of energy saving state (e.g., being notEnergySaving state or energySaving state), information of the NE/NF, S-NSSAI, PDU session, UE, and/or the like.

In an example, based on a determination of an energy management entity, a NE or NF may be transitioned to an energySaving state or to a notEnergySaving state. In an example, if the NE/NF is capable of PEE measurements, or with a capability of collecting the PEE, the NE/NF may report energy management related information to the management entity. In an example, the NE/NF may update a registration with the NRF. For example the NE/NF may send an Nnrf registration management message to the NRF indicating a current state of EC or ES state. Doing so may assist the network to select or not select the NE/NF during a registration, or PDU session establishment procedure. In an example, when the NF is a UPF, the UPF may report the ES state to the NRF. For example, if the ES state indicates that the UPF is in energySaving state, when the SMF determines to select a UPF and sends a query to the NRF, that NRF does not return the UPF that is in energySaving state. In an example, the UPF may directly report the ES state to the SMF and the SMF may determine not to select the UPF based on local information received from the UPF e.g., via PFCP/N4 session level signalling or PFCPIN4 node level signalling such as N4/PFCP association messages.

In an example, when a management entity or the AF determines to change a state of a NE/NF to an energy saving state, it may invoke an operation such as modify MOI Attribute. The modifyMOIAttribute may be invoked for a S-NSSAI, a PDU session, NFINE serving the UE or UE(s) in a certain area or location, NFINE serving a PDU session or QoS flow of a UE, and/or the like. The AF may invoke the operation to the NEF and the NEF may send an operation command to the corresponding NFINF. In an example, the ES state determination of a NE/NF may be at finer granularity of per UE, per S-NSSAI, per application ID, and/or the like. For example, a NE/NF may expose the ES status differently based on the UE, the PDU session, the S-NSSAI, the application ID, and/or the like.

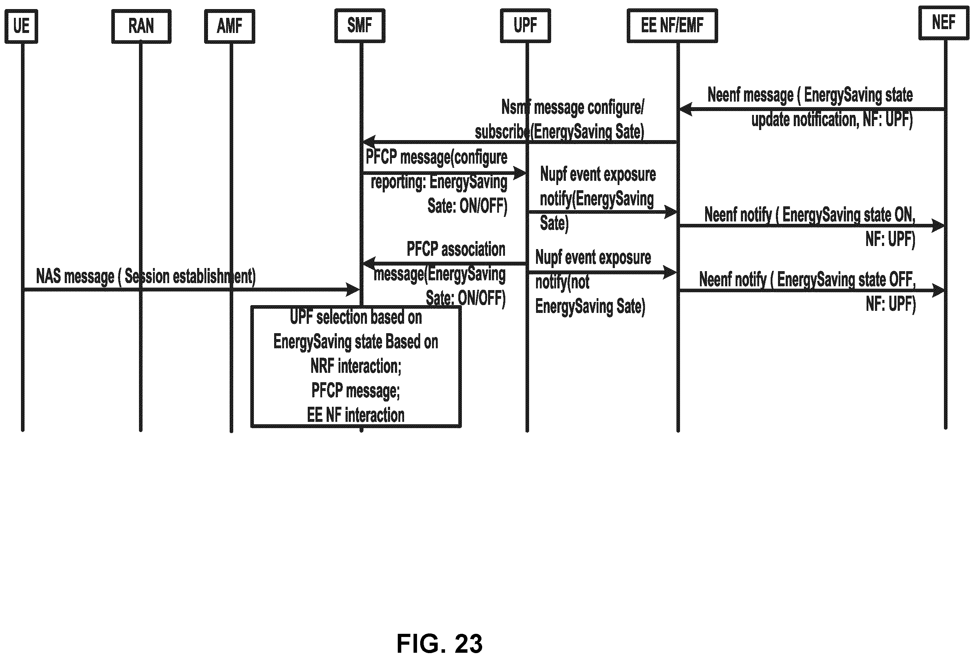

In an example embodiment as depicted in FIG. 23, the NEF may determine to request status of ES state of the NEINF, S-NSSAI, network resources of a certain location area, PDU session, QoS flow, and/or the like. The determining maya be based on receiving the request from the AF as described in example embodiments. In an example, the NEF may send to EME (e.g., NWDAF, EMF, EE NF, EBF, and/or the like), to request status of ES state of the NEINF, S-NSSAI, network resources of a certain location area, PDU session, QoS flow, and/or the like. In an example, when the NE/NF is a UPF, the EME may determine to send a request via the SMF. The EME may send to the SMF, a message (e.g., Nsmf message) ), to request status of ES state of the NEINF, S-NSSAI, network resources of a certain location area, PDU session, QoS flow, and/or the like. In an example, the SMF may determine to employ node level signalling such as PFCP or N4 association messages to configure reporting of), the ES state of the UPF, S-NSSAI, network resources of a certain location area, PDU session, QoS flow, and/or the like. In an example, the SMF may determine to employ session level signalling such as PFCP or N4 session establishment/modification messages to configure reporting of ), the ES state of the UPF, S-NSSAI, network resources of a certain location area, PDU session, QoS flow, and/or the like. In an example, the UPF may send to the SMF an N4 report message when the ES state of the UPF is changed. For example, when the UPF state changes from notEnergysavingState to energySaving state, the UPF may send the report indicating the change. For example, when the UPF state changes from EnergysavingState to noEnergySaving state, the UPF may send the report indicating the change. In an example, the UPF may send the report to the EME (e.g., the NWDAF, EMF, EE NF, EBF, and/or the like). In an example, the EME may send a response (e.g., notification) to the NEF comprising the change.

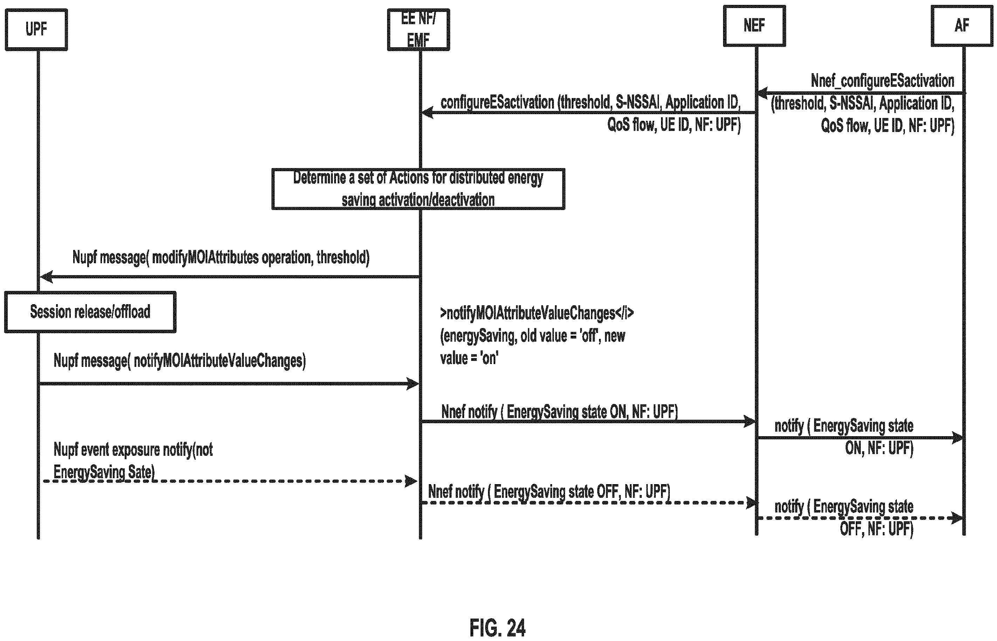

In an example embodiment as depicted in FIG. 24, the NEF may support configuration of energy saving activation. In an example, a 3rd party entity, the AF, and/or the like may send a request to the NEF to configure energy saving activation (ES activation) of network resources based on a condition or threshold. In an example the threshold may be an EC threshold wherein when the EC exceeds a threshold, the ES activation of certain NE/NF may be performed. In an example the NEF may receive an Nnef_configureESactivation that may comprise a threshold, condition, S-NSSAI, Application ID, QoS flow, UE ID, NE/NF, and/or the like. In an example, the NEF may send to the EME (e.g., EMF, EE NF, NWDAF, EBF, and/or the like), a request to configure energy saving activation (ES activation) of network resources based on a condition or threshold. In an example, the message may be configureESactivation that may comprise a threshold, condition, S-NSSAI, Application ID, QoS flow, UE ID, NE/NF, and/or the like. In an example, the EME may determine that the condition has been met. In an example, in response to the condition being met, the EME may send a message (modifyMOIAttribute) to the UPF or the NE/NF, to activate the ES state. In an example, the EME may send the message (modify MOI Attribute) to the NF/NE or the UPF that may comprise the condition or the threshold. The NF/NE may determine to perform the operation (modifyMOIAttribute) when the condition is met, or the EC threshold has been reached or exceeded.

In an example, the UPF may determine to release or offload some sessions or traffic to other UPFs. Doing so may comprise modification of forwarding rules, uplink classifier UL CL, and/or the like. In an example, the NF/NE may send a notification to the EME, NEF and the AF indicating that NF/NE has changed ES status (as described in example embodiments).

In an example, the EMF/EE NF, and/or the like may receive a message comprising an indication that energy saving state of the NF has changed. The message may comprise an notifyMOIAttribute operation command. In an example the notifyMOIAttribute operation may indicate a change in state of energy saving of the NF, the S-NSSAI, the QoS flow, and/or the like. In an example, the EMF/EE NF, and/or the like may send a Nnef message comprising the indication that energy saving state of the NF has changed. The Nnef message may comprise the notifyMOIAttribute operation command. In an example the notifyMOIAttribute operation may indicate the change in state of energy saving of the NF, the S-NSSAI, the QoS flow, and/or the like. In an example, the NEF may send a notification message to the AF based on the Nnef message. The notification message may comprise ES state of the NF.

In an example, activation of ES state may trigger update of the PCC rules. In an example, the PCC rules may be employed for UPF selection. For example, the PCC rules may comprise a condition, threshold, and/or the like based on the energy saving mode or status of NFs such as UPFs to assist in selection of the UPF e.g., select a UPF that is in notEnergySaving state, or select a UPF that is energySaving state, and/or the like. In an example, the condition or threshold may correspond to energy consumption level of the NF e.g., the UPF. For example, the UPF may be selected if energy consumption of the UPF is below a threshold. For example, the PCC rule may indicate selection of a NF such as UPF, if renewable energy is used. For example, a preference of the UE or the PCC rule may prioritize resources that consume renewable energy, green energy, and/or the like. In an example, the PCC rule may indicate that the UPF selection may be based on support of PEE measurement control functionality. For example, if the UPF or a NF is responsible for PEE measurement control, the NF or the UPF may have the capability of collecting the PEE measurement data. In an example, the UPF may report the capability of collecting the PEE measurement data to the SMF via N4 interface, N4 association message, PFCP association message, and/or the like. In an example, the UPF may report the capability of collecting the PEE measurement data to the NRF via Nnrf NF registration procedure. The UPF or the NE/NF may employ Nnrf register message that may comprise the NF ID, NE ID, the capability of collecting the PEE measurement data indication, and/or the like.

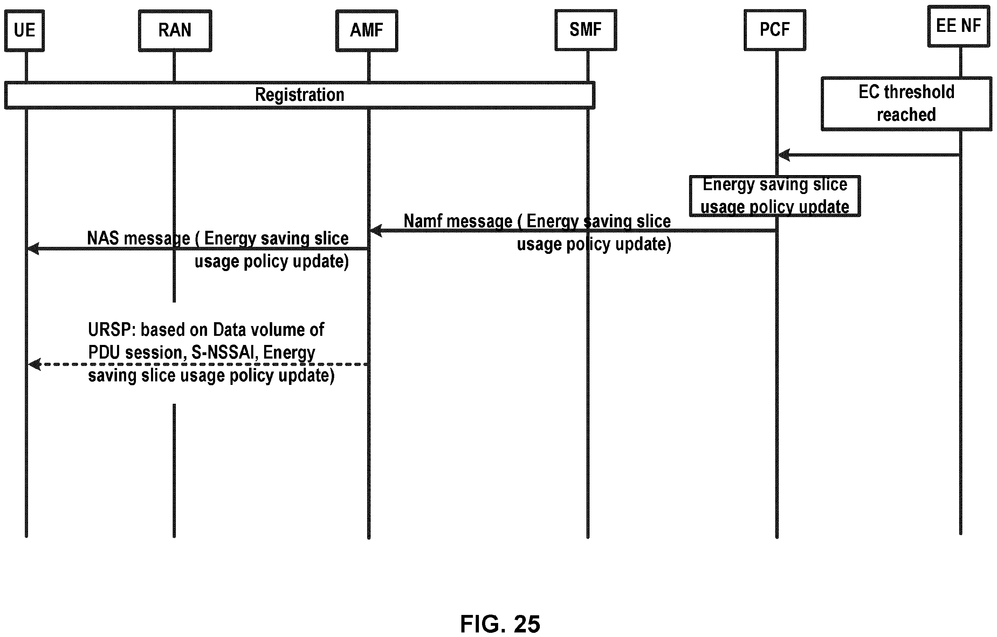

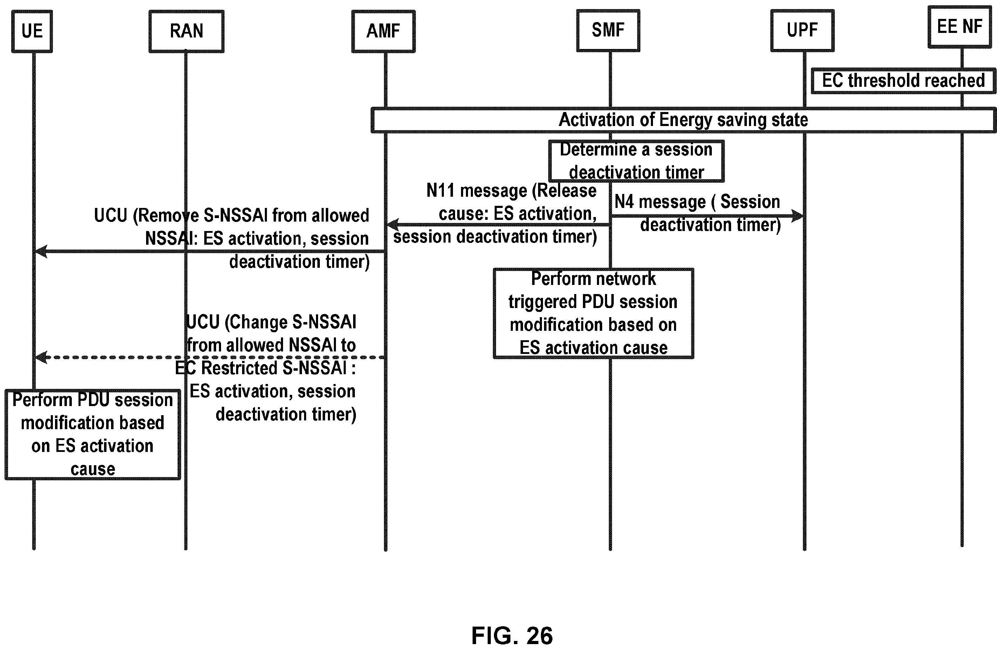

In an example embodiment as depicted in FIG. 25 and FIG. 26, a network element, (NE) (e.g., the EE NF, EMF, the NWDAF, EBF, and/or the like) may determine that the energy consumption threshold for a S-NSSAI, or DNN has been reached or exceeded. In an example, the NE may send a notification to the PCF indicating a trigger to update policy. The PCF may provide updated policy to the AMF. In an example, the PCF may trigger a UCU procedure via AMF and NAS signaling. In an example, the AMF may provide updated configuration information to the UE e.g., via UCU, NAS, URSP, and/or the like. In an example, the configuration information may comprise energy saving (ES) slice usage policy. In an example, the ES slice usage policy may comprise the following:

| Network Slice Usage Control parameter | Description |
|---|---|
| For each indicated S-NSSAI | |
| S-NSSAI | S-NSSAI for which the inactivity-based slice control applies |
| slice deregistration inactivity timer value | For network slice usage control, this timer identifies the wait time before deregistering the UE from the S-NSSAI by removing the S-NSSAI from the Allowed NSSAI when no associated PDU Session is established with the indicated S-NSSAI. |
| slice deregistration for EC trigger timer value | For network slice usage control, this timer identifies the wait time before deregistering the UE from the S-NSSAI by removing the S-NSSAI from the Allowed NSSAI when energy saving mode is triggered. |
| PDU Session inactivity timer value | Identifies the wait time to release the PDU Session associated with the indicated S-NSSAI when there is no data transmission |
| PDU Session EC trigger timer value | Identifies the wait time to release the PDU Session associated with the indicated S-NSSAI when there is a notification of energy consumption control |

In an example, Network Slice usage control may be achieved as follows: 1) Configuring network-controlled Slice Usage Policy to supporting UEs, 2) Configuring PDU Sessions inactivity timers, and Network Slice deregistration inactivity timers.

In an example, the UE during the Registration procedure may indicate in UE MM Core Network Capability that it supports UE configuration of at least one of network-controlled Slice Usage Policy, slice usage policy for energy efficiency, and/or the like. If so, the AMF determines Slice Usage Policy for a Network Slice for the UE and may configure the UE with this information together with Configured NSSAI to control the usage of this Network Slice. The AMF may be locally configured with network Slice Usage Policy, slice usage policy for energy efficiency, and/or the like or receive the policy from the (AM-)PCF, or per the information received from UDM for AF managed timer values. The network-controlled Slice Usage Policy, slice usage policy for energy efficiency, and/or the like may be provided to the UE in the Registration Accept or the UE Configuration Update Command and may comprise:

- an indication, for one or more of S-NSSAI(s) of the HPLMN in the Configured NSSAI, whether the UE only registers with the Network Slice with the network when applications in the UE require data transmission in the Network Slice (e.g., the UE can only register the Network Slice only on demand and consider the Network Slice as on demand S-NSSAI).

- For on demand S-NSSAI(s) the policy may indicate a power saving profile such that the number of PDU sessions (e.g., for the UE) that use the slice be limited to a number. If the PDU session is an MA PDU session, the MA PDU session may be modified to a single access PDU session.

- For all on demand S-NSSAI(s) of the HPLMN in the Configured NSSAI, a deregistration inactivity timer that causes the UE to deregister the Network Slice after the last PDU Session associated with the S-NSSAI is released. This deregistration inactivity timer is started at the UE and AMF per access type when the last PDU Session associated with the S-NSSAI is released, or the Network Slice is included in the Allowed NSSAI and no PDU session is established. The deregistration inactivity timer is stopped and reset when the first PDU session is established or the S-NSSAI is removed from the Allowed NSSAI. The AMF and UE may locally remove the S-NSSAI from the Allowed NSSAI when the timer expires. The AMF may also send a UE Configuration Update Command to remove the slice from the Allowed NSSAI.

If the UE and network state became misaligned, the UE may, for example, request connectivity in a Network Slice which is no longer allowed. In this case, the AMF shall provide the updated Allowed NSSAI in a UE Configuration Update Command after rejecting the PDU Session establishment. The UE may then re-register with the Network Slice if needed. The AMF may receive deregistration inactivity timer values.

The 5GC performs Network Slice usage monitoring to be able to enforce the release of inactive PDU Sessions, and deregistering of UEs from Network Slices with no PDU Sessions on them according to its own policies. In order to support usage monitoring for a Network Slice:

- the AMF runs a slice deregistration inactivity timer per S-NSSAI and access type to deregister the Network Slice which is started when the Network Slice is not used by any PDU Session over the corresponding access type. The slice deregistration inactivity timer is stopped and reset when at least a PDU Session associated with the Network Slice is successfully established or the Network Slice is removed form the Allowed NSSAI. When the slice deregistration inactivity timer for a Network Slice over an access type expires, the AMF removes the Network Slice from the Allowed NSSAI over the access type by sending the UE Configuration Update Command to impacted UE(s).

- the SMFs provide to UPFs that handle the PDU sessions in the Network Slice a PDU Session inactivity timer. The PDU Session inactivity timer is started after no data packet is transmitted or received and runs until the next data packet is transmitted or received which restarts the timer again. If the PDU Session inactivity timer expires before any packet is received or transmitted, the UPF reports this PDU Session inactivity event to the SMF to cause the SMF to release the PDU Session. While releasing the PDU session the SMF may indicate the release cause because of slice inactivity. When the AMF receives the notification of PDU Session release and it includes the release cause of slice inactivity and if the Network Slice of the released PDU Session is not used by other PDU Sessions (i.e. the last PDU Session using the Network Slice is released) over the corresponding access type, the AMF may trigger the UE Configuration Update procedure to remove the Network Slice from the Allowed NSSAI over that corresponding access type or start slice deregistration inactivity timer for the Network Slice.

- In an example, based on a notification to activate the energy saving state for the PDU session or network slices, the SMFs may provide to UPFs that handle the PDU sessions in the Network Slice a PDU Session deactivation timer. The PDU Session deactivation timer is started and a notification may be sent indicating a time period after which the PDU session will be released. A timer will be started and the upon expiry, the SMF release the PDU session. While releasing the PDU session the SMF may indicate the release cause because of energy saving state activation. When the AMF receives the notification of PDU Session release and it includes the release cause of energy saving state activation and if the Network Slice of the released PDU Session is not used by other PDU Sessions (i.e. the last PDU Session using the Network Slice is released) over the corresponding access type, <u>the AMF may trigger the UE Configuration Update procedure</u> to remove the Network Slice from the Allowed NSSAI over that corresponding access type or start slice deregistration inactivity timer for the Network Slice.

- In an example, based on a notification to activate the energy saving state for the PDU session or network slices, the SMFs provide to UPFs that handle the PDU sessions in the Network Slice a PDU Session inactivity timer. The PDU Session inactivity timer is started after no data packet is transmitted or received and runs until the next data packet is transmitted or received which restarts the timer again. If the PDU Session inactivity timer expires before any packet is received or transmitted, the UPF reports this PDU Session inactivity event to the SMF to cause the SMF to release the PDU Session. While releasing the PDU session the SMF may indicate the release cause because of energy saving state activation. When the AMF receives the notification of PDU Session release and it includes the release cause of energy saving state activation and if the Network Slice of the released PDU Session is not used by other PDU Sessions (i.e. the last PDU Session using the Network Slice is released) over the corresponding access type, the AMF may trigger the UE Configuration Update procedure to remove the Network Slice from the Allowed NSSAI over that corresponding access type or start slice deregistration inactivity timer for the Network Slice.

In an example embodiment, background data transfer (BDT) is a feature that enables a 3rd party service provider to keep their costs lower by favoring time windows for data transfer to specific UEs in a geographical area during non-busy hours that are less costly and able to handle larger bitrates. Service providers may determine an optimization objective to minimize cost with energy consumption constraint. Existing technologies do not support negotiation of BDT with an energy saving objective and as a result BDT policies may cause inefficient usage of energy.

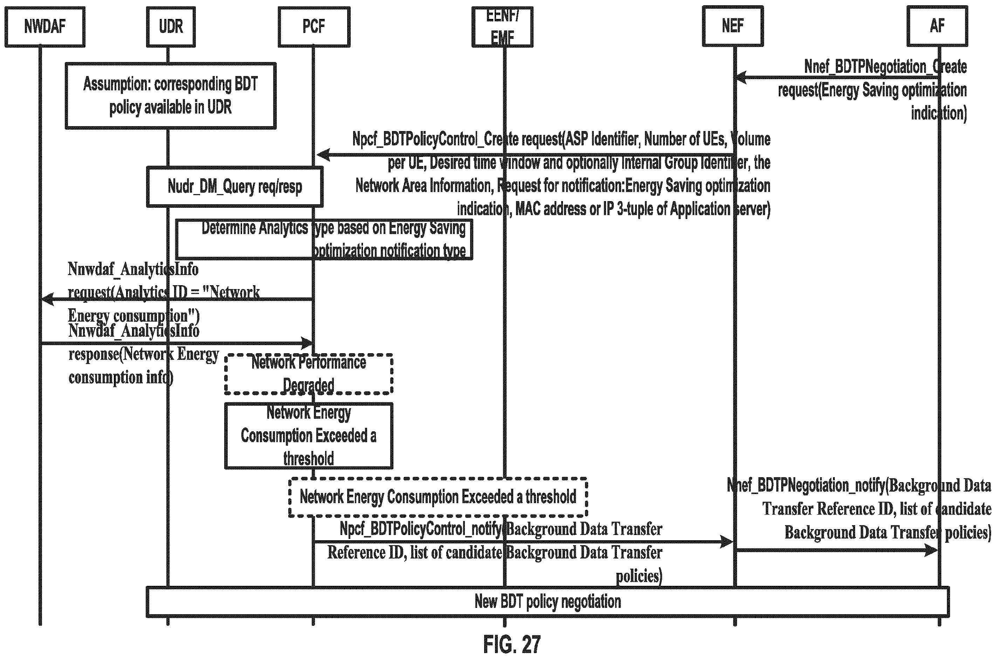

In an example, as depicted in FIG. 27, procedure for negotiation for future background data transfer may comprise the following. In an example, the AF may invoke the Nnef_BDTPNegotiation_Create (an energy Saving optimization indication, ASP Identifier, Number of UEs, Volume per UE, Desired time window and optionally External Group Identifier, Network Area Information, Request for notification, MAC address or IP 3-tuple of Application server). The Request for notification may be an indication that BDT warning notification should be sent to the AF.

In an example, based on an AF request, the NEF may request to translate the External Group Identifier into the Internal Group Identifier using Nudm_SDM_Get (energy Saving optimization indication, Group Identifier Translation, External Group Identifier, and/or the like). In an example, the NEF may invoke the Npcf_BDTPolicyControl Create (the energy Saving optimization indication, ASP Identifier, Number of UEs, Volume per UE, Desired time window and optionally Internal Group Identifier, the Network Area Information, Request for notification, MAC address or IP 3-tuple of Application server) with the H-PCF to authorize the creation of the policy regarding the background data transfer. If the PCF was provided with Request for notification, then PCF may send BDT warning notification to the AF. In an example, the H-PCF may request from the UDR the stored Background Data Transfer policies for all the ASPs using Nudr_DM_Query (the energy Saving optimization indication, Policy Data, Background Data Transfer) service operation. In an example, if only one PCF is deployed in the PLMN, the Background Data Transfer policy can be locally stored and no interaction with UDR is required. The UDR may provide all the stored Background Data Transfer policies and corresponding related information (e.g., energy consumption quota per UE, volume of data to be transferred per UE, the expected amount of UEs) to the H-PCF. In an example, the H-PCF may determine, based on information provided by the AF and other available information one or more Background Data Transfer policies. The PCF may interact with the NWDAF and request the network energy consumption analytics information, network Performance analytics information, and/or the like for the desired time window and the Network Area Information. In an example, the H-PCF may send the acknowledge message to the NEF with the acceptable Background Data T Transfer policies and a Background Data Transfer Reference ID.

In an example, the NEF may send a Nnef_BDTPNegotiation_Create response to the AF to provide one or more background data transfer policies and the Background Data Transfer Reference ID to the AF. The AF may store the Background Data Transfer Reference ID for the future interaction with the PCF. In an example, the AF may invoke the Nnef_BDTPNegotiation_Update service to provide the NEF with Background Data Transfer Reference ID and the selected background data transfer policy. The NEF may invoke the Npcf_BDTPolicyControl_Update service to provide the H-PCF with the selected background data transfer policy and the associated Background Data Transfer Reference ID. The H-PCF may send the acknowledge message to the NEF. The NEF may sends the acknowledge message to the AF. The H-PCF may store the Background Data Transfer Reference ID together with the new Background Data T Transfer policy, the corresponding related information (e.g., energy consumption quota per UE, volume of data to be transferred per UE, the expected amount of UEs), optionally MAC address or IP 3-tuple of Application server the information of request for notification, together with the relevant information received from the AF in the UDR by invoking Nudr_DM_Update (BDT Reference id, Policy Data, Background Data Transfer). In an example, the UDR may send a response to the H-PCF as its acknowledgement.

In an example embodiment, Network Performance Analytics may be specific to network performance (analytics ID= network performance), network energy consumption (analytics ID = network energy consumption), and/or the like. When analytics ID = network energy consumption, with energy consumption analytics, the NWDAF may provide statistics or predictions on the NE(s)/NF(s) MOI attribute or energy consumption status, gNB status information, gNB resource usage, communication performance and mobility performance in an Area of Interest; in addition, NWDAF may provide statistics or predictions on the number of UEs that are located in that Area of Interest. In an example, with Network Performance Analytics, NWDAF provides either statistics or predictions on the gNB status information, gNB resource usage, communication performance and mobility performance in an Area of Interest. In an example, the NWDAF may provide network energy consumption information, energy consumption statistics, energy consumption prediction, statistics or predictions on the number of UEs that are located in that Area of Interest. In an example, the service consumer may be an NF (e.g., EE NF, EMF, EME, EBF, PCF, NEF, AF), or the OAM.

The consumer of these analytics may indicate in the request:

- Analytics ID = Network Performance, network energy consumption, and/or the like
- Target of Analytics Reporting: either a single UE (SUPI), or a group of UEs (an Internal Group ID that refers to the group for which the analytics on the number of UEs that are located in the Area of Interest at the time indicated in the Analytics target period is requested) or any UE;
- Analytics Filter Information:
- Area of Interest (list of TA or Cells) which restricts the area in focus (mandatory if Target of Analytics Reporting is set to "any UE", optional otherwise);
- Traffic type of interest (overall traffic, GBR traffic or Delay-critical GBR traffic);

NOTE: If Traffic type of interest is not provided, overall traffic is considered.

- a list of analytics subsets that are requested among those specified in clause 6.6.3;
- a preferred level of accuracy of the analytics;
- preferred level of accuracy per analytics subset (see clause 6.6.3);
- preferred order of results for the list of Network Performance information:
- ordering criterion: "number of UEs", "communication performance" or "mobility performance";
- order: ascending or descending;
- Reporting Thresholds, which apply only for subscriptions and indicate conditions on the level to be reached for respective analytics information in order to be notified by the NWDAF;
- An Analytics target period indicates the time period over which the statistics or prediction are requested; and
- maximum number of objects.
- In a subscription, the Notification Correlation Id and the Notification Target Address are included.
- Spatial granularity size (if an Area of Interest is provided) and Temporal granularity size.

In an example, the NWDAF may notify the result of the analytics to the consumer.

In an example, as part of input data, the NWDAF may collect energy consumption level, ES state (MOI attributes), load and performance information of NE(s)/NF(s) in an Area of Interest from the sources, and number of UEs within Area of Interest from the sources.

In an example, Load and Performance information collected by NWDAF may comprise the following:

| Load information | Source | Description |
|---|---|---|
| ES Status, EC level information | CAM | Statistics on NF status (energySaving state or notenergySaving state), energy consumption level (i.e. NF resources) |
| NF EC information | NRF | EC level per NF |
| Status, load and performance information | CAM | Statistics on RAN status (up/down), load (i.e. Radio Resource Utilization) and performance per Cell Id for the traffic type of interest and in the Area of Interest. |
| NF Load information | NRF | Load per NF |

In an example, the number of UEs in Area of Interest information collected by NWDAF may be as follows:

| Number of UEs information | Source | Description |
|---|---|---|
| Number of UEs | AMF | Number of UEs in an Area of Interest |

In an example, network performance statistics may comprise the following:

| Information | Description |
|---|---|
| List of network energy consumption information (1..max) | Observed statistics during the Analytics target period |
| List of network performance information (1..max) | Observed statistics during the Analytics target period |
| > Area subset | List if TA(s) or Cell ID(s) within the requested area of interest as defined in clause 6.6.1. If a Spatial granularity size was provided in the request or subscription, the number of elements of the list is smaller than or equal to the Spatial granularity size. |
| > Analytics target period subset | Time window within the requested Analytics target period as defined in clause 6.6.1. If a Temporal granularity size was provided in the request or subscription, the duration of the Analytics target period subset is greater than or equal to the Temporal granularity size. |
| > gNB status information (NOTE 1) | Average ratio of gNBs that have been up and running during the entire Analytics target period in the area subset |
| > gNB resource usage (NOTE 1) (NOTE 2) | Usage of assigned resources |
| > gNB resource usage for GBR traffic (NOTE 1) (NOTE 2) | Usage of assigned resources for GBR traffic (average, peak) |
| > gNB resource usage for Delay-critical GBR traffic (NOTE 1) (NOTE 2) | Usage of assigned resources usage for Delay-critical GBR traffic (average, peak) |
| > Number of UEs (NOTE 1) | Average number of UEs observed in the area subset |
| > Communication performance (NOTE 1) | Average ratio of successful setup of PDU Sessions |
| > Mobility performance (NOTE 1) | Average ratio of successful handover |
| NOTE 1: Analytics subset that can be used in "list of analytics subsets that are requested" and "Preferred level of accuracy per analytics subset". <br> NOTE 2: Average usage of assigned resources for uplink and downlink traffic is provided. The average and peak usage is provided as a percentage. | |

In an example, Network performance predictions may comprise the following:

| Information | Description |
|---|---|
| List of network energy consumption information (1..max) | Observed analytics during the Analytics target period |
| List of network performance information (1..max) | Predicted analytics during the Analytics target period |
| > Area subset | List if TA(s) or Cell ID(s) within the requested area of interest. If a Spatial granularity size was provided in the request or subscription, the number of elements of the list is smaller than or equal to the Spatial granularity size. |
| > Analytics target period subset | Time window within the requested Analytics target period. If a Temporal granularity size was provided in the request or subscription, the duration of the Analytics target period subset is greater than or equal to the Temporal granularity size. |

(continued)

| Information | Description |
|---|---|
| > gNB status information (NOTE 1) | Average ratio of gNBs that will be up and running during the entire Analytics target period in the area subset |
| > gNB resource usage (NOTE 1) (NOTE 2) | Usage of assigned resources (average, peak) |
| > gNB resource usage for GBR traffic (NOTE 1) (NOTE 2) | Usage of assigned resources for GBR traffic (average, peak) |
| > gNB resource usage for Delay-critical GBR traffic (NOTE 1) (NOTE 2) | Usage of assigned resources usage for Delay-critical GBR traffic (average, peak) |
| > Number of UEs (NOTE 1) | Average number of UEs predicted in the area subset |
| > Communication performance (NOTE 1) | Average ratio of successful setup of PDU Sessions |
| > Mobility performance (NOTE 1) | Average ratio of successful handover |
| > Confidence | Confidence of this prediction |
| NOTE 1: Analytics subset that can be used in "list of analytics subsets that are requested" and "Preferred level of accuracy per analytics subset". NOTE 2: Average usage of assigned resources for uplink and downlink traffic is provided. The average and peak usage is provided as a percentage. | |

In an example, the procedure for BDT warning notification may comprise the following. The negotiation for Background Data Transfer (BDT) may be performed as described in an example embodiment. In addition, the PCF has subscribed to analytics on Network energy consumption, Network Performance, and/or the like from NWDAF for the area of interest and time window of a background data transfer policy following the procedure and services described in example embodiments, including a Reporting Threshold in the Analytics Reporting information. The value for Reporting Threshold may be set by the PCF based on operator configuration. The PCF may be notified with the network performance analytics in the area of interest from the NWDAF when the NWDAF determines that the network performance goes below the threshold as described for the Network Performance analytics. The H-PCF may request from the UDR the stored BDT policies using Nudr_DM_Query (Policy Data, Background Data Transfer) service operation. The UDR may provide all the Background Transfer Policies together with the relevant information received from the AF to the H-PCF. The H-PCF may identify the BDT policies affected by the notification received from NWDAF. For each of them, the H-PCF determines the ASP of which the background traffic will be influenced by the increase in energy consumption, the degradation of network performance, and/or the like and which requested the H-PCF to send the notification. The PCF then performs the following steps for each of the determined ASPs. The PCF may determine/decide based on operator policies, whether a new list of candidate Background Data Transfer policies can be calculated for the ASP. If the PCF does not find any new candidate BDT policy, the previously negotiated BDT policy may be kept, no interaction with that ASP may occur and the procedure stops for that BDT policy. In an example, the PCF may set the no longer valid BDT policy in the UDR as invalidated by invoking Nudr_DM_Update (Background Data Transfer Reference ID, invalidation flag) service. In an example, the UDR may send a response to the H-PCF as acknowledgement. In an example, the PCF may send the notification to the NEF by invoking Npcf_PolicyControl_Notify (Background Data Transfer Reference ID, list of candidate Background Data Transfer policies) service operation. The NEF may send the BDT warning notification to the AF by invoking Nnef_BDTPNegotiation_Notify (Background Data Transfer Reference ID, list of candidate Background Data Transfer policies) service operation. The AF may check the new Background Data Transfer policies included in the candidate list in the BDT warning notification. In an example, the PCF may remove the no longer valid BDT policy from UDR for the corresponding Background Data Transfer Reference ID.

If there is a new Background Data Transfer policy stored in the UDR or a BDT policy removed from the UDR, the PCFs may be notified by the UDR accordingly. The PCFs may check if the corresponding URSP rules need to be updated or removed and if so, update URSP rules for the relevant UEs. In an example, the AF may send a Stop notification by invoking Nnef_BDTPNegotiation_Update service, when the AF requests not to receive the BDT warning notification anymore. In an example, the NEF may invoke Npcf_BDTPolicyControl_Update service in order to provide this information for the H-PCF.

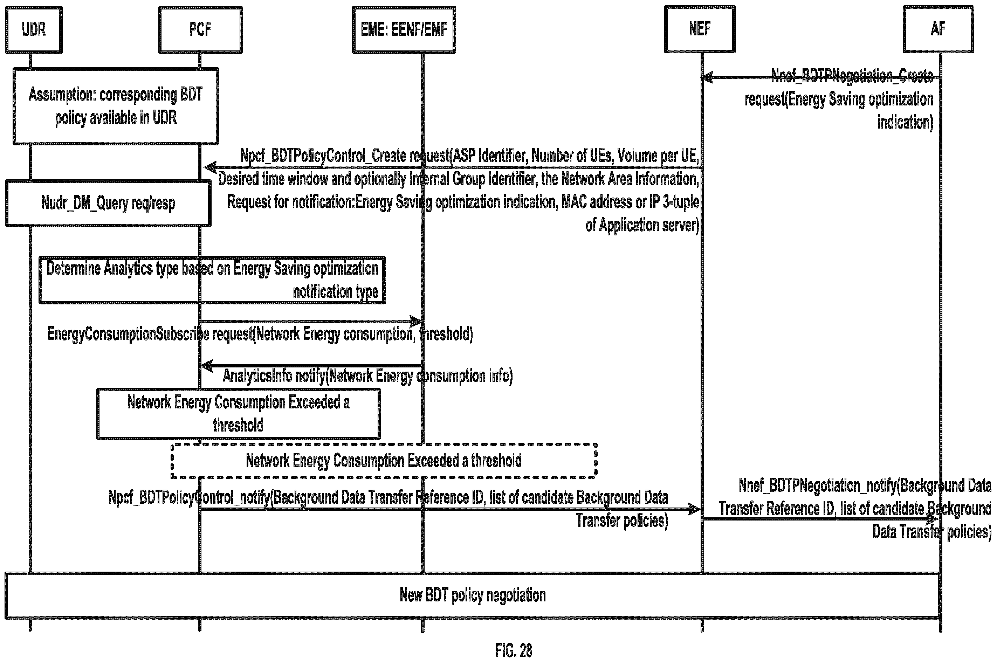

In an example embodiment as depicted in FIG. 28, the BDT procedure may be performed as described in an example embodiment. To trigger BDT warning notification, the PCF may employ the EME (e.g., the EE NF, EMF, EBF, and/or the like) to subscribe to event notifications of energy consumption. E.g., the event may be energy consumption exceed a threshold. The PFC may send to the EME a message to obtain analytics information with the analytics ID = network energy consumption. In an example, the message may comprise the analytics ID, event ID e.g., energy consumption exceed a threshold, a threshold value, and/or the like. In an example, the EME may respond with analytics information or a notification to trigger BDT warning.

In an example embodiment, a network exposure function (NEF) may receive from an application function (AF), a first request for energy saving status of a network function (NF) associated with at least one of: a network slice; QoS flow; and an application identifier. In an example, the NEF may send to a network data analytics function (NWDAF), a second request for the energy saving status of the NF. In an example, the NEF may receive from the NWDAF, a response message comprising: an identifier of the NF; a managed object instance (MOI) attribute of the energy saving status. In an example, the MOI attribute may comprise at least one of: a notEnergySaving state, an energySaving state, and/or the like. In an example, the NEF may send to the AF and based on the response message, a notification message comprising: the MOI attribute; and the identifier of the NF.

In an example, the first request may comprise a Nnef energy consumption exposure message. In an example, the request message may comprise a getMOIAttribute operation command. In an example, the first request may comprise a modifyAttribute operation command. The NEF may send to the AF, a response to the first request. The second request may comprise an analytics ID. The method of claim 6, wherein the analytics ID is network energy consumption. The NEF may determine one or more NF(s) associated with at least one of: a network slice; a QoS flow, and an application identifier. In an example, the first request may comprise location information. In an example, the NEF may send to the NF, an exposure request. In an example, the exposure request may comprise the getMOIAttributes operation command. The NEF may receive from the NF an exposure response message comprising at least one of: MOIAttributes; energy consumption information of the NF associated with the S-NSSAI; (e.g., at S-NSSAI granularity); energy consumption information of the NF associated with the PDU session; (e.g., at PDU session granularity); energy consumption information of the NF associated with the traffic of the UE, and/or the like. The NEF may send to a NRF, a message comprising ES state of the NF. The NEF may receive a configuration message to configure an energy saving status of a network element, the configuration message comprising a modifyMOIAttribute operation command. The configuration message may comprise a threshold value wherein the threshold value indicates a condition. In an example, the condition may indicate: when the energy consumption threshold exceeds a value, trigger activation of energy saving state; or when the energy consumption threshold goes below a threshold, deactivate the energy saving state. In an example, the activation of energy saving state may comprise sending a modifyMOIAttribute operation to change the ES state to energySaving state. The deactivation of energy saving state may comprise sending a modifyMOIAttribute operation to change the ES state to notEnergySaving state.

In an example embodiment, a network exposure function (NEF) may receive from an application function (AF), a first request for energy saving status of a network function (NF) associated with at least one of: a network slice; a QoS flow; and an application identifier. In an example, the NEF may send to an energy management entity (EME), a second request for the energy saving status of the NF. In an example, the NEF may receive from the EME, a response message comprising: an identifier of the NF; a managed object instance (MOI) attribute of the energy saving status. In an example, the MOI attribute may comprise at least one of: a notEnergySaving state, an energySaving state, and/or the like. In an example, the NEF may send to the AF and based on the response message, a notification message comprising: the MOI attribute; and the identifier of the NF.

**Claims**

**1.** A method comprising:

    receiving, by a network exposure function (NEF) from an application function (AF), a first request for energy saving status of a network function (NF) associated with at least one of:

        a network slice;
        a QoS flow; and
        an application identifier;

    sending, by the NEF to a network data analytics function (NWDAF), a second request for the energy saving status of the NF;

receiving, by the NEF from the NWDAF, a response message comprising:

an identifier of the NF; and
a managed object instance (MOI) attribute of the energy saving status, wherein the MOI attribute comprises one of:

a notEnergySaving state; and
an energySaving state; and

sending, by the NEF to the AF and based on the response message, a notification message comprising:

the MOI attribute; and
the identifier of the NF.

2. The method of claim 1, wherein the first request comprises a Nnef energy consumption exposure message.

3. The method of any of claims 1 to 2, wherein the request message comprises a getMOIAttribute operation command.

4. The method of claim 3, further comprising sending by the NEF to the NF, an exposure request comprising the getMOIAttributes operation command.

5. The method of any of claims 1 to 4, wherein the first request comprises a modify Attribute operation command.

6. The method of any of claims 1 to 5, further comprising sending by the NEF to the AF, a response to the first request.

7. The method of any of claims 1 to 6, wherein the second request comprises an analytics ID.

8. The method of claim 7, wherein the analytics ID is network energy consumption.

9. The method of any of claims 1 to 8, further comprising determining by the NEF one or more NF(s) associated with at least one of:

a network slice;
a QoS flow; and
an application identifier.

10. The method of any of claims 1 to 9, wherein the first request comprises location information.

11. The method of claim 10, further comprising receiving by the NEF from the NF a an exposure response message comprising at least one of:

MOIAttributes;
energy consumption information of the NF associated with the network slice;
energy consumption information of the NF associated with a PDU session on the network slice; and
energy consumption information of the NF associated with traffic of the wireless device.

12. The method of any of claims 1 to 11, further comprising sending by the NEF to a NRF, a message comprising ES state of the NF.

13. The method of any of claims 1 to 12, further comprising receiving by the NEF a configuration message to configure an energy saving status of a network element, the configuration message comprising a modifyMOIAttribute operation command.

14. A network exposure function (NEF) comprising one or more processors and memory storing instructions that, when executed by the one or more processors, cause the NEF to perform the method of any of claims 1 to 13.

15. A non-transitory computer-readable medium comprising instructions that, when executed by one or more processors of a network exposure function (NEF), cause the NEF to perform the method of any of claims 1 to 13.

**FIG. 1A**

**FIG. 1B**

**FIG. 2A**

**FIG. 2B**

**FIG. 2C**

**FIG. 2D**

FIG. 3

FIG. 4A

FIG. 4B

FIG. 5

EP 4 580 148 A1

FIG. 6

FIG. 7C

SDAP 771/772
PDCP 761/762
RLC 751/752
MAC 741/742
PHY 731/732

data packets — QoS flows — QoS flow handling — radio bearers — header comp. and/or ciphering — reordering and/or retransmission — RLC channels — segmentation and/or ARQ — logical channels — multiplexing — HARQ — transport channel — coding and/or resource mapping — physical channel

FIG. 7A

gNB 702: SDAP 772, PDCP 762, RLC 752, MAC 742, PHY 732
UE 701: SDAP 771, PDCP 761, RLC 751, MAC 741, PHY 731

FIG. 7B

AMF 712: NAS 792
gNB 702: RRC 782, PDCP 762, RLC 752, MAC 742, PHY 732
UE 701: NAS 791, RRC 781, PDCP 761, RLC 751, MAC 741, PHY 731

FIG. 8

connection release 931

RRC
IDLE
910

connection
release 921

RRC
INACTIVE
920

connection
inactivation 932

RRC
CONNECTED
930

connection
resume 923

connection establish 913

## FIG. 9A

registration
reject 944

RM DEREGISTERED
940

deregistration 954

registration update
accept 955

RM REGISTERED
950

registration accept 945

## FIG. 9B

AN signaling connection
release 976

[UE-side]
CM IDLE
960

[UE-side]
CM CONNECTED
970

AN signaling connection
establishment 967

## FIG. 9C

N2 context
release 998

[AMF-side]
CM IDLE
980

[AMF-side]
CM CONNECTED
990

N2 context
establishment 989

## FIG. 9D

**FIG. 10**

EP 4 580 148 A1

**FIG. 11**

FIG. 12

Wireless Device 1310

- Processing System 1311
- Memory 1312
  - Instructions 1313
- Tx Processing System 1314
- Rx Processing System 1315
- Antenna(s) 1316
- Other Element(s) 1319

Air Interface 1370

Base Station 1320

- Processing System 1321
- Memory 1322
  - Instructions 1323
- Tx Processing System 1324
- Rx Processing System 1325
- Antenna(s) 1326
- Interface System 1327
- Other Element(s) 1329

Interface 1380

Physical Deployment 1330 of Core Network Function(s)

- Processing System 1331
- Memory 1332
  - Instructions 1333
- Interface System 1337
- Other Element(s) 1339

FIG. 13

Deployment 1410

NF 1411

Deployment 1420

NF 1421

Interface 1490

Deployment 1430

NF 1431

**FIG. 14A**

Deployment 1410

NF 1411

NF 1411A

Deployment 1420

NF 1421

NF 1422

Interface 1490

Deployment 1430

NF 1431

**FIG. 14B**

Deployment 1410

NF 1411

NF 1411A

Deployment 1420

NF 1421

NF 1422

Interface 1490

Deployment 1430

NF 1431

Deployment 1440

NF 1422

**FIG. 14C**

Deployment 1450

NF 1411

NF 1411A

NF 1421

NF 1422

Interface 1490

Deployment 1430

NF 1431

Deployment 1440

NF 1422

**FIG. 14D**

FIG. 15

# Distributed energy saving activation

@startuml

title Distributed energy saving activation Diagram

participant "MnS producer of Distributed ES" as MnSProdDSON
participant "Provisioning MnS producer" as MnSProdProv
participant "Distributed Energy Saving function" as DESFunction

MnSProdProv <- MnSProdDSON: 1. <i>modifyMOIAttributes</i> to configure NE overlaid relations
DESFunction <- MnSProdProv: 2. Configure NE overlaid relations
MnSProdProv <- MnSProdDSON: 3. <i>modifyMOIAttributes</i> to configure ES policy (incl. thresholds)
DESFunction <- MnSProdProv: 4. Configure ES policy (incl. thresholds)
MnSProdProv <- MnSProdDSON: 5. <i>modifyMOIAttributes</i> to set ESswitch to 'ON'
DESFunction <- MnSProdProv: 6. Switch on energy saving functionality

opt if decision is taken that capacity booster NE should enter energySaving state

DESFunction -> MnSProdProv: 7. Inform that energySaving state has been changed to 'ON'
MnSProdProv -> MnSProdDSON: 8. <i>notifyMOIAttributeValueChanges</i> (energySaving, old value = 'off', new value = 'on')
end

@enduml

<div align="center">FIG. 16</div>

**Distributed energy saving deactivation**

```
@startuml

title Distributed energy saving deactivation Diagram

participant "MnS producer of Distributed ES" as MnSProdDSON
participant "Provisioning MnS producer" as MnSProdProv
participant "Distributed Energy Saving function" as DESFunction

note over DESFunction: Monitors the traffic load of the NE
note over DESFunction: Detects that additioal capacity is needed

opt if decision is taken to re-activate the capacity booster NE

DESFunction -> MnSProdProv: 8. Inform that energySaving state has been changed to
'OFF'
MnSProdProv -> MnSProdDSON: 9. <i>notifyMOIAttributeValueChanges</i> (energySaving,
old value = 'on', new value = 'off')
end

@enduml
```

FIG. 17

FIG. 18

FIG. 19

FIG. 20

**FIG. 21**

**FIG. 22**

EP 4 580 148 A1

| UE | RAN | AMF | SMF | UPF | EE NF/EMF | NEF |
|----|-----|-----|-----|-----|-----------|-----|

Neenf message ( EnergySaving state update notification, NF: UPF)

Nsmf message configure/subscribe(EnergySaving Sate)

PFCP message(configure reporting: EnergySaving Sate: ON/OFF)

Nupf event exposure notify(EnergySaving Sate)

Neenf notify ( EnergySaving state ON, NF: UPF)

NAS message ( Session establishment)

PFCP association message(EnergySaving Sate: ON/OFF)

Nupf event exposure notify(not EnergySaving Sate)

Neenf notify ( EnergySaving state OFF, NF: UPF)

UPF selection based on EnergySaving state Based on NRF interaction; PFCP message; EE NF interaction

FIG. 23

FIG. 24

EP 4 580 148 A1

FIG. 25

FIG. 26

FIG. 27

FIG. 28

EP 4 580 148 A1

**EUROPEAN SEARCH REPORT**

**Application Number**

EP 24 22 3264

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GENADI VELEV ET AL: "KI#1, Exposure of Energy Consumption related information", 3GPP DRAFT; S2-2313006; TYPE PCR; FS_ENERGYSYS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. Chicago, US; 20231113 - 20231117 3 November 2023 (2023-11-03), XP052539091, Retrieved from the Internet: URL:https://www.3gpp.org/ftp/tsg_sa/WG2_Ar ch/TSGS2_160_Chicago_2023-11/Docs/S2-23130 06.zip S2-2313006_FS-Energy_KI#1_Solution.docx [retrieved on 2023-11-03] * page 1 - page 4; figures 6.X.3-1 * ----- | 1-15 | INV. H04L43/20 H04L43/08 H04L41/5009 |
| X | SAAD AHMAD ET AL: "New Solution KI#1, Exposing energy usage information to 3rd party server", 3GPP DRAFT; S2-2313195; TYPE PCR; FS_ENERGYSYS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. Chicago, US; 20231113 - 20231117 3 November 2023 (2023-11-03), XP052539276, Retrieved from the Internet: URL:https://www.3gpp.org/ftp/tsg_sa/WG2_Ar ch/TSGS2_160_Chicago_2023-11/Docs/S2-23131 95.zip S2-2313195_Solution to KI 1.doc [retrieved on 2023-11-03] * page 2 - page 4 * ----- -/-- | 1,6,14, 15 | **TECHNICAL FIELDS SEARCHED (IPC)** H04L |

The present search report has been drawn up for all claims

| Place of search | Date of completion of the search | Examiner |
|---|---|---|
| Munich | 11 April 2025 | Camba, Sonia |

EPO FORM 1503 03.82 (P04C01)

page 1 of 2

Europäisches
Patentamt

European
Patent Office

Office européen
des brevets

**EUROPEAN SEARCH REPORT**

**Application Number**

EP 24 22 3264

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | "3rd Generation Partnership Project; Technical Specification Group Services and System Aspects; Management and orchestration; Study on new aspects of Energy Efficiency (EE) for 5G (Release 17)", 3GPP STANDARD; TECHNICAL REPORT; 3GPP TR 28.813, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , no. V17.0.0 22 December 2021 (2021-12-22), pages 1-50, XP052083199, Retrieved from the Internet: URL:https://ftp.3gpp.org/Specs/archive/28_series/28.813/28813-h00.zip 28813-h00.doc [retrieved on 2021-12-22] * page 41 * | 1-15 | |

----- 

TECHNICAL FIELDS
SEARCHED      (IPC)

The present search report has been drawn up for all claims

| Place of search | Date of completion of the search | Examiner |
|---|---|---|
| Munich | 11 April 2025 | Camba, Sonia |

EPO FORM 1503 03.82 (P04C01)

## REFERENCES CITED IN THE DESCRIPTION

**Patent documents cited in the description**

- US 63614724